# EUROPEAN PATENT APPLICATION

(11) **EP 2 744 196 A1**
(43) Date of publication of application: **18.06.2014**
(21) Application number: 12821671.0
(22) Date of filing: 08.08.2012
(51) Int. Cl.: H04N 7/173

(54) **HYBRID BROADCAST AND COMMUNICATION SYSTEM, DATA GENERATION DEVICE, AND RECEIVER**

(30) Priority: 11.08.2011 US 201161522391 P
(71) Applicant: Panasonic Corporation, Kadoma-shi, Osaka 571-8501 (JP)
(72) Inventor: SASAKI, Taiji, Osaka 540-6207 (JP); YAHATA, Hiroshi, Osaka 540-6207 (JP); OGAWA, Tomoki, Osaka 540-6207 (JP); UESAKA, Yasushi, Osaka 540-6207 (JP); MOCHINAGA, Kazuhiro, Osaka 540-6207 (JP)
(74) Representative: Grünecker, Kinkeldey, Stockmair & Schwanhäusser
(86) International application number: PCT/JP2012/005055
(87) International publication number: WO 2013/021643

(57) **Abstract**

A data generating apparatus 100 includes: an acquiring unit 101 configured to acquire a frame image; a setting unit 109 configured to set prohibition information showing a region on the frame image in which superimposition of an additional image is prohibited, the prohibition information being used when a playback apparatus superimposes the additional image on the frame image for playback; and a multiplexing unit 104 configured to multiplex the frame image and the prohibition information to generate data. A receiving apparatus 400 includes: a receiving unit 401 configured to receive data having been generated by multiplexing the frame image and the prohibition information; a separating unit 402 configured to separate the frame image and the prohibition information from the data; an acquiring unit 409 configured to acquire the additional image; and a superimposing unit 407 configured to superimpose the additional image on the frame image based on the prohibition information.

## Description

### [Technical Field]

The present invention relates to technology for combining broadcasting and communications.

### [Background Art]

In recent years, the digital switchover in broadcasting has enabled us to enjoy viewing high-definition video images on home television. Meanwhile, with the development of the broadband environment, many users can enjoy using various internet-based services including an audio/video streaming service and an SNS (Social Networking Service).

Under such circumstances, introduction of a new service to combine broadcast contents and communication contents is being considered, and development of technology for providing the service is being promoted.

As examples of the service, Non-Patent Literature I discloses a program customizing service, a social television service, and a program recommending service. The program customizing service is a service to provide additional information related to a broadcast program over a communication network, such as the internet, by displaying the additional information concurrently with the broadcast program. This service enables viewing meeting the needs of individual viewers. The social television service is a service to combine an SNS, which has become widespread on the internet, with broadcasting. In the social television service, viewers' opinions and comments input via the SNS are displayed on television screens concurrently with a program. This service allows viewers who do not actively participate in the SNS to share the opinions and comments with other viewers. The program recommending service is a service to present viewers with a recommended VOD (Video On Demand) program selected from a library of many VOD programs provided over the internet.

### [Citation List]

### [Non-Patent Literature]

[Non-Patent Literature 1]
Kinji Matsumura and one other, "Hybridcast™ No Gaiyou To Gijyutsu (Overview and Technology of Hybridcast™)". NHK STRL R&D, NHK Science & Technology Research Laboratories, 2010, No. 124, p. 10-17

### [Summary of Invention]

### [Technical Problem]

One of the problems in providing the service to combine broadcasting and communications as described above is that superimposition of communication contents is performed regardless of intentions of a broadcasting station. For example, if communication contents are superimposed on an important message, such as "emergency information", that the broadcasting station hopes to convey to users, the broadcasting station cannot correctly convey the important message to users.

Other examples of the important message that the broadcasting station hopes to convey to users are "earthquake early warnings" and "newsflash". A "commercial" is a necessary message in terms of businesses of the broadcasting station. If such a message cannot correctly be conveyed to users, business operations of the broadcasting station are obstructed.

One aspect of the present invention aims to solve the above-mentioned problem.

### [Solution to Problem]

In order to achieve the above-mentioned aim, one aspect of the present invention is a data generating apparatus for generating data, comprising: an acquiring unit configured to acquire a frame image; a setting unit configured to set prohibition information showing a region on the frame image in which superimposition of an additional image is prohibited, the prohibition information being used when a playback apparatus superimposes the additional image on the frame image for playback; and a multiplexing unit configured to multiplex the frame image and the prohibition information to generate data. Another aspect of the present invention is a receiving apparatus for receiving data, comprising: a receiving unit configured to receive data having been generated by multiplexing a frame image and prohibition information showing a region on the frame image in which superimposition of an additional image is prohibited when, for playback by a playback apparatus, the additional image is superimposed on the frame image; a separating unit configured to separate the frame image and the prohibition information from the data; an acquiring unit configured to acquire the additional image; and a superimposing unit configured to superimpose the additional image on the frame image based on the prohibition information.

### [Advantageous Effects of Invention]

According to the aspect of the present invention, superimposition of communication contents performed despite intentions of a broadcasting station is prevented, and a service to combine broadcasting and communications is smoothly provided.

### [Brief Description of Drawings]

FIG. 1 is a block diagram illustrating the overall structure of a broadcasting-communications collaboration system 10 according to Embodiment 1.
FIG. 2 is a block diagram illustrating the overall structure of a broadcasting-communications collaboration system 10a according to Embodiment 2.
FIG. 3 illustrates the data structure of a digital stream in a transport stream format.
FIG. 4 illustrates the data structure of a video stream.
FIG. 5 illustrates the data structures of access units included in the video stream.
FIG. 6 illustrates cropping region information and scaling information.
FIGs. 7A and 7B each show a specific method for specifying the cropping region information and the scaling information.
FIG. 8A illustrates the data structure of a video frame sequence 570, and FIG. 8B illustrates the data structure of a PES packet sequence 580.
FIG. 9 illustrates the data structure of a TS packet included in the transport stream.
FIG. 10 shows the data structure of a PMT.
FIG 11 illustrates reference relationships within the video stream.
FIG. 12 illustrates a video plane 641, and a video plane 642 obtained by superimposing a message image 643 and a score image 644 on the video plane 641.
FIG. 13 illustrates a superimposition plane 654 obtained by superimposing a comment image 655 showing user comments.
FIG. 14 illustrates a process to generate a composite plane 665: the superimposition plane 654 is subjected to mask processing with use of a superimposition region setting bitmap 661 to generate a masked superimposition plane 663, and then the video plane 642 and the masked superimposition plane 663 are combined together to generate the composite plane 665.
FIGs. 15A and 15B illustrate correspondence relationships between scenes 671, 673, and 676 of a video and respective superimposition region setting bitmaps 684, 685, and 687.
FIG. 16 shows a superimposition region setting bitmap 721 as a variation.
FIG. 17 shows a superimposition region setting bitmap 731 as another variation.
FIGs. 18A and 18B illustrate correspondence relationships between the scenes 671, 673, and 676 of the video and respective superimposition region setting data pieces 684a, 685a, and 687a.
FIG. 19 shows an example of a storage destination of the superimposition region setting data.
FIG. 20 is a flow chart showing an operation of a broadcasting system 100a.
FIG. 21 is a flow chart showing an operation to generate the superimposition region setting data.
FIG. 22 is a flow chart showing an operation of a playback apparatus 400a.
FIG. 23 is a flow chart showing an operation to perform mask processing for each plane.
FIG. 24 shows a process to combine a video plane 701 and a superimposition plane 702 in the absence of the superimposition region setting data.
FIG. 25 illustrates correspondence relationships between the scenes 671, 673, and 676 of the video and respective superimposition region setting data pieces 684b, 685b, and 687b.
FIG. 26 shows a superimposition region setting bitmap 684c as a variation.
FIG. 27 shows a superimposition region setting bitmap 684d as another variation.
FIG. 28 is a block diagram illustrating the overall structure of a broadcasting-communications collaboration system 10a1 according to a modification.
FIG. 29 illustrates a process to generate a composite plane 665a in the broadcasting-communications collaboration system 10a1: a superimposition plane 654a is subjected to mask processing with use of the superimposition region setting bitmap 661 to generate a masked superimposition plane 663a, and then the video plane 642 and the masked superimposition plane 663a are combined together to generate the composite plane 665a.
FIG. 30 illustrates correspondence relationships between the scenes 671, 673, and 676 of the video and respective superimposition region setting bitmaps 684e, 685e, and 687e.
FIG. 31 illustrates a process to generate a composite plane 665e: a superimposition plane 654e is subjected to mask processing with use of a superimposition region setting bitmap 685e to generate a masked superimposition plane 663e, and then the video plane 642 and the masked superimposition plane 663e are combined together to generate the composite plane 665e.
FIG. 32 illustrates correspondence relationships between the scenes 671, 673, and 676 of the video and respective superimposition region setting bitmaps 684f, 685f, and 687f.
FIG. 33 is a block diagram illustrating the overall structure of a broadcasting-communications collaboration system 10a2 according to another modification.
FIG. 34 is a block diagram illustrating the overall structure of a broadcasting-communications collaboration system 10a3 according to yet another modification.
FIG. 35 is a block diagram illustrating the overall structure of a broadcasting-communications collaboration system 10b according to Embodiment 3.
FIGs. 36A and 36B illustrate correspondence relationships between the scenes 671, 673, and 676 of the video and respective audio combining setting data pieces 684i, 685i, and 687i.
FIG. 37 is a flow chart showing an operation to generate the audio combining setting data.
FIG. 38 is a flow chart showing an operation of a playback apparatus 400b.
FIG. 39 is a flow chart showing an operation to combine audios.
FIG 40 is a block diagram illustrating the overall structure of a broadcasting-communications collaboration system 10c according to Embodiment 4.
FIG. 41 is a block diagram illustrating the overall structure of a broadcasting-communications collaboration system 10d according to Embodiment 5.
FIG. 42 illustrates a service provided by the broadcasting-communications collaboration system 10d: in video planes 901 and 911, label images are displayed close to corresponding player images.
FIG. 43 shows a positional relationship between a high-angle camera 921 and a three-dimensional real space.
FIG. 44 illustrates an example of the data structure of a player position table 941.
FIG. 45 illustrates an example of the data structure of superimposition data 961.
FIG. 46 shows a process to generate a composite plane 988 by combining a video plane 981 and a superimposition plane 985.
FIG. 47 is a flow chart showing an operation to generate the superimposition data.
FIG. 48 is a flow chart showing a playback operation.
FIG. 49 shows an example of an arrangement of label images.
FIG. 50 illustrates an example of the data structure of the superimposition data. Each label position information piece includes an image ID.

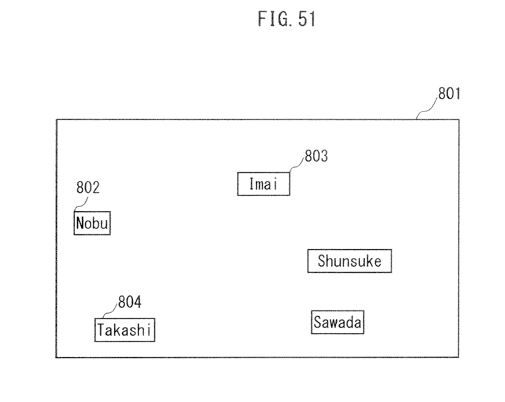

FIG. 51 illustrates an example of a superimposition plane 801.
FIG. 52 illustrates a composite plane 801a after arrangement of label images.
FIG. 53 illustrates another composite plane 801b after arrangement of label images.
FIG. 54 illustrates reference relationships within a base-view video stream and an extended-view video stream.

### [Description of Embodiments]

### 1. Embodiment 1

The following describes a broadcasting-communications collaboration system 10 according to Embodiment 1 of the present invention with reference to the drawings.

### (1) Broadcasting-communications Collaboration System 10

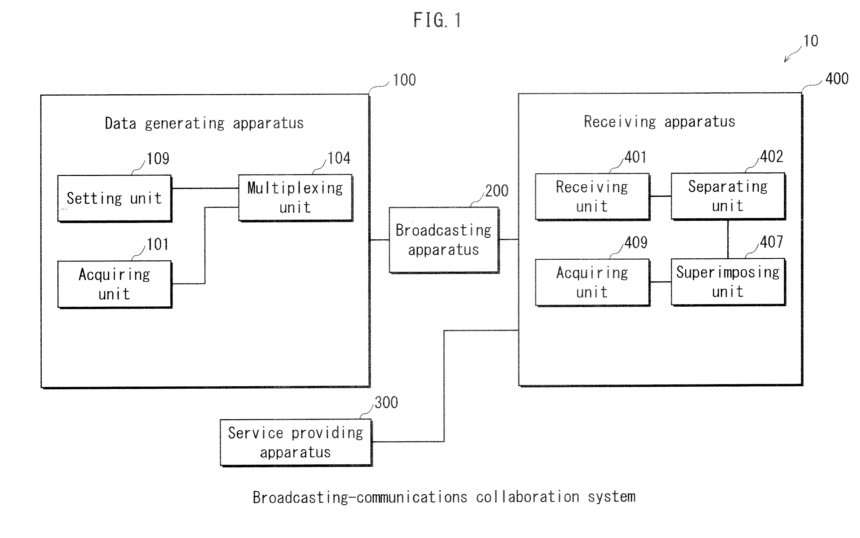

As illustrated in FIG. 1, the broadcasting-communications collaboration system 10 includes a data generating apparatus 100, a broadcasting apparatus 200, a service providing apparatus 300, and a receiving apparatus 400.

The data generating apparatus 100 includes: an acquiring unit 101 configured to acquire a frame image; a setting unit 109 configured to set prohibition information showing a region on the frame image in which superimposition of an additional image is prohibited, the prohibition information being used when a playback apparatus superimposes the additional image on the frame image for playback; and a multiplexing unit 104 configured to multiplex the frame image and the prohibition information to generate data.

The broadcasting apparatus 200 transmits the data through a broadcast channel.

The service providing apparatus 300 transmits the additional image through a communication channel.

The receiving apparatus 400 includes: a receiving unit 401 configured to receive data having been generated by multiplexing a frame image and prohibition information showing a region on the frame image in which superimposition of an additional image is prohibited when, for playback by a playback apparatus, the additional image is superimposed on the frame image; a separating unit 402 configured to separate the frame image and the prohibition information from the data; an acquiring unit 409 configured to acquire the additional image; and a superimposing unit 407 configured to superimpose the additional image on the frame image based on the prohibition information.

(2) The data generating apparatus 100 may transmit the frame image through a channel, and the additional image may be transmitted through a channel different from the channel through which the frame image is transmitted.

With this structure, since different channels are used, it is possible to take advantage of characteristics of the respective channels.

(3) The channel through which the frame image is transmitted may be a broadcast channel, and the channel through which the additional image is transmitted may be a communication channel.

With this structure, since different channels are used, it is possible to take advantage of characteristics of the respective channels.

(4) The setting unit 109 may further set permission information showing a region on the frame image in which the superimposition of the additional image is permitted, the permission information being used when the playback apparatus superimposes the additional image on the frame image for playback, and the multiplexing unit 104 may further multiplex the permission information.

With this structure, by showing the region in which the superimposition is permitted for playback of frame images, the data is generated without obstructing the frame images due to superimposition of the additional image in a region other than the permitted region.

(5) The setting unit 109 may further set recommendation information showing a region on the frame image in which the superimposition of the additional image is recommended, the recommendation information being used when the playback apparatus superimposes the additional image on the frame image for playback, and the multiplexing unit 104 may further multiplex the recommendation information.

With this structure, by showing the region in which the superimposition is recommended for playback of frame images, the data is generated without obstructing the frame images due to superimposition of the additional image in a region other than the recommended region.

(6) The setting unit 109 may further set warning information showing a region on the frame image in which the superimposition of the additional image is discouraged, the warning information being used when the playback apparatus superimposes the additional image on the frame image for playback, and the multiplexing unit 104 may further multiplex the warning information.

With this structure, by showing the region in which the superimposition is discouraged for playback of frame images, the data is generated by superimposing the additional image in a region other than the discouraged region without obstructing the frame images.

(7) Each of the prohibition information and the permission information may be set for each pixel within the frame image.

With this structure, the data is generated without obstructing the frame images for each pixel for playback of frame images.

(8) Each of the prohibition information and the permission information may be set for each region obtained by dividing the frame image into a plurality of regions.

With this structure, the data is generated without obstructing the frame images for each region for playback of frame images.

(9) The frame image and the additional image may be received through different channels.

With this structure, since different channels are used, it is possible to take advantage of characteristics of the respective channels.

(10) The frame image may be received through a broadcast channel, and the additional image may be received through a communication channel.

With this structure, since different channels are used, it is possible to take advantage of characteristics of the respective channels.

(11) The data may have been generated by further multiplexing permission information showing a region on the frame image in which the superimposition of the additional image is permitted when, for playback by the playback apparatus, the additional image is superimposed on the frame image, the separating unit 402 may further separate the permission information from the data, and the superimposing unit 407 may superimpose the additional image on the frame image further based on the permission information.

With this structure, the additional image is superimposed based on the permission information without obstructing the frame images due to superimposition of the additional image in a region other than the permitted region.

(12) The data may have been generated by further multiplexing recommendation information showing a region on the frame image in which the superimposition of the additional image is recommended when, for playback by the playback apparatus, the additional image is superimposed on the frame image, the separating unit 402 may further separate the recommendation information from the data, and the superimposing unit 407 may superimpose the additional image on the frame image further based on the recommendation information.

With this structure, the additional image is superimposed based on the recommendation information without obstructing the frame images due to superimposition of the additional image in a region other than the recommended region.

(13) The data may have been generated by further multiplexing warning information showing a region on the frame image in which the superimposition of the additional image is discouraged when, for playback by the playback apparatus, the additional image is superimposed on the frame image, and the separating unit 402 may further separate the warning information from the data, and the superimposing unit 407 may superimpose the additional image on the frame image further based on the warning information.

With this structure, the additional image is superimposed in a region other than the discouraged region based on the warning information without obstructing the frame images.

(14) Each of the prohibition information and the permission information may be set for each pixel within the frame image, and the superimposing unit 407 may superimpose the additional image for each pixel within the frame image.

With this structure, the frame images are not obstructed for each pixel.

(15) Each of the prohibition information and the permission information may be set for each region obtained by dividing the frame image into a plurality of regions, and the superimposing unit 407 may superimpose the additional image for each of the plurality of regions.

With this structure, the frame images are not obstructed for each region.

(16) One aspect of the present invention is a broadcasting-communications collaboration system including a data generating apparatus, a broadcasting apparatus, a service providing apparatus, and a receiving apparatus.

The data generating apparatus includes: an acquiring unit configured to acquire a primary audio; a setting unit configured to set prohibition information showing a section of the primary audio in which combining of an additional audio is prohibited, the prohibition information being used when a playback apparatus combines the additional audio with the primary audio for playback; and a multiplexing unit configured to multiplex the primary audio and the prohibition information to generate data.

The broadcasting apparatus transmits the data through a broadcast channel.

The service providing apparatus transmits the additional audio through a communication channel.

The receiving apparatus includes: a receiving unit configured to receive data having been generated by multiplexing a primary audio and prohibition information showing a section of the primary audio in which combining of an additional audio is prohibited when, for playback by a playback apparatus, the additional audio is combined with the primary audio; a separating unit configured to separate the primary audio and the prohibition information from the data; an acquiring unit configured to acquire the additional audio; and a combining unit configured to combine the additional audio with the primary audio based on the prohibition information.

With this structure, by showing the section in which the combining is prohibited for playback of primary audios, the data is generated by combining the additional audio without obstructing the primary audios. By showing the section in which the combining is prohibited for playback of primary audios, the additional audio is combined without obstructing the primary audios.

(17) The data generating apparatus may transmit the primary audio through a channel, and the additional audio may be transmitted through a channel different from the channel through which the primary audio is transmitted.

With this structure, since different channels are used, it is possible to take advantage of characteristics of the respective channels.

(18) The channel through which the primary audio is transmitted may be a broadcast channel, and the channel through which the additional audio is transmitted may be a communication channel.

With this structure, since different channels are used, it is possible to take advantage of characteristics of the respective channels.

(19) The setting unit may further set permission information showing a section of the primary audio in which the combining of the additional audio is permitted, the permission information being used when the playback apparatus combines the additional audio with the primary audio for playback, and the multiplexing unit may further multiplex the permission information.

With this structure, by showing the section in which the combining is permitted for playback of primary audios, the data is generated without obstructing the primary audios due to combining of the additional audio in a section other than the permitted section.

(20) The setting unit may further set recommendation information showing a section of the primary audio in which the combining of the additional audio is recommended, the recommendation information being used when the playback apparatus combines the additional audio with the primary audio for playback, and the multiplexing unit may further multiplex the recommendation information.

With this structure, by showing the section in which the combining is recommended for playback of primary audios, the data is generated without obstructing the primary audios due to combining of the additional audio in a section other than the recommended section.

(21) The setting unit may further set warning information showing a section of the primary audio in which the combining of the additional audio is discouraged, the warning information being used when the playback apparatus combines the additional audio with the primary audio for playback, and the multiplexing unit may further multiplex the warning information.

With this structure, by showing the section in which the combining is discouraged for playback of primary audios, the data is generated by combining the additional audio in a section other than the discouraged section without obstructing the primary audios.

(22) The primary audio and the additional audio may be received through different channels.

With this structure, since different channels are used, it is possible to take advantage of characteristics of the respective channels.

(23) The primary audio may be received through a broadcast channel, and the additional audio may be received through a communication channel.

With this structure, since different channels are used, it is possible to take advantage of characteristics of the respective channels.

(24) The data may have been generated by further multiplexing permission information showing a section of the primary audio in which the combining of the additional audio is permitted when, for playback by the playback apparatus, the additional audio is combined with the primary audio, the separating unit may further separate the permission information from the data, and the combining unit may combine the additional audio with the primary audio further based on the permission information.

With this structure, by showing the section in which the combining is permitted for playback of primary audios, the additional audio is combined without obstructing the primary audios due to combining of the additional audio in a section other than the permitted section.

(25) The data may have been generated by further multiplexing recommendation information showing a section of the primary audio in which the combining of the additional audio is recommended when, for playback by the playback apparatus, the additional audio is combined with the primary audio, the separating unit may further separate the recommendation information from the data, and the combining unit may combine the additional audio with the primary audio further based on the recommendation information.

With this structure, by showing the section in which the combining is recommended for playback of primary audios, the additional audio is combined without obstructing the primary audios due to combining of the additional audio in a section other than the recommended section.

(26) The data may have been generated by further multiplexing warning information showing a section of the primary audio in which the combining of the additional audio is discouraged when, for playback by the playback apparatus, the additional audio is combined with the primary audio, the separating unit may further separate the warning information from the data, and the combining unit may combine the additional audio with the primary audio further based on the warning information.

With this structure, by showing the section in which the combining is discouraged for playback of primary audios, the additional audio is combined in a section other than the discouraged section without obstructing the primary audios.

### 2. Embodiment 2

The following describes a broadcasting-communications collaboration system 10a according to Embodiment 2 of the present invention with reference to the drawings.

### 2.1 Broadcasting-communications Collaboration System 10a

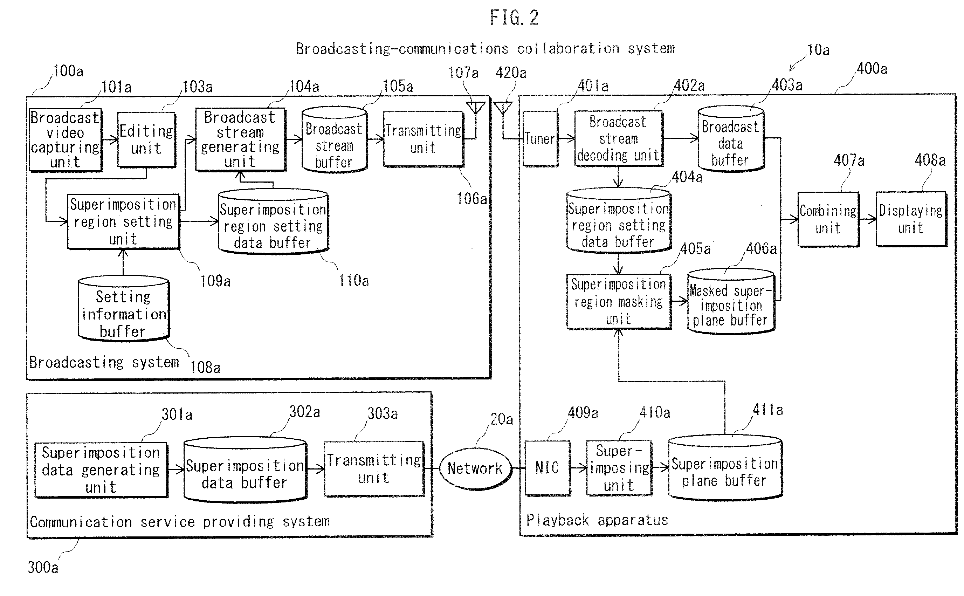

The broadcasting-communications collaboration system 10a provides a service to superimpose additional information, such as user comments, on broadcast videos. As illustrated in FIG. 2, the broadcasting-communications collaboration system 10a includes a broadcasting system 100a, a communication service providing system 300a, and a playback apparatus 400a.

The communication service providing system 300a and the playback apparatus 400a are connected to each other via a network 20a. An example of the network 20a is the internet.

The broadcasting system 100a is a system located in a broadcasting station, and provides videos and audios captured by a camera recorder by broadcast.

The communication service providing system 300a is a system located in a communication service provider, and provides additional information, such as user comments, acquired from an SNS and the like via the network 20a.

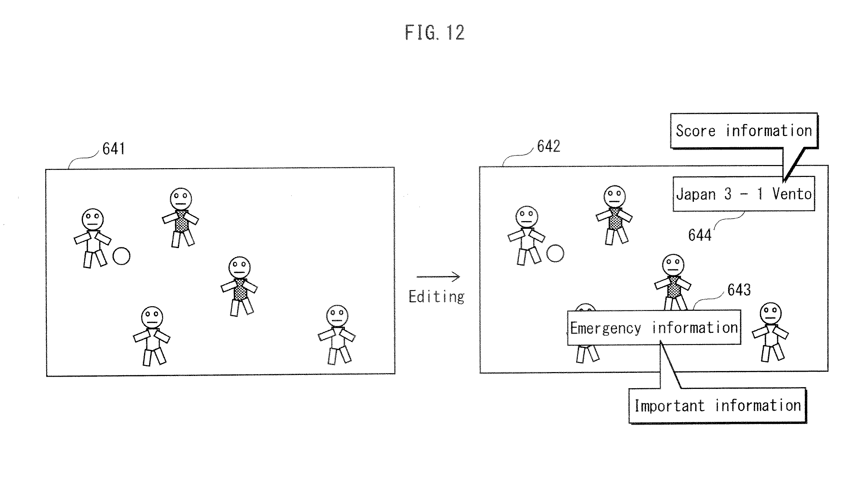

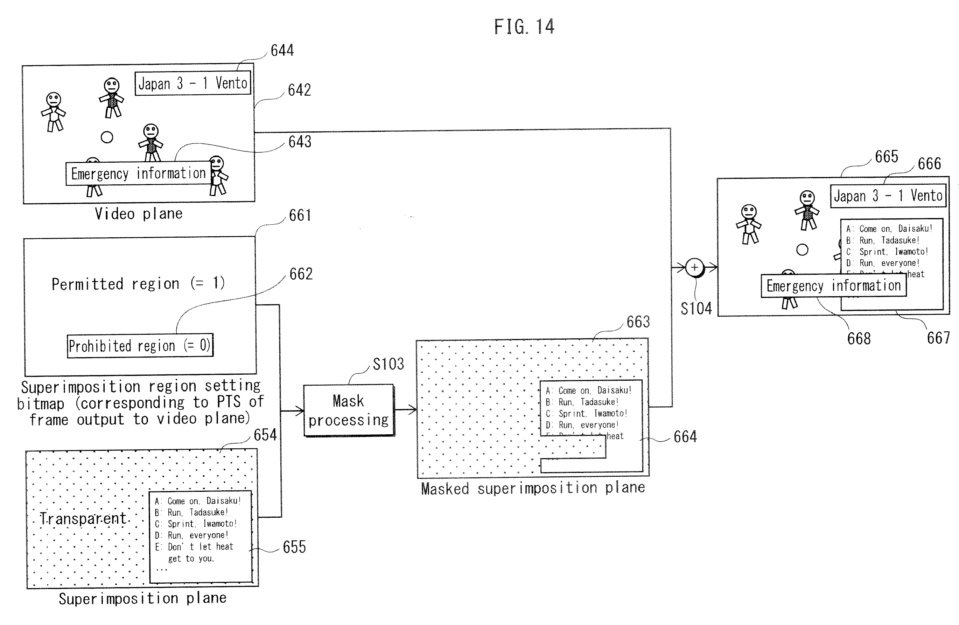

The playback apparatus 400a receives a broadcast, and plays back and displays a broadcast video by decoding a stream. The playback apparatus 400a also superimposes, on the broadcast video, additional information transmitted from the communication service providing system 300a via the network 20a, and displays the broadcast video on which the additional information has been superimposed. The playback apparatus 400a is, for example, a digital broadcast receiving apparatus. The playback apparatus 400a is supplied with a remote control as a user interface. A user of the playback apparatus 400a selects a broadcast channel by using the remote control to enjoy viewing a displayed video plane 641 as illustrated in FIG. 12. The user also enjoys viewing a broadcast video on which additional information has been superimposed as illustrated in FIG. 14. In a composite plane 665, a comment image 667 showing comments acquired from the communication service providing system 300a is superimposed, as additional information, on a broadcast video showing a soccer game.

### 2.2 Data Structure of Stream

The following describes the data structure of a stream typically transmitted by digital television broadcast and the like.

Digital streams in the MPEG-2 transport stream format are used to transmit digital television broadcasts or the like An MPEG-2 transport stream is a standard for transmission by multiplexing a variety of streams, such as a video and an audio. The MPEG-2 transport stream is standardized in ISO/IEC 13818-1 as well as ITU-T Recommendation H222.0.

### (Structure of Digital Stream in MPEG-2 Transport Stream Format)

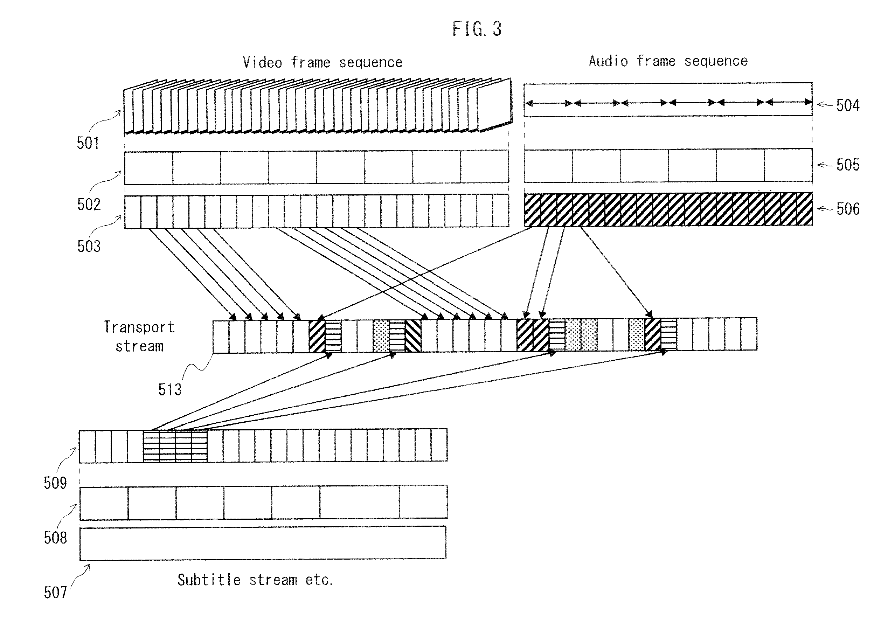

FIG. 3 illustrates the structure of the digital stream in the MPEG-2 transport stream format. As illustrated in FIG. 3, a transport stream 513 is obtained by multiplexing a video stream 501, an audio stream 504, a subtitle stream 507, and the like.

The video stream 501 stores therein a primary video of a program. The audio stream 504 stores therein a primary audio portion and a secondary audio of the program. The subtitle stream 507 stores therein subtitle information of the program.

The video stream 501 is encoded and recorded according to a standard such as MPEG-2 and MPEG-4 AVC. The audio stream 504 is compression encoded and recorded according to a standard such as Dolby AC-3, MPEG-2 AAC, MPEG-4 AAC, and HE-AAC.

### (Video Compression Encoding)

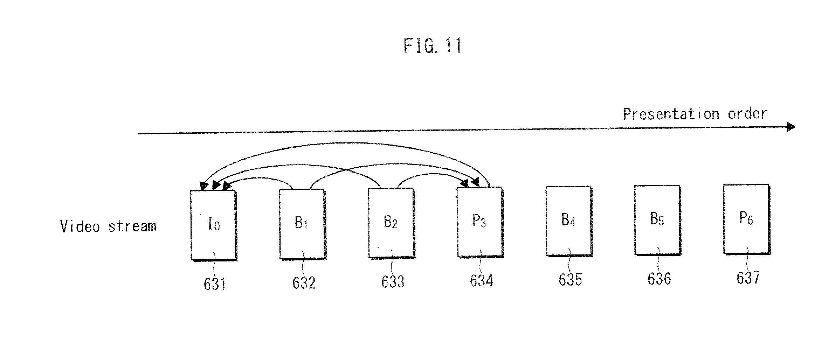

The following describes the structure of a video stream. In video compression encoding according to a standard such as MPEG-2, MPEG-4 And SMPTE VC-1, the amount of data is compressed by utilizing spatial or temporal redundancy of a video. Inter-picture predictive encoding is used as encoding utilizing temporal redundancy. In the inter-picture predictive encoding, a picture earlier or later in presentation time than a picture to be encoded serves as a reference picture. A motion amount from the reference picture is then detected. Spatial redundancy is removed from a difference value between a picture having been subjected to motion compensation and the picture to be encoded, thereby compressing the amount of data. FIG. 11 illustrates a typical reference structure of pictures within the video stream. Note that a picture at the tail of an arrow refers to a picture at the head of the arrow to perform compression. As illustrated in FIG 11, the video stream includes pictures 631, 632, ..., and 637. Encoding is performed on a picture-by-picture basis, and each picture encompasses both of a frame and a field.

A picture on which intra-picture predictive encoding is performed by only using a picture to be encoded without using a reference picture is referred to as an I-picture. A picture on which the inter-picture predictive encoding is performed by referring to another picture that has already been processed is referred to as a P-picture. A picture on which the inter-picture predictive encoding is performed by simultaneously referring to two other pictures that have already been processed is referred to as a B-picture. A B-picture that is referred to by another picture is referred to as a Br-picture. A frame of a frame structure, or a field of a field structure, is referred to as a video access unit.

### (Structure of Video Stream)

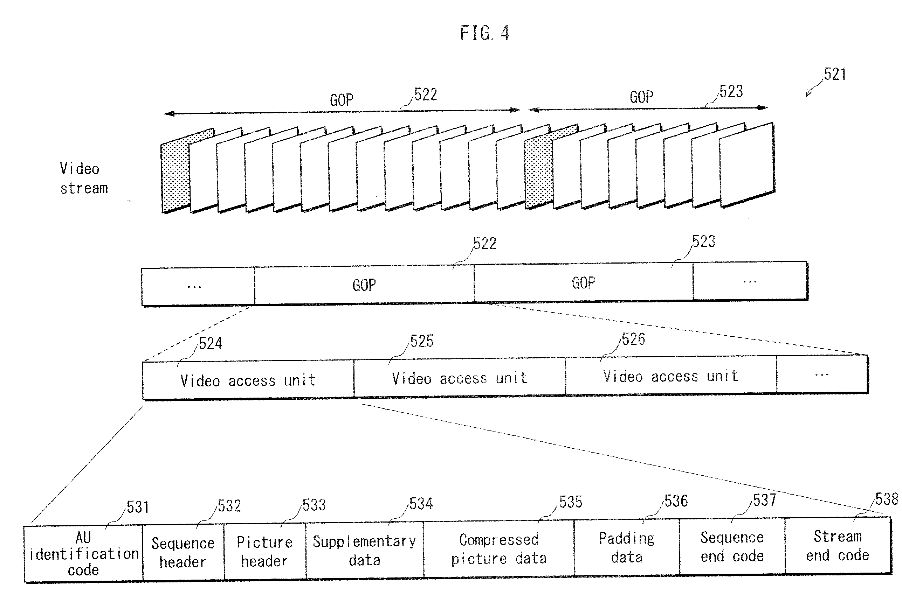

The video stream has a hierarchical structure as illustrated in FIG. 4. A video stream 521 includes a plurality of GOPs (Group of Pictures) 522, 523, .... By using a GOP as a basic unit of encoding, editing of and random access to a video are made possible.

The GOP 522 includes one or more video access units 524, 525, 526, ... . The same applies to the other GOPs. The video access unit is a unit to store encoded data of a picture. In the case of the frame structure, data of one frame is stored in each video access unit. In the case of the field structure, data of one field is stored in each video access unit.

The video access unit 524 includes an AU identification code 531, a sequence header 532, a picture header 533, supplementary data 534, compressed picture data 535, padding data 536, a sequence end code 537, and a stream end code 538. The same applies to the other video access units. In the case of MPEG-4 AVC, data pieces are stored in NAL units.

The AU identification code 531 is a start code indicating the top of an access unit. The sequence header 532 its a header storing therein information common to a plurality of video access units constituting a playback sequence. Stored in the sequence header 532 is information on resolution, a frame rate, an aspect ratio, a bit rate, and the like. The picture header 533 is a header storing therein information on an encoding method for the whole picture. The supplementary data 534 is additional information not necessary for decoding compressed data. For example, the supplementary data 534 stores therein text information for closed captions, which are displayed on a TV in synchronization with videos, information on the GOP structure, and the like. The compressed picture data 535 stores therein data of a compression-encoded picture. The padding data 536 stores therein meaningless data just tor formality. For example, the padding data 536 is used as stuffing data for maintaining a predetermined bit rate. The sequence end code 537 is data indicating the end of the playback sequence. The stream end code 538 is data indicating the end of a bit stream.

The structrrre of each of the AU identification code 531, the sequence header 532, the picture header 533, the supplementary data 534, the compressed picture data 535, the padding data 536, the sequence end code 537, and the stream end code 538 varies depending on a video encoding method.

For example, in the case of MPEG-4 AVC, the AU identification code 531 corresponds to an AU (Access Unit) delimiter. The sequence header 532 corresponds to an SPS (Sequence Parameter Set). The picture header 533 corresponds to a PPS (Picture Parameter Set). The compressed picture data 535 corresponds to a plurality of slices. The supplementary data 534 corresponds to SEI (Supplemental Enhancement Information). The padding data 536 corresponds to Filler Data. The sequence end code 537 corresponds to an End of Sequence. The stream end code 538 corresponds to an End of Stream.

In the case of MPEG-2, the sequence header 532 corresponds to sequence_Header, sequence_extension, and group_of_picture_header. The picture header 533 corresponds to picture_header and picture_coding_extension. The compressed picture data 535 corresponds to a plurality of slices. The supplementary data 534 corresponds to user_data. The sequence end code 537 corresponds to sequence_end_code. Although the AU identification code 531 does not exist, a boundary between access units can be determined by using a start code of each header.

Each data is not always necessary. For example, the sequence header 532 may be included only in a video access unit at the top of a GOP, and may not be included in the other video access units. Depending on an encoding method, the picture header 533 included in a prior video access unit may be referred to in order of codes. In this case, the video access unit referring to the prior video access unit may not include the picture header 533.

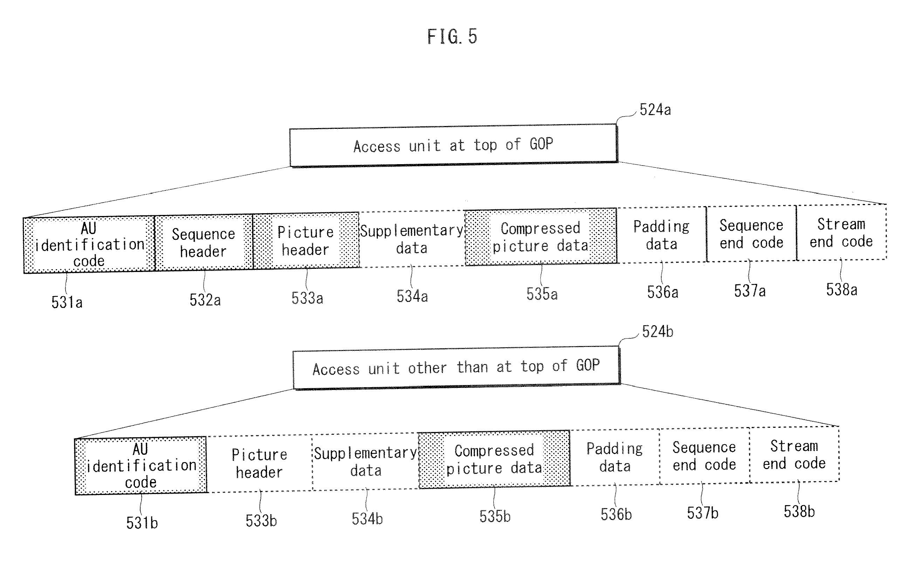

As illustrated in FIG. 5, a video access unit 524a at the top of the GOP stores therein data of the I picture as compressed picture data 535a. The video access unit 524a always stores therein an AU identification code 531a, a sequence header 532a, a picture header 533a, and the compressed picture data 535a. The video access unit 524a may store therein supplementary data 534a, padding data 536a, a sequence end code 537a, and a stream end code 538a.

A video access unit 524b other than at the top of the GOP always stores therein an AU identification code 531b and compressed picture data 535b. The video access unit 524b may store therein supplementary data 534b, padding data 530b, a sequence end code 537b, and a stream end code 538b.

### (Cropping Region information and Scaling Information)

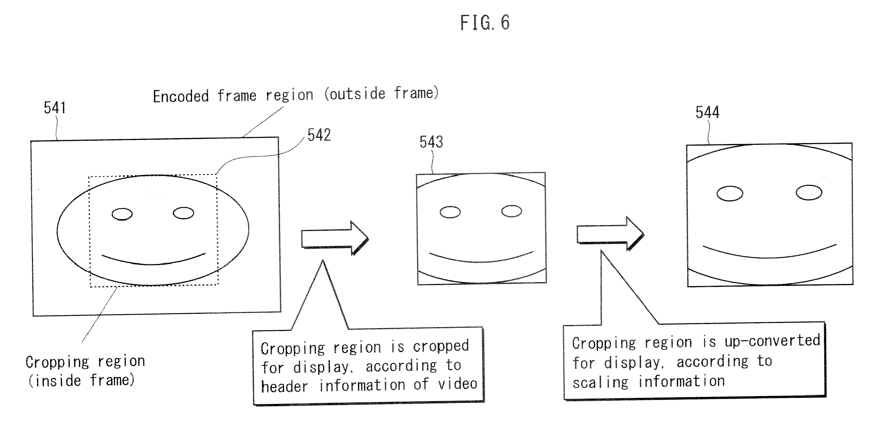

The following describes cropping region information and scaling information with reference to FIG. 6.

Depending on a video encoding method, a region actually used for display may be different from an encoded frame region.

As illustrated in FIG. 6, an actually-displayed region included in an encoded frame region 541 may be specified as a "cropping region" 542.

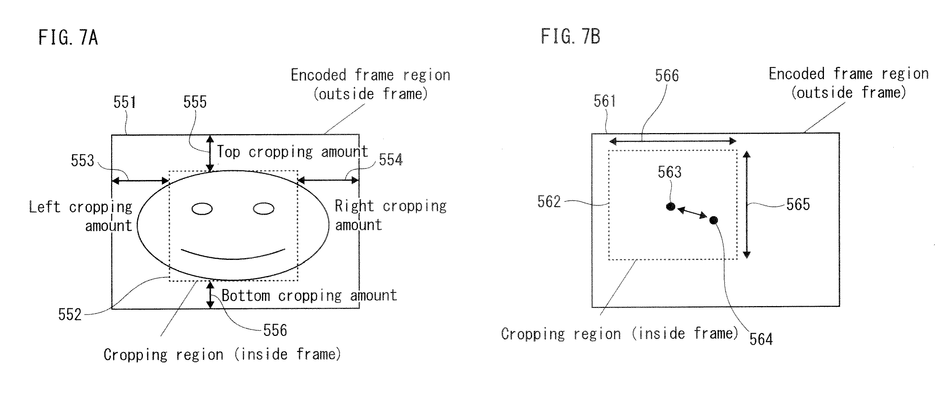

For example, in the case of MPEG-4 AVC, the cropping region may be specified by using frame_cropping information stored in the SPS. The frame_cropping information includes a top cropping amount 555, a bottom cropping amount 556, a left cropping amount 553, and a right cropping amount 554 as illustrated in FIG. 7A. The top cropping amount 555 indicates a distance between a top side of a cropping region 552 and a top side of a frame region 551. The bottom cropping amount 556 indicates a distance between a bottom side of the cropping region 552 and a bottom side of the frame region 551. The left cropping amount 553 indicates a distance between a left side of the cropping region 552 and a left side of the frame region 551. The right cropping amount 554 indicates a distance between a right side of the cropping region 552 and a right side of the frame region 551.

More specifically, in order to specify the cropping region, frame_cropping_flag is set to "1", and frame_crop_top_offset, frame_crop_bottom_offset, frame_crop_left_offset, and frame_crop _right_offset are respectively set to the top, bottom, left, and right cropping amounts.

In the case of MPEG-2, as illustrated in FIG. 7B, the cropping region is specified by using horizontal and vertical sizes of the cropping region (display_horizontal_size and display_vertical_size included in sequence_display_extension) 565 and 566, and information on difference between a center 564 of an encoded frame region 561 and a center 563 of a cropping region 562 (frame_centre_horizontal_offset and frame_centre_vertical_offset included in picture_display_extension).

Depending on a video encoding method, there is scaling information indicating a scaling method used when the cropping region is actually displayed on a television and the like. The scaling information is set as an aspect ratio, for example. The playback apparatus 400a up-converts the cropping region by using information on the aspect ratio for display.

For example, in the case of MPEG-4 AVC, as the scaling information, information on the aspect ratio (aspect_ratio_idc) is stored in the SPS. In the case of MPEG-4 AVG, in order to expand a 1440 × 1080 cropping region to 1920 × 1080 and then display the region, the aspect ratio is specified as 4:3. In this case, the cropping region is horizontally up-converted by a factor of 4/3 (1440 × 4/3 = 1920) to be expanded to 1920 × 1080 and then displayed. Similarly to the case of MPEG-4 AVC, the information on the aspect ratio (aspect_ratio_information) is stored in sequence_header in the case of MPEG-2.

### (PID)

Each stream included in the transport stream is identified by a stream ID referred to as a PID. By extracting packets with the corresponding PID, the playback apparatus 400a can extract a target stream. Correspondence between PIDs and streams is stored in a descriptor of a PMT packet described below.

### (Multiplexing in Transport Stream)

FIG. 3 schematically illustrates how a plurality of streams are multiplexed in the transport stream 513.

First, the video stream 501, which includes a plurality of video frames, and the audio stream 504, which includes a plurality of audio frames, are respectively converted into PES packet sequences 502 and 505. The PES packet sequences 502 and 505 are further converted into TS packet sequences 503 and 506, respectively. Similarly, data for the subtitle stream 507 is converted into a PES packet sequence 508. The PES packet sequence 508 is further converted into a TS packet sequence 509. The MPEG-2 transport stream 513 is configured by multiplexing the TS packet sequences 503, 506, and 509 into a single stream.

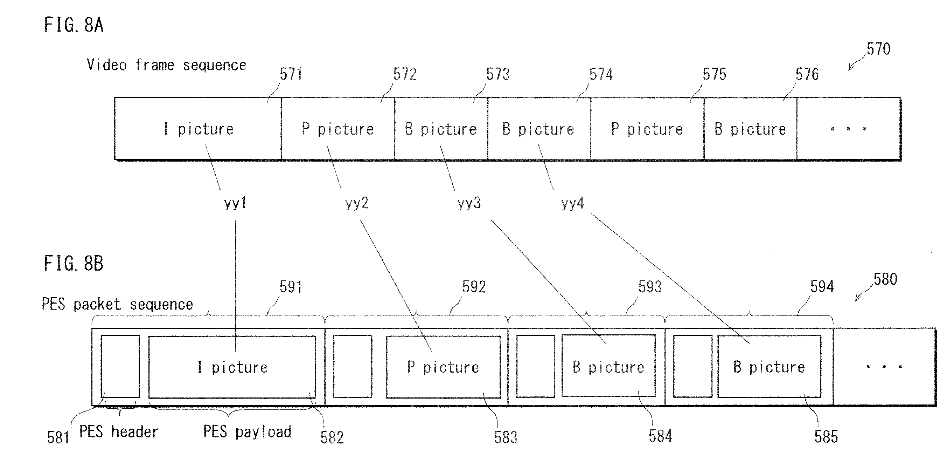

FIGs. 8A and 8B show the details of how the video stream is stored in the PES packet sequence. FIG. 8A illustrates the video frame sequence 570 in the video stream, and FIG. 8B illustrates the PES packet sequence 580. FIGs. 8A and 8B also show correspondence between pictures included in the video frame sequence 570 and pictures included in the PES packet sequence 580.

The video frame sequence 570 includes a plurality of video presentation units. Each of the video presentation units is any one of the I, B, and P pictures. The video frame sequence 570 in the video stream is divided into pictures, and each picture is stored in a payload of a PES packet. Specifically, as illustrated in FIGs. 8A and 8B, pictures 571, 572, 573, and 574 in the video frame sequence 570 are respectively stored in payloads of PES packets 591, 592, 593, and 594.

Each PES packet has a PES header. Stored in the PES header are a PTS (Presentation Time-Stamp) indicating a presentation time of a picture, and a DTS (Decoding Time-Stamp) indicating a decoding time of the picture.

### (TS Packet)

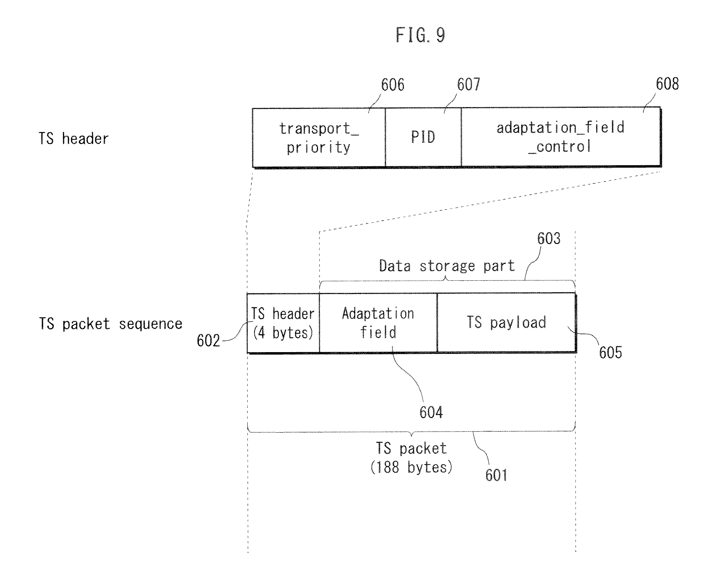

FIG. 9 illustrates the data structure of a TS packet included in the transport stream.

A TS packet 601 is a packet with a fixed length of 188 bytes. The TS packet 601 includes a 4-byte TS header 602, an adaptation field 604, and a TS payload 605.

The TS header 602 includes transport_priority 606, a PID 607, and adaptation_field_control 608.

As described above, the PID 607 is an ID for identifying a stream multiplexed into the transport stream. The transport_priority 606 is information for identifying a type of a packet among TS packets having the same PID. The adaptation_field_control 608 is information for controlling the structures of the adaptation field 604 and the TS payload 605. It may be the case where only one of the adaptation field 604 and the TS payload 605 exists. It may also be the case where both of the adaptation field 604 and the TS payload 605 exist. The adaptation_field_control 608 indicates which is the case. When the adaptation_field_control 608 is "1", only the TS payload 605 exists. When the adaptation_field_control 608 is "2", only the adaptation field 604 exists. When the adaptation_field_control 608 is "3", both the TS payload 605 and the adaptation field 604 exist.

The adaptation field 604 is a storage area for information such as a PCR and for data for stuffing the TS packet to reach the fixed length of 188 bytes. A PES packet is divided up and stored in the TS payload 605.

### (PAT, PMT, PCR, etc.)

Other than TS packets of the video, audio, subtitle, and other streams, the transport stream also includes TS packets of a PAT (Program Association Table), a PMT (Program Map Table), a PCR (Program Clock Reference), and the like. These packets are referred to as PSI (Program Specific Information).

The PAT indicates what the PID of the PMT used in the transport stream is. The PID of the PAT itself is registered as "0".

The PMT has the PID of each video, audio, subtitle, and other streams included in the transport stream, and attribute information on the streams corresponding to the PIDs. The PMT also has various descriptors related to the transport stream. The descriptors include copy control information indicating whether copying of an AV stream is permitted or not.

In order to synchronize an arrival time of a TS packet to a decoder with a STC (System Time Clock) used as a time axis for the PTS and the DTS, the PCR includes information on the STC time corresponding to a timing at which the PCR packet has been transferred to the decoder.

### (PMT)

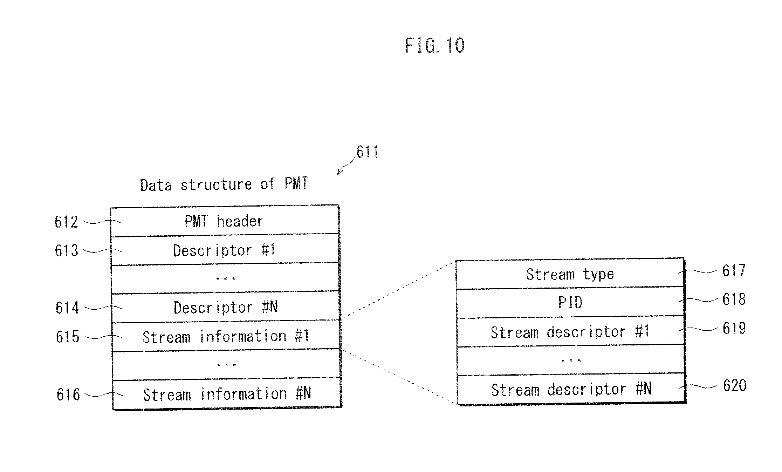

FIG. 10 illustrates the data structure of the PMT 611 in detail. A PMT header 612 into which the length of data included in the PMT 611 is written is at the top of the PMT. The PMT header 612 is followed by a plurality of descriptors 613, ..., and 614 related to the transport stream. The copy control information described above and the like are written as descriptors. The descriptors are followed by a plurality of stream information pieces 615, ..., 616 related to each stream included in the transport stream. The stream information 615 includes a stream type 617 for identifying a compression codec for a stream, the PID 618 for the stream, and stream descriptors 619, ..., 620 into each of which attribute information (e.g. a frame rate and an aspect ratio) of the stream is written.

### 2.3 Broadcasting System 100a

As illustrated in FIG. 2, the broadcasting system 100a includes a broadcast video capturing unit 101a, an editing unit 103a, a broadcast stream generating unit 104a, a broadcast stream buffer 105a, a transmitting unit 106a, an antenna 107a, a setting information buffer 108a, a superimposition region setting unit 109a, and a superimposition region setting data buffer 110a.

### (1) Broadcast Video Capturing Unit 101a and Editing Unit 103a

The broadcast video capturing unit 101a is, for example, a video camera recorder. The broadcast video capturing unit 101a captures and records a video including an object, and records an audio.

The editing unit 103a edits the video and audio recorded by the broadcast video capturing unit 101a. For example, the editing unit 103a selects a scene to be broadcast from videos captured by a plurality of video camera recorders, and superimposes graphics, such as score information and subtitle information, on the captured videos. FIG. 12 shows the editing. As shown in FIG. 12, a score image 644 is superimposed, as normal information, on a video plane 641 that shows a soccer game and has been captured and recorded by the broadcast video capturing unit 101a. In addition, a message image 643 "emergency information" showing important information is superimposed.

### (2) Broadcast Stream Generating Unit 104a

The broadcast stream generating unit 104a converts contents of the video and audio edited by the editing unit 103a into a broadcast stream in a format enabling transmission by broadcast. The broadcast stream generating unit 104a then writes the broadcast stream into the broadcast stream buffer 105a.

For example, in the case of the video, the broadcast stream generating unit 104a encodes the video in a video codec such as MPEG-2 and MPEG-4 AVC to generate a video stream. In the case of the audio, the broadcast stream generating unit 104a encodes the audio in an audio codec such as AC3 and AAC to generate an audio stream. The broadcast stream generating unit 104a multiplexes the video stream and the audio stream to generate a single system stream in a format such as MPEG-2 TS. Such a stream generated by multiplexing and to be distributed by broadcast is hereinafter referred to as a broadcast stream.

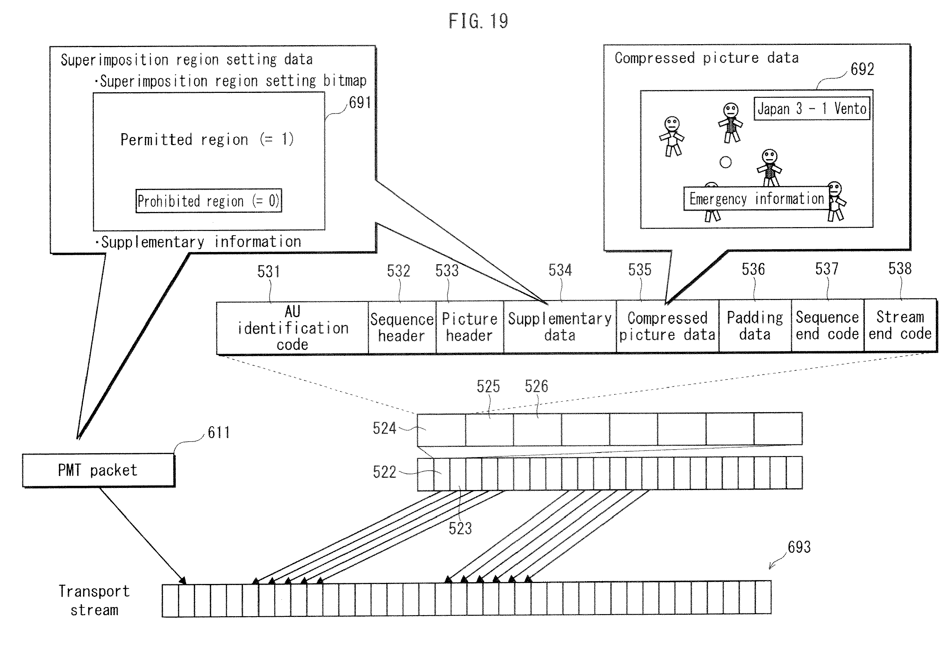

The broadcast stream generating unit 104a generates the broadcast stream based on video and audio data generated by the editing unit 103a. As illustrated in FIG. 19, the broadcast stream generating unit 104a also embeds the superimposition region setting data in the broadcast stream.

As described above, the superimposition region setting data includes a superimposition region setting bitmap and supplementary information on resolution of the bitmap and the like. The broadcast stream generating unit 104a stores the superimposition region setting data in the video stream multiplexed into the broadcast stream and a descriptor in a PMT, an SIT, and the like.

When storing the superimposition region setting data in the video stream, the broadcast stream generating unit 104a may store the superimposition region setting data in the supplementary data of each frame. The superimposition region setting data may be stored only in an access unit at the top of a GOP so that the superimposition region setting data is effective before the top of the next GOP. The supplementary information may be time information, such as a PTS indicating a start time and a PTS indicating an end time, in a section during which the superimposition region setting data is effective. The superimposition region setting data may be configured to be assigned with a PID and multiplexed as a separate stream.

### (3) Transmitting Unit 106a

The transmitting unit 106a reads the broadcast stream from the broadcast stream buffer 105a, and transmits the read broadcast stream via the antenna 107a by broadcast. In this way, the broadcast stream is distributed to homes by broadcast.

### (4) Setting Information Buffer 108a

The setting information buffer 108a includes, for example, semiconductor memory. The setting information buffer 108a stores therein the setting information.

The setting information indicates, for each type of a scene constituting the broadcast video and audio, how additional information is to be superimposed on the video. Specifically, the setting information includes a superimposition flag corresponding to the type of a scene.

For example, scenes constituting the video and audio to be distributed by broadcast are classified into type 1, type 2, and type 3 scenes described below.

The type 1 scene includes only the video and audio captured by the broadcast video capturing unit 101a. The type 1 scene is, for example, a scene including only the video and audio constituting a normal soccer game live.

The type 2 scene includes, in addition to the video and audio captured by the broadcast video capturing unit 101a, a message image showing important information and superimposed on the video. The type 2 scene is, for example, a scene of a normal soccer game live on which a message image "emergency information" showing important information has been superimposed.

The type 3 scene is a scene including only the video and audio constituting a commercial.

In the case of the type I scene, the setting information includes a superimposition flag "0". In the case of the type 2 scene, the setting information includes a superimposition flag "1". In the case of the type 3 scene, the setting information includes a superimposition flag "2".

The superimposition flag "0" indicates that superimposition of the additional information on the video included in the corresponding type 1 scene is permitted.

The superimposition flag "1" indicates that superimposition of the additional information on the video included in the corresponding type 2 scene is prohibited in a region in which the message image showing important information is to be displayed.

The superimposition flag "2" indicates that superimposition of the additional information on the video included in the corresponding type 2 scene is prohibited.

### (5) Superimposition Region Setting Data Buffer 110a

The superimposition region setting data buffer 110a includes, for example, a hard disk unit. The superimposition region setting data buffer 110a has an area for storing therein the superimposition region setting data.

As described later, the superimposition region setting data includes bitmap information indicating permitted and prohibited regions for each frame of a broadcast video.

### (6) Superimposition Region Setting Unit 109a

The superimposition region setting unit 109a receives the edited video and audio from the editing unit 103a. The superimposition region setting unit 109a then outputs the received video and audio to the broadcast stream generating unit 104a.

The superimposition region setting unit 109a reads the setting information from the setting information buffer 108a. The superimposition region setting unit 109a then sets, in a video distributed by broadcast, a spatial region and a temporal section in which the superimposition by the playback apparatus 400a is permitted, by using the read setting information. The superimposition region setting unit 109a also sets a spatial region and a temporal section in which the superimposition is prohibited. The superimposition region setting data is thus generated.

Specifically, the superimposition region setting unit 109a determines whether a type of each scene constituting the received video and audio is the type I, the type 2, or the type 3. The superimposition region setting unit 109a then extracts a superimposition flag corresponding to the determined type from the setting information. The superimposition region setting unit 109a then generates the superimposition region setting data for the scene, according to the extracted superimposition flag.

The superimposition region setting unit 109a writes the generated superimposition region setting data into the superimposition region setting data buffer 110a.

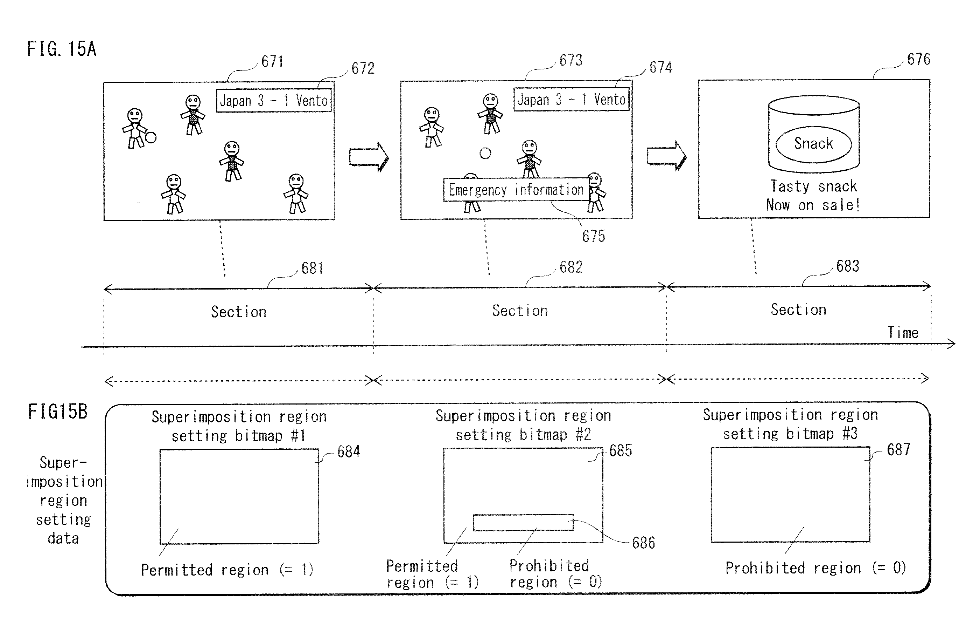

FIG. 15B shows an example of the superimposition region setting data. As illustrated in FIG. 15B, the superimposition region setting data includes bitmap information indicating permitted and prohibited regions for each frame of a broadcast video. For example, in the case of a full HD video with a resolution of 1920 × 1080, a string of bits allocated one-to-one to 1920 × 1080 pixels is prepared. A pixel at which the superimposition is permitted has a value "1", and a pixel at which the superimposition is prohibited has a value "0". A bitmap thus generated is referred to as a "superimposition region setting bitmap",

FIG. 15A illustrates a transition of a screen image along a playback time axis. The following describes an example of the superimposition region setting bitmap for each scene. A scene in a section 681 is a scene of a normal soccer game live. A scene in a section 682 is a scene of a soccer game live on which a message image showing emergency information has been superimposed. A scene in a section 683 is a scene of a commercial.

In the case where a video has the scene structure as described above, in the section 681, all bits within a superimposition region setting bitmap #1 684 are set, as a whole, to a permitted region (= 1).

In the section 682, a bit region 686, within a superimposition region setting bitmap #2 685, corresponding to pixels at which a message image 675 showing "emergency information" is to be displayed by a broadcasting station is set to a prohibited region (= 0). A bit region other than the bit region in which the message image 675 is to be displayed is set to a permitted region (= 1).

In the section 683, all bits within a superimposition region setting bitmap #3 687 are set, as a whole, to a prohibited region (= 0).

The superimposition region setting bitmap may have lower resolution than a broadcast frame. For example, when the broadcast frame has full HD (1920 × 1080) resolution, the superimposition region setting bitmap may have half or quarter HD resolution, or half of the quarter HD resolution.

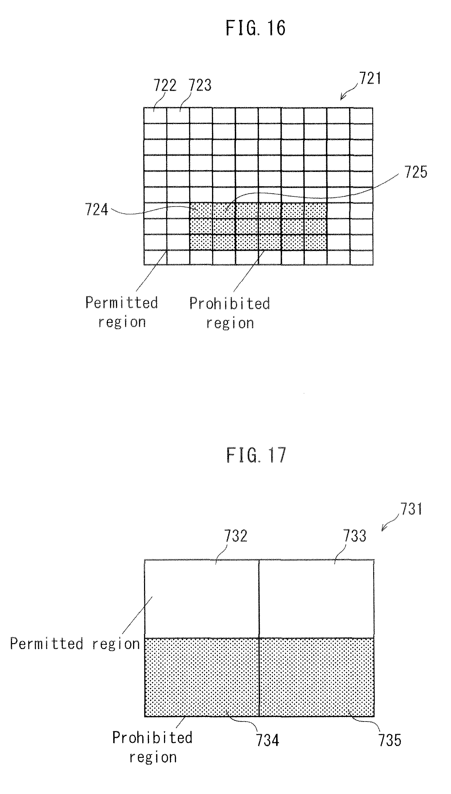

Alternatively, as shown in FIGs. 16 and 17, the superimposition region setting bitmap may have extremely low resolution, such as 10 × 10 and 2 × 2. In the example shown in FIG. 16, the superimposition region setting bitmap includes 100 regions 722, 723, ... arranged in 10 rows and 10 columns. Regions 724, 725, ... are a prohibited region as a whole, and the other regions are a permitted region as a whole. In the example shown in FIG. 17, the superimposition region setting bitmap includes four regions 732, 733, 734, and 735 arranged in two rows and two columns. The regions 734 and 735 are a prohibited region as a whole, and the regions 732 and 733 are a permitted region as a whole.

In such a case, in order for the playback apparatus 400a to perform the mask processing, the resolution of the superimposition region setting bitmap may be increased to be the same as the resolution of a broadcast frame. Considering a case as described above, information on the resolution of the superimposition region setting bitmap is stored along with the superimposition region setting bitmap as supplementary information thereof.

The superimposition region setting bitmap may be stored as an uncompressed bit string, may be lossless compressed, and may be encoded as a JPG image and a video stream.

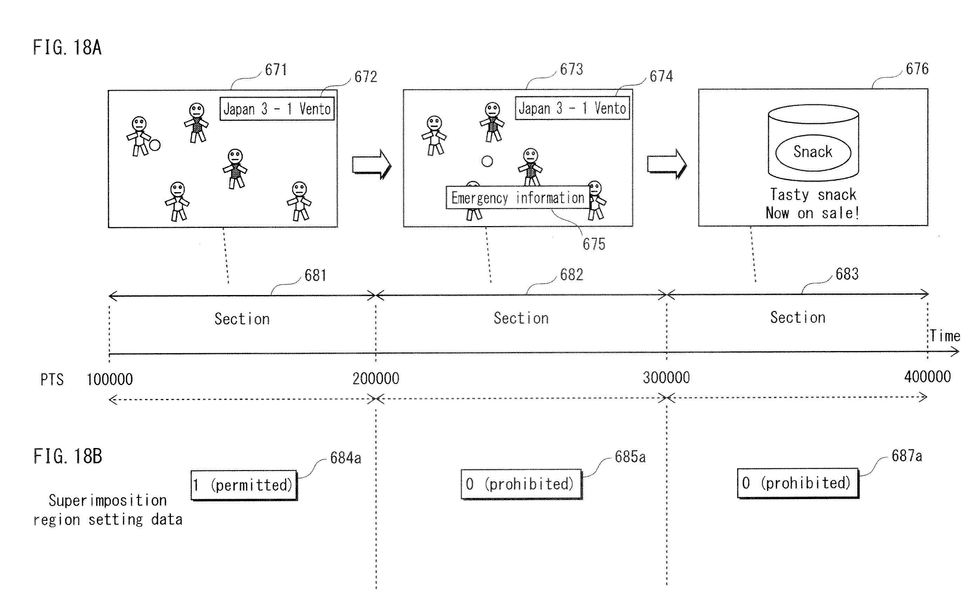

The superimposition region setting data may be one-bit data representing a whole frame. The superimposition region setting data as one-bit data means a flag. In this case, the superimposition region setting data has the structure as shown in FIG. 18B. As shown in FIG. 18B, in the section 681, the superimposition region setting data 684a is "1" (permitted). In the section 682, the superimposition region setting data 685a is "0" (prohibited). In the section 683, the superimposition region setting data 685a is "0" (prohibited).

As the superimposition region setting data, a flag indicating whether or not the superimposition is prohibited in a whole frame may be provided. In addition to the flag, another superimposition region setting bitmap showing a permitted region in detail may be prepared. With such a structure, the playback apparatus should refer to the flag at first. When the flag indicates "prohibited", the playback apparatus does not have to expand the bitmap. As a result, the processing is simplified.

### 2.4 Communication Service Providing System 300a

As illustrated in FIG. 2, the communication service providing system 300a includes a superimposition data generating unit 301a, a superimposition data buffer 302a, and a transmitting unit 303a.

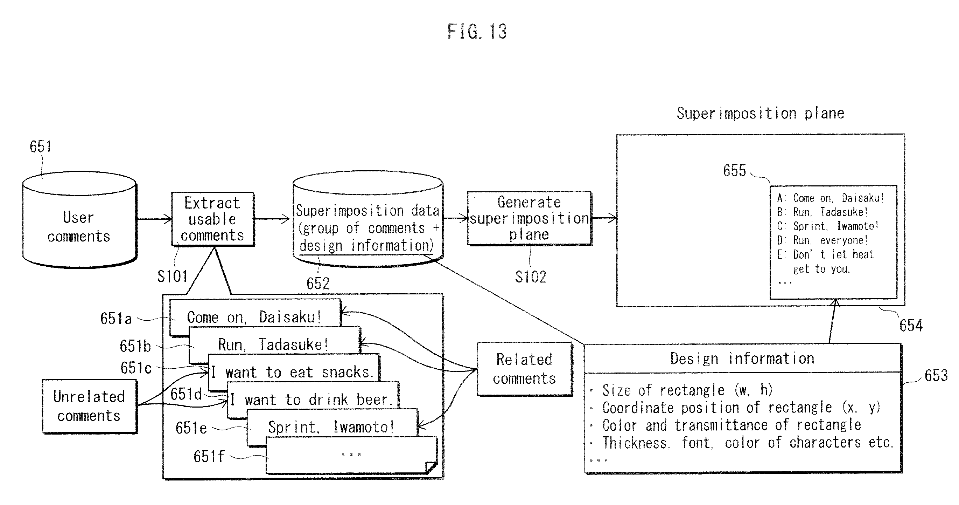

The superimposition data generating unit 301a generates superimposition data to be superimposed on a video broadcast by a broadcasting station. For example, when the communication service providing system 300a provides a service to superimpose user comments on a broadcast video, the superimposition data generating unit 301a performs the following processing. The superimposition data generating unit 301a collects, from comments on SNS sites such as users' tweets shared on Twitter, comments related to a broadcast program and comments to be suitably displayed for a broadcast video, using language analysis technology and tag information. The collected comments are converted into superimposition data including a group of comments and design information. The design information indicates where in a broadcast video and how each comment is displayed and a color of the displayed comment. For example, as shown in FIG. 13, the design information includes information on a rectangle enclosing the group of comments (width, height, coordinate position, color, and transmittance of the rectangle) and text information (font, thickness, color of each character).

The superimposition data generating unit 301 a then writes the generated superimposition data into the superimposition data buffer 302a.

The transmitting unit 303a reads the superimposition data from the superimposition data buffer 302a. The transmitting unit 303a transmits, via the network 20a, the read superimposition data to the playback apparatus 400a provided in each home.

### 2.5 Playback Apparatus 400a

As illustrated in FIG. 2, the playback apparatus 400a includes a tuner 401a, broadcast stream decoding unit 402a, a broadcast data buffer 403a, a superimposition region setting data buffer 404a, a superimposition region masking unit 405a, a masked superimposition plane buffer 406a, a combining unit 407a, a displaying unit 408a, an NIC (Network Interface Card) 409a, a superimposing unit 410a, and a superimposition plane buffer 411a. An antenna 420a is connected to the tuner 401a.

### (1) Buffer

The broadcast data buffer 403a includes, for example, semiconductor memory. The broadcast data buffer 403a has an area for storing therein a video plane decoded by the broadcast stream decoding unit 402a.

The superimposition plane buffer 411a includes, for example, semiconductor memory. The superimposition plane buffer 411a has an area for storing therein a superimposition image generated by the superimposing unit 410a. In addition to color information such as RGB and YUV, the superimposition plane has an α value so that transmittance can be set.

The superimposition region setting data buffer 404a includes, for example, semiconductor memory. The superimposition region setting data buffer 404a has an area for storing therein the superimposition region setting data.

### (2) Tuner 401a and Broadcast Stream Decoding Unit 402a

The tuner 401a selects a broadcast stream from a broadcast received via the antenna 420a, and demodulates the selected broadcast stream.

The broadcast stream decoding unit 402a receives the broadcast stream from the tuner 401 a. The broadcast stream decoding unit 402a then decodes the broadcast stream at a timing shown by the PTS to separate the video plane, and writes the video plane into the broadcast data buffer 403a. The broadcast stream decoding unit 402a also separates the superimposition region setting data, and writes the superimposition region setting data into the superimposition region setting data buffer 404a.

As an example of the video plane, FIG. 12 illustrates a video plane 642. In the video plane 642, the score image 644 showing score information and the message image 643 "emergency information" showing important information are superimposed on a broadcast video plane.

### (3) NIC 409a

The NIC 409a is connected to the network 20a, and receives superimposition data from the communication service providing system 300a via the network 20a. The NIC 409a outputs the received superimposition data to the superimposing unit 410a.

As an example of the superimposition data, FIG. 13 shows superimposition data 652. The superimposition data 652 includes a group of comments and design information.

### (4) Superimposing Unit 410a

The superimposing unit 410a acquires the superimposition data from the communication service providing system 300a via the network 20a and the NIC 409a. Based on the acquired superimposition data, the superimposing unit 410a generates the superimposition plane, which is an image to be superimposed on a broadcast video. The superimposing unit 410a then writes the generated superimposition plane into the superimposition plane buffer 411a. When the superimposition data includes timing information of the PTS, if the generated superimposition plane is written at a timing shown by the PTS, it is possible to perform superimposition in synchronization with a broadcast video. Since it is possible to set transmittance in the superimposition plane, each color in the superimposition plane may be set to be transparent if desired.

As an example of the superimposition plane, FIG. 13 illustrates a superimposition plane 654. In the superimposition plane 654, a comment image 655 has been superimposed.

### (5) Superimposition Region Masking Unit 405a

The superimposition region masking unit 405a acquires, from the superimposition region setting data stored in the superimposition region setting data buffer 404a, a superimposition region setting bitmap corresponding to the PTS for a video to be output to the video plane. As an example of the superimposition region setting bitmap, FIG. 14 shows a superimposition region setting bitmap 661. The superimposition region setting bitmap 661 includes a prohibited region 662. A region other than the prohibited region 662 is a permitted region. The superimposition region masking unit 405a then reads the superimposition plane stored in the superimposition plane buffer 411a. The superimposition region masking unit 405a then performs the mask processing on the read superimposition plane by using the acquired superimposition region setting bitmap. In the mask processing, α values of pixels in the superimposition plane corresponding to the prohibited region included in the superimposition region setting bitmap are set to be completely transparent. Specifically, the α values of the pixels in the superimposition plane corresponding to the prohibited region are set to values meaning "transparent". The masked superimposition plane is thus generated. The superimposition region masking unit 405a then writes the masked superimposition plane into the masked superimposition plane buffer 406a. As an example of the masked superimposition plane, FIG. 14 illustrates a masked superimposition plane 663. In the masked superimposition plane 663 illustrated in FIG. 14, a region in which the comment image 655 in the superimposition plane and the prohibited region 662 in the superimposition region setting bitmap 661 overlap each other is set to be transparent. As a result, a comment image 664 corresponding to a part of the comment image 655 is displayed on the masked superimposition plane 663.

### (6) Combining Unit 407a and Displaying Unit 408a

The combining unit 407a reads a video plane from the broadcast data buffer 403a. The combining unit 407a then reads a masked superimposition plane corresponding to a PTS of a frame of the read video plane from the masked superimposition plane buffer 406a. The combining unit 407a then combines the read video plane and the read masked superimposition plane to generate a composite plane. In the example shown in FIG. 14, the combining unit 407a combines the video plane 642 and the masked superimposition plane 663 to generate the composite plane 665. In the composite plane 665, a score image 666 showing score information, a comment image 667 showing comments, and a message image 668 showing important information are superimposed on the video plane obtained by video capturing. The score image 666, the comment image 667, and the message image 668 do not overlap one another. The whole of the message image 668 is thus displayed. The combining unit 407a then outputs the composite plane to the displaying unit 408a.

The displaying unit 408a displays the composite plane.

### 2.6 Operation of Broadcasting-communications Collaboration System 10a

The following describes operations of the broadcasting system 100a and the playback apparatus 400a included in the broadcasting-communications collaboration system 10a.

### (1) Operation of Broadcasting System 100a

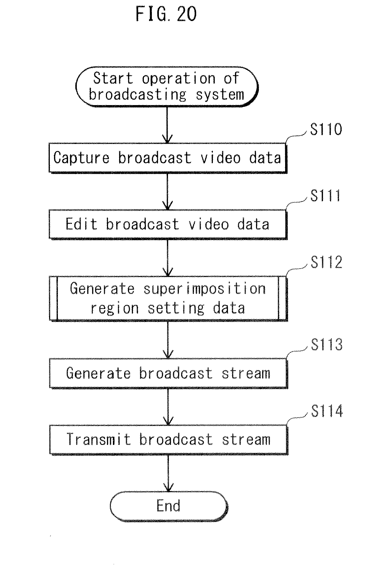

The operation of the broadcasting system 100a is described with use of a flow chart shown in FIG. 20.

The broadcast video capturing unit 101a captures and records a video including an object, and records an audio (step S110). The editing unit 103a edits the video and audio recorded by the broadcast video capturing unit 101a (step S111). The superimposition region setting unit 109a generates the superimposition region setting data (step S112). The broadcast stream generating unit 104a generates the broadcast stream (step S113). The transmitting unit 106atransmits the broadcast stream (step S114).

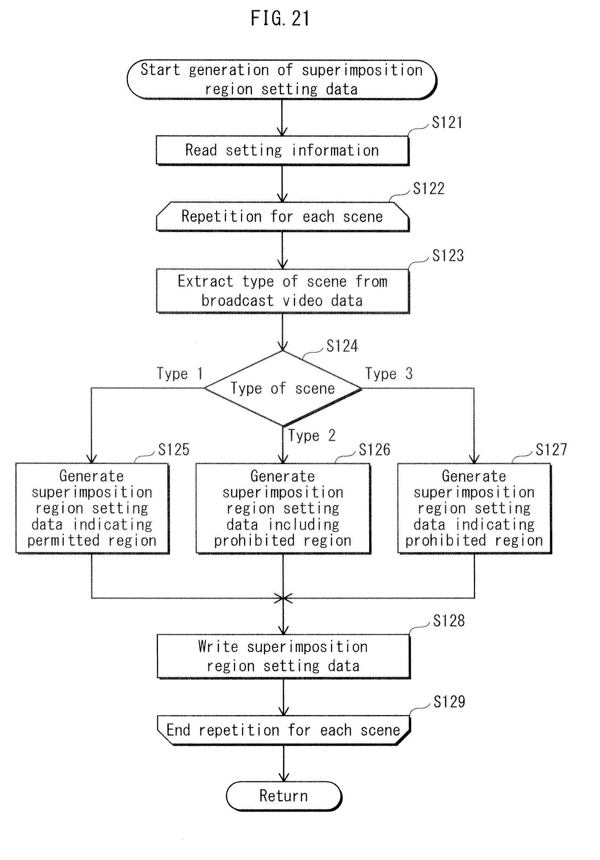

Procedures for generating the superimposition region setting data are described below with use of a flow chart shown in FIG. 21. The procedures correspond to details of step S112 shown in FIG. 20.

The superimposition region setting unit 109a reads the setting information from the setting information buffer 108a (step S121). The superimposition region setting unit 109a then repeats the following steps S123 to S128 for each scene of broadcast video data (steps S122 to S129).

The superimposition region setting unit 109a extracts a type of the scene of the broadcast video data (step S123). The superimposition region setting unit 109a then determines the extracted type of the scene (step S124).

When determining that the type is the type 1 ("type 1" in step S124), the superimposition region setting unit 109a generates superimposition region setting data indicating a permitted region (step S125). When determining that the type is the type 2 ("type 2" in step S124), the superimposition region setting unit 109a generates superimposition region setting data including a prohibited region (step S126). When determining that the type is the type 3 ("type 3" in step S124), the superimposition region setting unit 109a generates superimposition region setting data indicating a prohibited region (step S127). The superimposition region setting unit 109a then writes the generated superimposition region setting data into the superimposition region setting data buffer 110a (step S128).

### (2) Operation of Playback Apparatus 400a

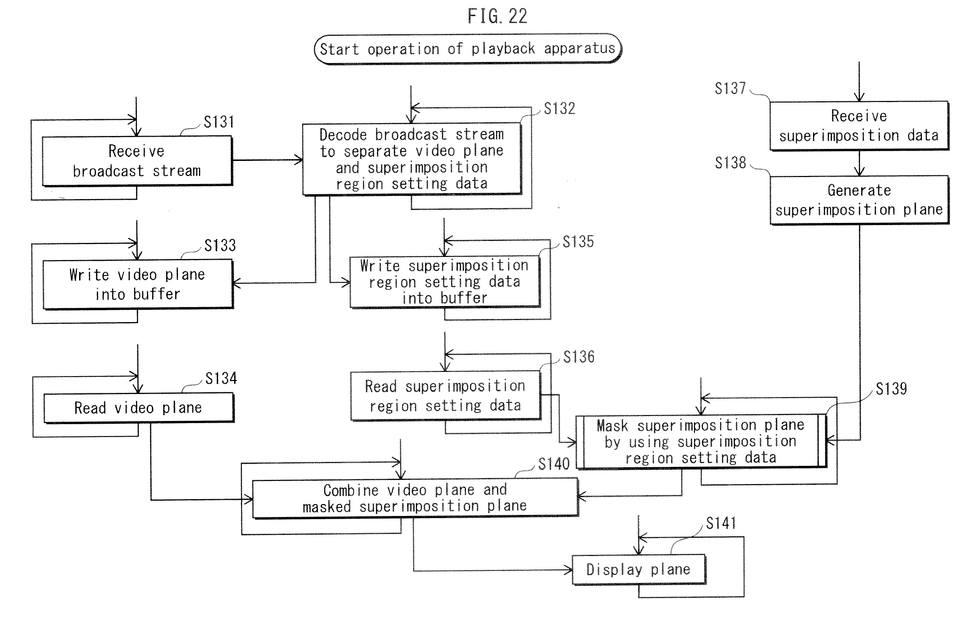

The operation of the playback apparatus 400a is described with use of a sequence diagram shown in FIG. 22.

The antenna 420a repeats reception of broadcasts, and the tuner 401a repeats selection of broadcast streams from the broadcasts and demodulation of the selected broadcast streams (step S131).

The broadcast stream decoding unit 402a repeats decoding of the broadcast streams to separate video planes and superimposition region setting data from the broadcast streams (step S132).

The broadcast stream decoding unit 402a repeats writing of the video planes into the broadcast data buffer 403a (step S133).

The broadcast stream decoding unit 402a repeats writing of the superimposition region setting data into the Superimposition region setting data buffer 404a (step S135).

The NIC 409a receives the superimposition data from the communication service providing system 300a via the network 20a (step S137).

Based on the acquired superimposition data, the superimposing unit 410a generates the superimposition plane, which is an image to be superimposed on a broadcast video (step S138).

The superimposition region masking unit 405a acquires, from the superimposition region setting data stored in the superimposition region setting data buffer 404a, a superimposition region setting bitmap corresponding to the PTS for a video to be output to the video plane (step S136).

The superimposition region masking unit 405a then reads the Superimposition plane stored in the superimposition plane buffer 411a. The superimposition region masking unit 405a then performs the mask processing on the read superimposition plane by using the acquired superimposition region setting bitmap (step S139).

The combining unit 407a then repeats reading of the video planes from the broadcast data buffer 403a (step S134). The combining unit 407a then repeats combining of the video planes and the masked superimposition planes to generate composite planes (step S140).

The displaying unit 408a repeats displaying of the composite planes (step S141).

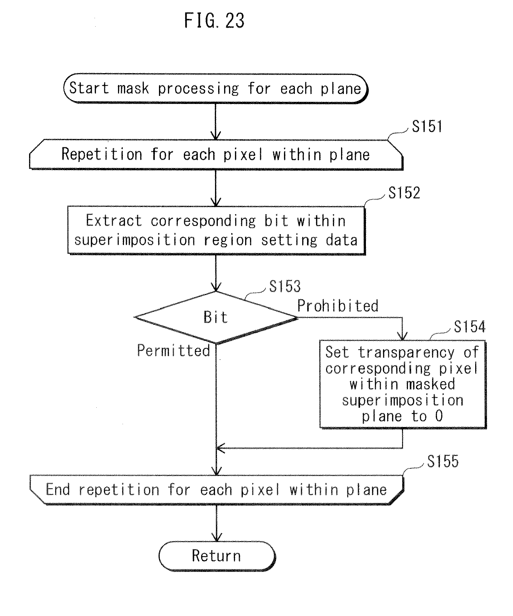

Procedures for generating the masked superimposition plane performed by the superimposition region masking unit 405a are described below with use of a flow chart shown in FIG. 23. The procedures correspond to details of step S139 shown in FIG. 22.

The superimposition region masking unit 405a repeats the following steps S152 to S154 for each pixel within a video plane (steps S151 to S155).

The superimposition region masking unit 405a extracts, for each pixel within the video plane, a corresponding bit within the superimposition region setting data (step S152).

The superimposition region masking unit 405a determines whether the extracted bit indicates "permitted" or "prohibited" (step S 153).

When determining that the extracted bit indicates "permitted" ("permitted" in step S153), the superimposition region masking unit 405a ends the processing.

When determining that the extracted bit indicates "prohibited" ("prohibited" in step S153), the superimposition region masking unit 405a sets a corresponding pixel within the masked superimposition plane to be completely transparent (step S154).

### 2.7 Summary

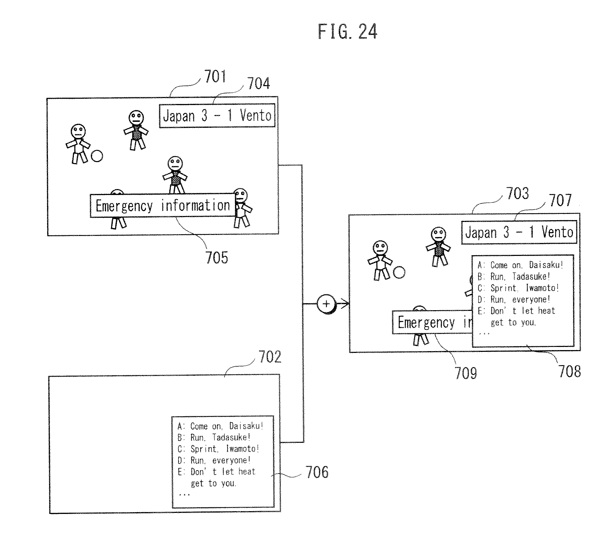

One of the problems in providing the service to superimpose additional information on a broadcast video is that the superimposition is performed without reflecting intentions of a broadcasting station. The problem is described in detail below with reference to FIG. 24.

As illustrated in FIG. 24, against a background of a video of a soccer game, a score image 704 as well as a message image 705 "emergency information" are inserted into a video plane 701. The message image 705 shows a message that is required to be conveyed to users as emergency information by a broadcasting station, and has been embedded in the broadcast video. In the superimposition plane 702, a comment image 706 showing user comments is included. In such a case, the video plane 701 and the superimposition plane 702 are combined as shown in a composite plane 703 in FIG. 24.

In the composite plane 703, a message image 709 "emergency information" is overwritten by a comment image 708 so that the message image 709 is partially removed. In such a case, a broadcasting station cannot correctly convey a message as important information that the broadcasting station hopes to convey to users.

Other examples of the message that the broadcasting station hopes to convey to users are "earthquake early warnings" and "newsflash". These are important information. Examples of a necessary message in terms of businesses of a broadcasting station other than "emergency information" are a "commercial" and a "message from the broadcasting station (e.g. a commercial for advertizing a program, a questionnaire, and a message indicating continuation of broadcasting of a live program"). If such a message cannot correctly be conveyed, business operations of the broadcasting station are obstructed.

On the other hand, as illustrated in FIG. 14, the message image 668 is not overwritten by the comment image 667 according to the broadcasting-communications collaboration system 10a. It is therefore possible to correctly convey, to users, a message, such as an emergency broadcast message and a commercial, embedded in a video that a broadcasting station hopes to convey, according to intentions of the broadcasting station.

With such a structure, it is possible to correctly convey, to users, a message, such as emergency information, that a broadcasting station hopes to convey, without being obstructed by superimposition of another image.

### 2.8 Modifications

(1) In the above embodiments, a bitmap is used to indicate a region in which the superimposition is permitted/prohibited. The region in which the superimposition is permitted/prohibited, however, may be indicated in another manner.

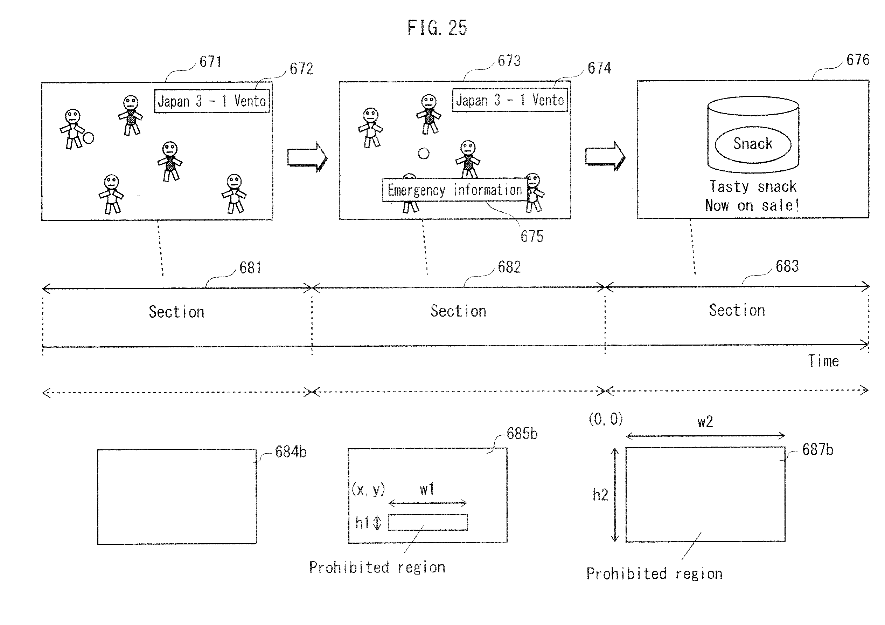

As illustrated in FIG. 25, information on a rectangle showing a prohibited region may be represented by a vector image.

For example, the rectangle showing the prohibited region may be represented by a coordinate position and a size of the prohibited region. The coordinate position indicates an upper left corner (x, y of the prohibited region within the superimposition region setting bitmap. The size of the prohibited region is indicated by the width and height of the prohibited region.

In such a case, in the section 681 shown in FIG 25, for example, there is no entry because the prohibited region does not exist.

In the section 682, the prohibited region is indicated by the coordinate position (x, y) within a superimposition region setting bitmap 685b, the width (w1), and the height (y1).

In the section 683, the prohibited region is indicated by the coordinate position (0, 0) within a superimposition region setting bitmap 687b, the width (w2), and the height (y2).

With such a structure, the amount of information is reduced compared to the structure in which a bitmap is used.

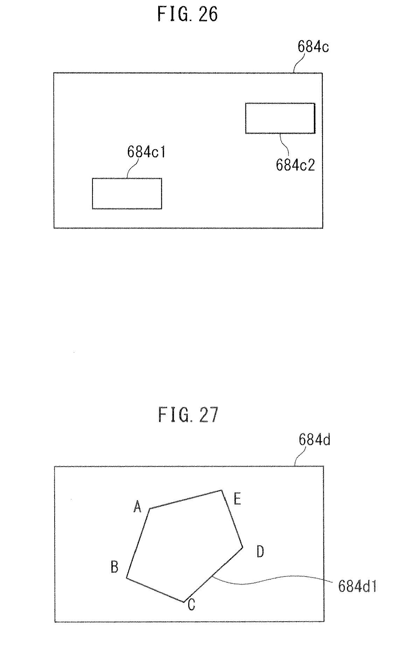

(2) Within the superimposition region setting bitmap, there may be a plurality of prohibited regions as illustrated in FIG. 26. In FIG. 26, there are prohibited regions 684c1 and 684c2 within a superimposition region setting bitmap 684c.

(3) As illustrated in FIG. 27, the prohibited region may have a (planer) polygonal shape. In FIG. 27, there is a prohibited region 684d1 within a superimposition region setting bitmap 684d. In this case, coordinate positions of vertices of a polygon are registered in a clockwise or counterclockwise direction. In the case of a polygon shown in FIG. 27, coordinate positions of vertices A, B, C, D, and E of the polygon are registered. As described above, when the superimposition region setting data is represented by a vector image, the superimposition region masking unit 405a should specify the prohibited region by using the vector image to perform the mask processing on the superimposition plane.

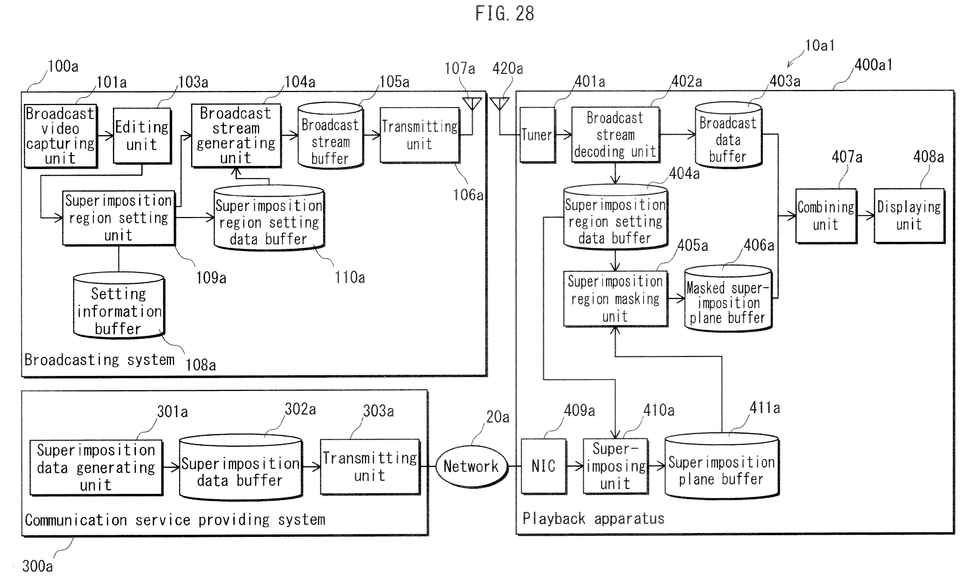

(4) A playback apparatus 400a1 as a modification of the playback apparatus 400a is illustrated in FIG. 28.

In the playback apparatus 400a1, the superimposing unit 410a refers to the superimposition region setting data buffer 404a.

When the superimposing unit 410a is composed of an application program and a processor, for example, the superimposition region setting data may be referred to via an API of the application program. Information may be received in a callback event for each frame or GOP, every N minutes, or each time a change occurs.

With such a structure, the superimposing unit 410a can change the superimposition region as needed by using the superimposition region setting data.

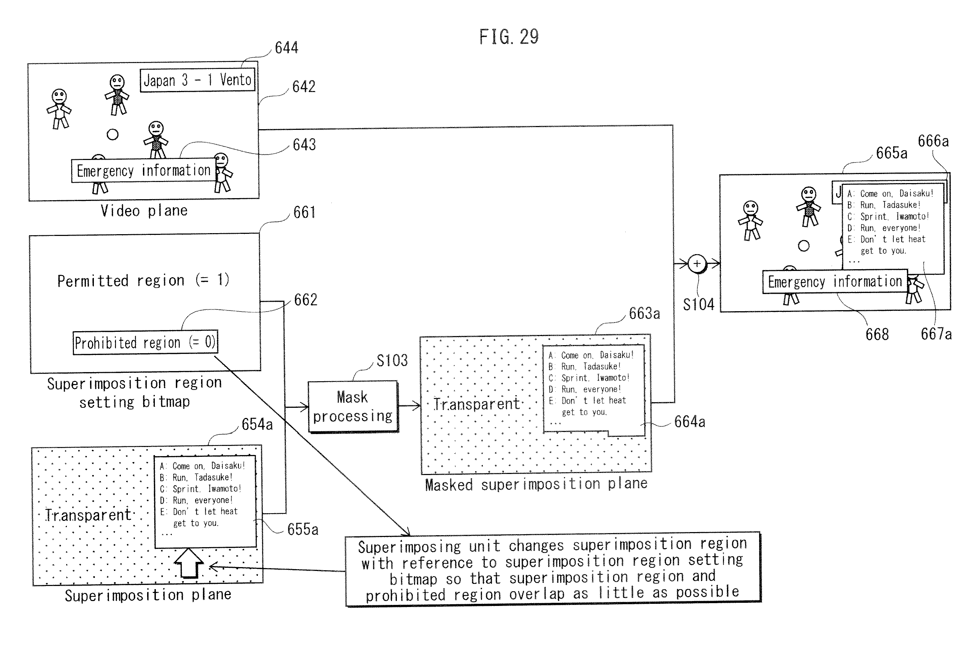

For example, as illustrated in FIG. 29, the superimposing unit 410a specifies the position of the prohibited region 662 with reference to the superimposition region setting bitmap 661. The superimposing unit 410a then performs processing to shift a position at which a comment image is superimposed within the superimposition plane 654a so that the comment image and the prohibited region 662 do not overlap each other. FIG. 29 illustrates a shifted comment image 655a. Such a structure enables users to view a video in which a message image showing important information broadcast by a broadcasting station and a comment image do not overlap each other.

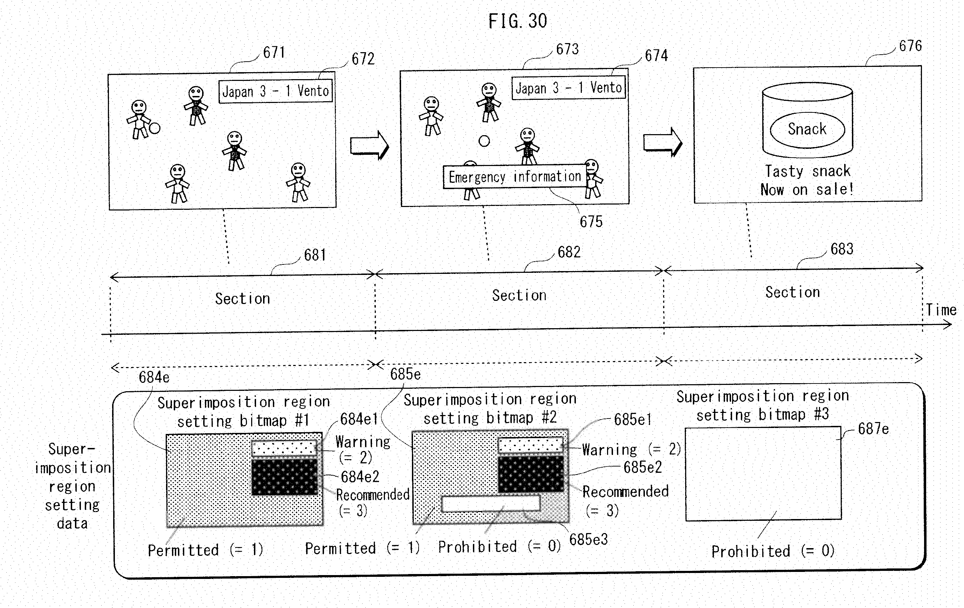

(5) As illustrated in FIG. 30, the superimposition region setting bitmap may be configured such that, in addition to regions having attributes "permitted" and "prohibited", a region having another attribute, such as "warning" and "recommended", may be set.

For example, the attribute "warning" indicates a region in which there is a message image (e.g. game score) in the form of caption and the like, and in which the superimposition is discouraged. The attribute "recommended" indicates a region in which a caption is displayed by a broadcasting station as little as possible, and in which the superimposition is recommended.

For example, when a value of each bit in the prohibited region and a value of each bit in the permitted region are set to "0" and "1", respectively, a value of each bit in the warning region and a value of each bit in the recommended region are set to "2" and "3", respectively.

In the example shown in FIG. 30, in a superimposition region setting bitmap #1 684e, a region 684e1 corresponding to a score image 672 of a soccer game is set to the warning region (= 2). Another region 684e2 is set to the recommended region (= 3).

In a superimposition region setting bitmap #2 685e, a region 685e1 corresponding to a score image 674 of a soccer game is set to the warning region (= 2). Another region 685e2 is set to the recommended region (= 3).

In a superimposition region setting bitmap #3 687e, a whole region is set to the prohibited region.

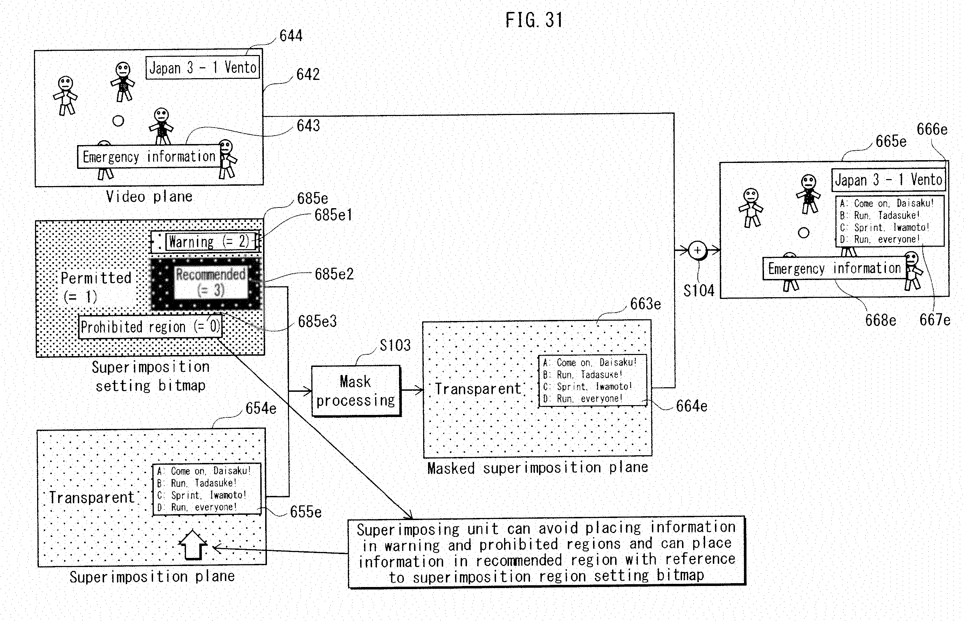

As illustrated in FIG. 31, the superimposing unit 410a can avoid superimposing additional information, such as comments, in the prohibited and warning regions and can superimpose the additional information in the recommended region.

With such a structure, the superimposing unit 410a can perform more precise control on a position at which additional information, such as comments, is superimposed, with reference to the warning, recommended, prohibited, and permitted regions within the superimposition region setting bitmap.

A plurality of types of attributes of regions, such as "warning", "recommended", "prohibited", and "permitted", can of course be set by using a vector image shown in FIG. 25 and a flag and type information for each frame shown in FIGs. 18A and 18B as well.

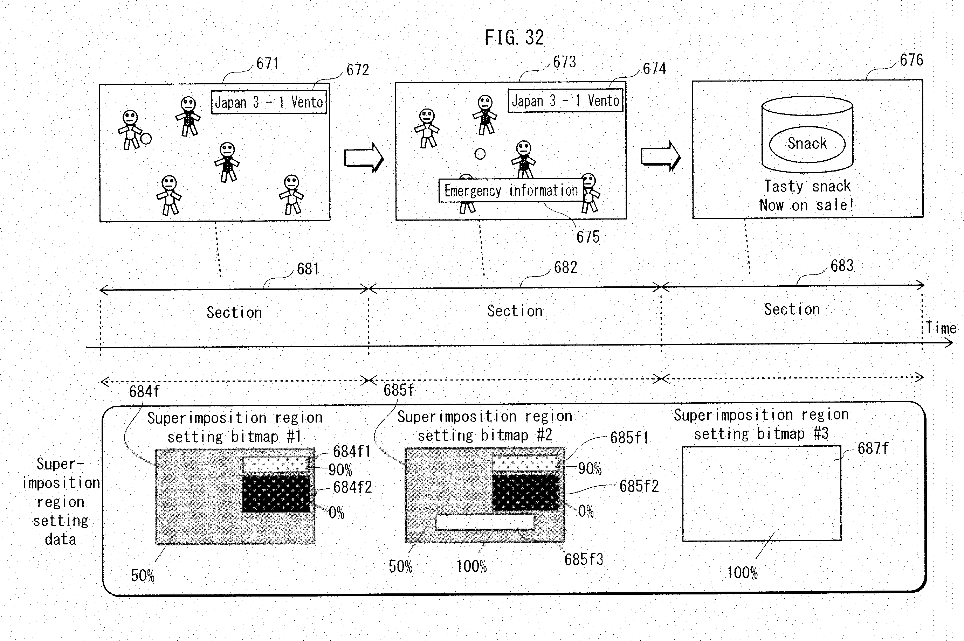

(6) As illustrated in FIG. 32, the superimposition region setting bitmap may be configured such that, in place of the attribute information "permitted" and "prohibited", transmittance of a superimposition plane may be set for each pixel within the superimposition region setting bitmap.

In the example shown in FIG. 32, in a superimposition region setting bitmap #2 685f, a region 685f1 corresponding to the score image 674 representing a score is set to have transmittance of "90%". A recommended region 685f2 is set to have transmittance of "0%". A region 685f3 for emergency information is set to have transmittance of "100%". The other region in which the superimposition is recommended is set to have transmittance of "50%". The transmittance of "100%" means completely transparent, and the transmittance of "0%" means completely non-transparent.

The superimposition region masking unit 405a performs the mask processing on the superimposition plane by using transmittance set on the superimposition region setting bitmap.

For example, a region whose transmittance is set to "90%" in the superimposition region setting bitmap is set to have original transmittance of "0%" in the superimposition plane. That is to say, a region set to be completely non-transparent is set to have transmittance of "90%". With such a structure, intentions of a broadcasting station can be reflected more closely.

(7) A percentage of a maximum size of a superimposition region on a screen may be specified in the superimposition region setting data. For example, if the superimposition region accounts for 60% of the entire screen in a case where the percentage is specified as 50% in the superimposition region setting data, the superimposition region is reduced so as to account for 50% of the entire screen and displayed. With such a structure, intentions of a broadcasting station can be reflected more closely.

(8) In addition to the attribute information "permitted" and "prohibited", the superimposition region setting bitmap may store therein information on a representative color of each of the permitted and prohibited regions. With such information, the superimposing unit 410a can appropriately set a color of characters to be superimposed by referring to the superimposition region setting bitmap. Furthermore, if two colors are used to display characters, the superimposing unit 410a can present the characters to users in an easy-to-understand manner against any background.

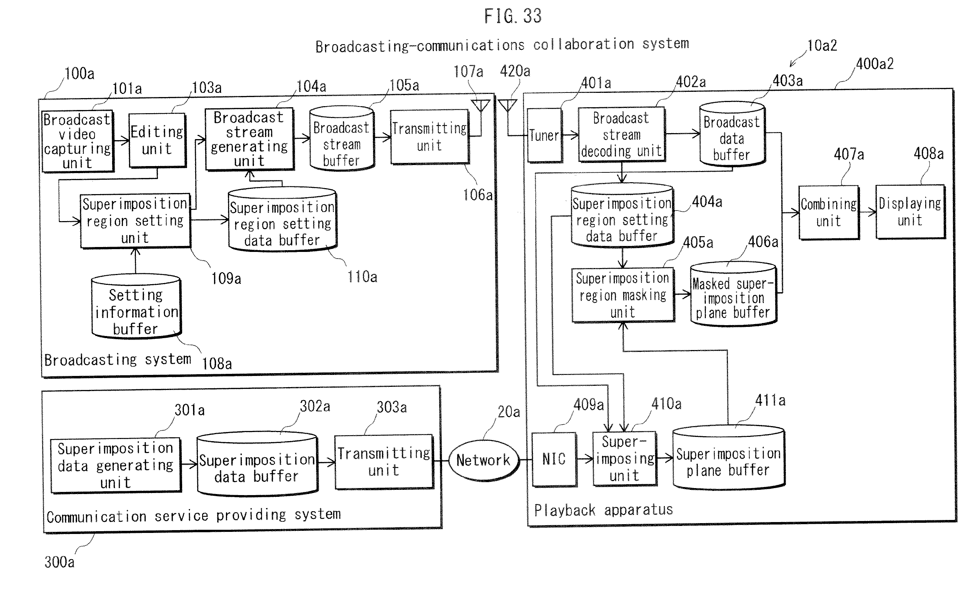

(9) As illustrated in FIG. 33, the superimposing unit 410a may be configured to refer to information on a video plane in addition to the superimposition region setting bitmap.

With such a structure, since the superimposing unit 410a can realize a background color, it is possible to generate the superimposition data in an appropriate color.

The superimposing unit 410a may specify a background image by recognizing a person in the video plane, and render the superimposition data against the background so as not to superimpose the superimposition data on the person's face.

(10) Flag information indicating a section in which emergency information is broadcast may be encoded and placed in a system packet (e.g. an SIT and an EIT) of a broadcast stream. In this case, when notified of the flag information by the broadcast stream decoding unit 402a, the superimposition region masking unit 405a may set the whole region on a frame to the prohibited region to perform the mask processing and output it to the superimposition plane.

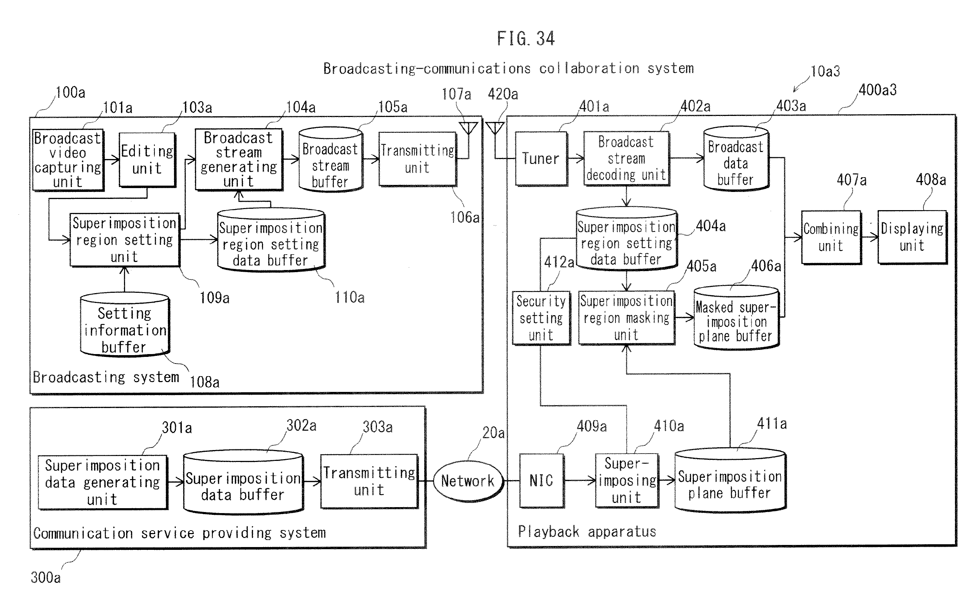

(11) As illustrated in FIG. 34, a playback apparatus 400a3 as another modification may further include a security setting unit 412a.

The superimposition region setting data may be encrypted using a key. The security setting unit 412a may decrypt the encrypted superimposition region setting data by setting a key for the superimposing unit 410a.

With such a structure, the superimposition region setting data is available only when the superimposition is performed, and use of the superimposition region setting data in the other applications can be prohibited.

A plurality of types of the superimposition region setting data may be prepared, and the security setting unit 412a may change the superimposition region setting data to be applied depending on the key or an ID for the superimposing unit 410a.

The key may be prepared for the playback apparatus such that the superimposition region setting data can be decrypted only by an authorized playback apparatus.

(12) In the above-mentioned examples, the broadcasting-communications collaboration system 10a is described to superimpose graphics. The function of the broadcasting-communications collaboration system 10a is not limited to the above. The broadcasting-communications collaboration system 10a is also applicable to a structure in which an additional video is displayed on a broadcast video as picture-in-picture. If the superimposing unit 410a is configured as a decoding unit for decoding an additional stream provided through communications, it is possible to support the structure in a similar manner.

The superimposing unit 410a acquires the additional video from the communication service providing system 300a via the network 20a.

### 3. Embodiment 3

The following describes a broadcasting-communications collaboration system 10b according to Embodiment 3 of the present invention with reference to the drawings.

The broadcasting-communications collaboration system 10a according to Embodiment 2 described above provides the service to superimpose additional information on a broadcast video. On the other hand, the broadcasting-communications collaboration system 10b provides a service to replace a broadcast audio with an additional audio or a service to combine the broadcast audio and the additional audio.

The broadcast audio is also referred to as a primary audio.

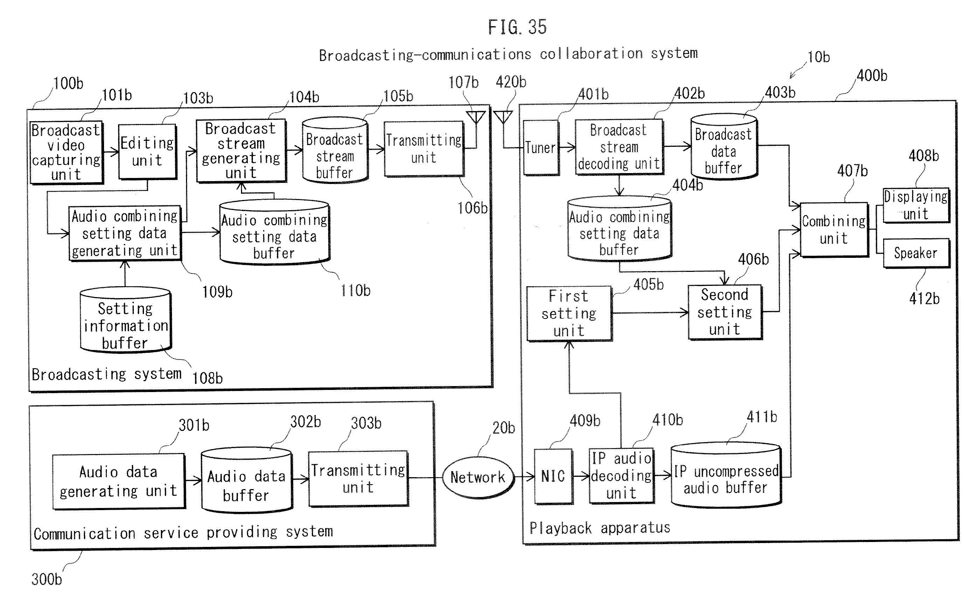

As illustrated in FIG. 35, the broadcasting-communications collaboration system 10b includes a broadcasting system 100b, a communication service providing system 300b, and a playback apparatus 400b.

### 3.1 Broadcasting System 100b

As illustrated in FIG. 35, the broadcasting system 100b includes a broadcast video capturing unit 101b, an editing unit 103b, a broadcast stream generating unit 104b, a broadcast stream buffer 105b, a transmitting unit 106b, an antenna 107b, a setting information buffer 108b, an audio combining setting data generating unit 109b, and an audio combining setting data buffer 110b.

The broadcasting system 100b has a similar structure to the broadcasting system 100a included in the broadcasting-communications collaboration system 10a. The broadcast video capturing unit 101b, the editing unit 103b, the broadcast stream buffer 105b, the transmitting unit 106b, and the antenna 107b have similar structures to the broadcast video capturing unit 101a, the editing unit 103a, the broadcast stream buffer 105a, the transmitting unit 106a, and the antenna 107a included in the broadcasting system 100a, respectively. The description of these units is thus omitted.

Differences from the broadcasting system 100a are mainly described below.

### (1) Setting Information Buffer 108b

The setting information buffer 108b includes, for example, a hard disk unit. The setting information buffer 108b stores therein the setting information.

The setting information indicates, for each type of a scene constituting the broadcast video and audio, how an additional audio is to be superimposed. Specifically, the setting information includes a superimposition flag corresponding to the type of a scene.

For example, scenes constituting the video and audio to be distributed by broadcast are classified into type 1, type 2, and type 3 scenes described below.

The type 1 scene includes only the video and audio captured by the broadcast video capturing unit 101b. The type 1 scene is, for example, a scene including only the video and audio constituting a normal soccer game live.

The type 2 scene includes, in addition to the video and audio captured by the broadcast video capturing unit 101b, a message image showing important information and superimposed on the video. The type 2 scene is, for example, a scene of a normal soccer game live on which a message image showing "emergency information" has been superimposed.

The type 3 scene is a scene including only the video and audio constituting a commercial.

In the case of the type 1 scene, the setting information includes a superimposition flag "0". In the case of the type 2 scene, the setting information includes a superimposition flag "1". In the case of the type 3 scene, the setting information includes a superimposition flag "2".

The superimposition flag "0" indicates that replacement of an audio included in the corresponding type 1 scene with the additional audio and combination of the audio included in the corresponding type 1 scene with the additional audio are permitted. In the case where the audio included in the corresponding type I scene is combined with the additional audio, the superimposition flag "0" indicates that combining with a mixing coefficient of the additional audio of up to 100% is permitted. In other words, the superimposition flag "0" indicates that combining with a percentage of the additional audio of up to 100% is permitted.

The superimposition flag "1" indicates that replacement of an audio included in the corresponding type 2 scene with the additional audio is prohibited. In the case where the audio included in the corresponding type 2 scene is combined with the additional audio, the superimposition flag "1" indicates that combining with the mixing coefficient of the additional audio of up to 50% is permitted. In other words, the superimposition flag "1" indicates that combining with a percentage of the additional audio of up to 50% is permitted.

The superimposition flag "2" indicates that replacement of an audio included in the corresponding type 3 scene with the additional audio and combination of the audio included in the corresponding type 3 scene with the additional audio are prohibited.

### (2) Audio Combining Setting Data Buffer 110b

The audio combining setting data buffer 110b includes, for example, a hard disk unit. The audio combining setting data buffer 110b has an area for storing therein the audio combining setting data.

As described later, the audio combining setting data includes a replacement flag and combining setting information for each scene constituting the video and audio.

The replacement flag indicates whether replacement of the audio included in each scene with the additional audio is permitted or prohibited.

In the case where the audio included in each scene is combined with the additional audio, the combining setting information indicates the mixing coefficient of the additional audio. In other words, the combining setting information indicates a percentage of the additional audio. For example, in the case of the mixing coefficient of up to 100%, combining with the mixing coefficient of the additional audio of up to 100% is permitted when the audio included in the scene is combined with the additional audio. In the case of the mixing coefficient of up to 50%, combining with the mixing coefficient of the additional audio of up to 50% is permitted when the audio included in the scene is combined with the additional audio. In the case of the mixing coefficient of 0%, combining of the audio included in the scene with the additional audio is prohibited.

### (3) Audio Combining Setting Data Generating Unit 109b

The audio combining setting data generating unit 109b generates the audio combining setting data for audio data generated by the editing unit 103b as described below.

The audio combining setting data generating unit 109b reads the setting information from the setting information buffer 108b. The audio combining setting data generating unit 109b then determines whether a type of each scene constituting the received video and audio is the type 1, the type 2, or the type 3. The audio combining setting data generating unit 109b then extracts a superimposition flag corresponding to the determined type from the setting information. The audio combining setting data generating unit 109b then generates the audio combining setting data for the scene according to the extracted superimposition flag.

Specifically, when the superimposition flag is "0", the audio combining setting data generating unit 109b generates the audio combining setting data including the replacement flag and the combining setting information for the scene. In this case, the replacement flag indicates that replacement with an additional audio is permitted. The combining setting information indicates that combining with the mixing coefficient of up to 100% is permitted.

When the superimposition flag is "1", the audio combining setting data generating unit 109b generates the audio combining setting data including the replacement flag and the combining setting information for the scene. In this case, the replacement flag indicates that replacement with an additional audio is prohibited. The combining setting information indicates that combining with the mixing coefficient of up to 50% is permitted.

When the superimposition flag is "2", the audio combining setting data generating unit 109b generates the audio combining setting data including the replacement flag and the combining setting information for the scene. In this case, the replacement flag indicates that replacement with an additional audio is prohibited. The combining setting information indicates that combining is prohibited.

The audio combining setting data generating unit 109b then writes the generated audio combining setting data into the audio combining setting data buffer 110b.

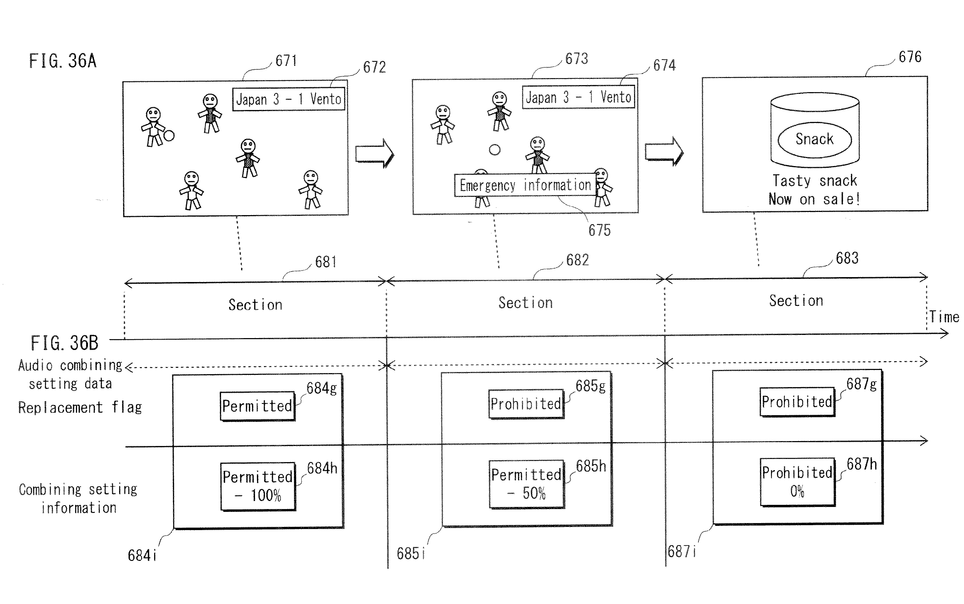

FIGs. 36A and 36B illustrate examples of setting of how to combine audios. FIG 36A illustrates a transition of a scene along a playback time axis. The following describes an example of the audio combining setting data for each scene shown in FIG 36A.

A scene 671 in the section 681 is a scene of a normal soccer game live. A scene 673 in the section 682 is a scene of a soccer game live on which a message image showing emergency information has been superimposed. A scene 676 in the section 683 is a scene of a commercial.

As described above, the audio combining setting data includes the replacement flag indicating whether replacement of an audio is pennitted or prohibited. For example, in the section 681, the replacement flag is set to "permitted" 684g. On the other hand, in the sections 682 and 683, the replacement flag is set to "prohibited" 685g and "prohibited" 687g, respectively.

As described above, the audio combining setting data includes the combining setting information indicating whether combining of audios is permitted or prohibited, and, when combining is permitted, an upper limit of the mixing coefficient.

In the example shown in FIGs. 36A and 36B, the combining setting information indicates that, for the scene 671 in the section 681, combining of audios is permitted and combining with a percentage of an additional audio of up to 100% is permitted. The combining setting information indicates that, for the scene 673 in the section 682, combining of audios is permitted but a percentage of an additional audio is limited to up to 50%. The combining setting information indicates that, for the scene 676 in the section 683, combining of audios is prohibited.

### (4) Broadcast Stream Generating Unit 104b

The broadcast stream generating unit 104b converts contents of the video and audio edited by the editing unit 103b into a broadcast stream in a format enabling transmission by broadcast. The broadcast stream generating unit 104b then writes the broadcast stream into the broadcast stream buffer 105b.

In this case, the broadcast stream generating unit 104b generates the broadcast stream based on the video and audio data generated by the editing unit 103b. The broadcast stream generating unit 104b also reads the audio combining setting data from the audio combining setting data buffer 110b, and embeds the read audio combining setting data in the broadcast stream.

The audio combining setting data is stored in the video stream and the audio stream multiplexed into the broadcast stream and a descriptor in a PMT, an SIT, and the like. When stored in the video stream, the audio combining setting data may be stored in the supplementary data for each frame.

The audio combining setting data may be stored only in an access unit at the top of a GOP so that the audio combining setting data is effective before the top of the next GOP.

When stored in the audio stream, the audio combining setting data is stored in a user data area.

When stored in a descriptor, the audio combining setting data may be recorded along with time information, such as a PTS indicating a start time or an end time of a section during which the audio combining setting data is effective.

The audio combining setting data may be configured to be assigned with a PID and multiplexed as a separate stream.

### 3.2 Communication Service Providing System 300b

As illustrated in FIG. 35, the communication service providing system 300b includes an audio data generating unit 301b, an audio data buffer 302b, and a transmitting unit 303b.

The audio data generating unit 301b converts audio data into audio data in an audio format such as AC3, AAC, and MP3. The audio data generating unit 301b then writes the generated audio data into the audio data buffer 302b.

The transmitting unit 303b reads the audio data from the audio data buffer 302b. The transmitting unit 303b transmits, via a network 20b, the read audio data to the playback apparatus 400b provided in each home.

### 3.3 Playback Apparatus 400b

As illustrated in FIG. 35, the playback apparatus 400b includes a tuner 401b, a broadcast stream decoding unit 402b, a broadcast data buffer 403b, an audio combining setting data buffer 404b, a first setting unit 405b, a second setting unit 406b, a combining unit 407b, a displaying unit 408b, an NIC 409b, an IP audio decoding unit 410b, an IP uncompressed audio buffer 411b, and a speaker 412b. An antenna 420b is connected to the tuner 401b.

The playback apparatus 400b has a similar structure to the playback apparatus 400a. The antenna 420b, the tuner 401b, the broadcast stream decoding unit 402b, the broadcast data buffer 403b, the displaying unit 408b, and the NIC 409b have similar structures to the antenna 420a, the tuner 401a, the broadcast stream decoding unit 402a, the broadcast data buffer 403a, the displaying unit 408a, and the NIC 409a included in the playback apparatus 400a, respectively. The description of these units is thus omitted.

Differences from the playback apparatus 400a are mainly described below.

### (1) Buffer

The broadcast data butter 403b includes, for example, semiconductor memory. The broadcast data buffer 403b has an area for storing therein a video plane decoded by the broadcast stream decoding unit 402b. The broadcast data buffer 403b also has an area for storing therein a broadcast uncompressed audio decoded by the broadcast stream decoding unit 402b.

The audio combining setting data buffer 404b includes, for example, semiconductor memory. The audio combining setting data buffer 404b has an area for storing therein the audio combining setting data.

The IP uncompressed audio buffer 411b includes, for example, semiconductor memory. The IP uncompressed audio buffer 411b has an area for storing therein an IP uncompressed audio.

### (2) Broadcast Stream Decoding Unit 402b

The broadcast stream decoding unit 402b receives the broadcast stream from the tuner 401b. The broadcast stream decoding unit 402b then decodes the broadcast stream at a timing shown by the PTS to separate a video plane, and writes the video plane into the broadcast data buffer 403b. The broadcast stream decoding unit 402b also separates the broadcast uncompressed audio, and writes the broadcast uncompressed audio into the broadcast data buffer 403b. The broadcast stream decoding unit 402b further separates the audio combining setting data, and writes the audio combining setting data into the audio combining setting data buffer 404b.

### (3) IP Audio Decoding Unit 410b

The IP audio decoding unit 410b receives the audio data and IP combining instruction information from the communication service providing system 300b via the network 20b and the NIC 409b. The IP audio decoding unit 410b then decodes the received audio data to generate an IP uncompressed audio, and writes the generated IP uncompressed audio into the IP uncompressed audio buffer 411b.

The IP combining instruction information indicates a method for combining the IP uncompressed audio and the broadcast uncompressed audio. In other words, the IP combining instruction information indicates how to combine the IP uncompressed audio and the broadcast uncompressed audio. Examples of the combining method are: a method of using the broadcast uncompressed audio, which has been received by broadcast, as it is; a method of using the IP uncompressed audio, which has been received via the network, as it is; and a method of mixing the broadcast uncompressed audio and the IP uncompressed audio so that a ratio of the broadcast uncompressed audio and the IP uncompressed audio is 1:1 and playing back an audio resulting from the mixing.

The IP combining instruction information includes the replacement flag and the combining setting information. The replacement flag and the combining setting information are respectively the same as the replacement flag and the combining setting information included in the audio combining setting data.

The IP audio decoding unit 410b also outputs the IP combining instruction information for audio to the first setting unit 405b. The IP audio decoding unit 410b outputs the IP combining instruction information by using an API of the application, for example.

The IP combining instruction information may be embedded in the audio data received from the communication service providing system 300b. In this case, the IP audio decoding unit 410b extracts the IP combining instruction information from the audio data.

### (5) First Setting Unit 405b

The first setting unit 405b receives the IP combining instruction information from the IP audio decoding unit 410b. Upon reception of the IP combining instruction information, the first setting unit 405b outputs the received IP combining instruction information to the second setting unit 406b.

### (6) Second Setting Unit 406b

The second setting unit 406b receives the IP combining instruction information from the first setting unit 405b.

The second setting unit 406b also reads the audio combining setting data from the audio combining setting data buffer 404b. The second setting unit 406b then extracts, from the read audio combining setting data, an instruction for audio combining corresponding to the PTS of the broadcast uncompressed audio.

The second setting unit 406b then determines the instruction for audio combining so that the instruction for audio combining extracted from the audio combining setting data is given priority over the IP combining instruction information received from the first setting unit 405b.

The second setting unit 406b then outputs the audio combining setting data or the IP combining instruction information to the combining unit 407b.

Specifically, as illustrated in FIGs. 36A and 36B, for the scene 671 in the section 681, combining of audios and replacement of an audio are permitted. The second setting unit 406b therefore outputs the IP combining instruction information received from the first setting unit 405b as it is to the combining unit 407b.

For the scene 673 in the section 682, replacement of an audio is prohibited and combining of audios with the mixing coefficient of up to 50% is permitted. When the combining method indicated by the IP combining instruction information received from the first setting unit 405b is "replacement", the second setting unit 406b outputs the audio combining setting data to the combining unit 407b so that replacement is prohibited and the broadcast uncompressed audio is used as it is. Alternatively, the second setting unit 406b outputs the audio combining setting data to the combining unit 407b so that the broadcast uncompressed audio and the IP uncompressed audio are combined with a percentage of the IP uncompressed audio of 50% or lower.

For the scene 676 in the section 683, replacement of an audio and combining of audios are both prohibited. When the combining method indicated by the IP combining instruction information received from the first setting unit 405b is "replacement", the second setting unit 406b outputs the audio combining setting data to the combining unit 407b so that replacement is prohibited and the broadcast uncompressed audio is used as it is.

### (7) Combining Unit 407b

The combining unit 407b receives the audio combining setting data or the IP combining instruction information from the second setting unit 406b. The setting of the combining method is provided according to an instruction of the received audio combining setting data or IP combining instruction information.

The combining unit 407b also reads the broadcast uncompressed audio from the broadcast data buffer 403b. The combining unit 407b also reads the IP uncompressed audio from the IP uncompressed audio buffer 411b.

The combining unit 407b then mixes the broadcast uncompressed audio and the IP uncompressed audio according to the set combining method to generate a composite audio, and outputs the generated composite audio to the speaker 412b.

### (8) Speaker 412b

The speaker 412b receives the composite audio from the combining unit 407b. The speaker 412b outputs the received composite audio as a sound.

### 3.4 Operation of Broadcasting-communications Collaboration System 10b

The following describes operations of the broadcasting system 100b and the playback apparatus 400b included in the broadcasting-communications collaboration system 10b.

### (1) Operation of Broadcasting System 100b

The operation of the broadcasting system 100b is similar to that of the broadcasting system 100a shown in FIG. 20. Differences therebetween are as follows.

In the broadcasting system 100a, the superimposition region setting unit 109a generates the superimposition region setting data in step S112 of the flow chart shown in FIG. 20.

On the other hand, in the broadcasting system 100b, the audio combining setting data generating unit 109b generates the audio combining setting data in step S112 of the flow chart shown in FIG. 20.

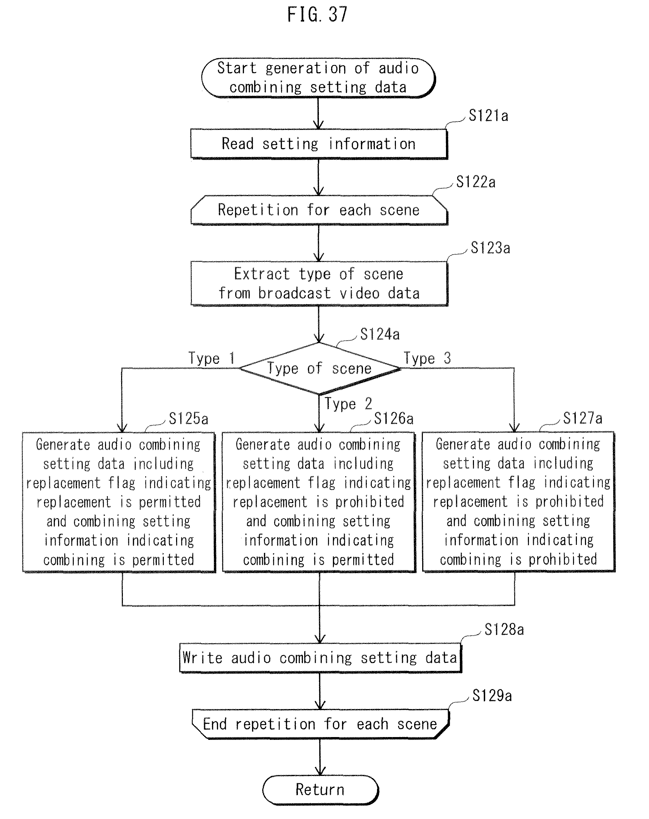

Procedures for generating the audio combining setting data are described below with use of a flow chart shown in FIG. 37.

The audio combining setting data generating unit 109b reads the setting information from the setting information buffer 108b (step S121a). The audio combining setting data generating unit 109b then repeats the following steps S123a to S128a for each scene of broadcast video data (steps S122a to S129a).

The audio combining setting data generating unit 109b extracts a type of each scene of the broadcast video data (step S123a). The audio combining setting data generating unit 109b then determines the extracted type of each scene (step S124a).

When determining that the type is the type 1 ("type 1" in step S124a), the audio combining setting data generating unit 109b generates the audio combining setting data including a replacement flag indicating that replacement is permitted and combining setting information indicating that combining is permitted (step S125a). When determining that the type is the type 2 ("type 2" in step S124a), the audio combining setting data generating unit 109b generates the audio combining setting data including a replacement flag indicating that replacement is prohibited and combining setting information indicating that combining is permitted. In this case, the combining setting information includes information indicating that the percentage of the combined audio is 50% or lower (step S126a). When determining that the type is the type 3 ("type 3" in step S124a), the audio combining setting data generating unit 109b generates the audio combining setting data including a replacement flag indicating that replacement is prohibited and combining setting information indicating that combining is prohibited (step S127a). The audio combining setting data generating unit 109b then writes the generated audio combining setting data into the audio combining setting data buffer 110b (step S124a).

### (2) Operation of Playback Apparatus 400b

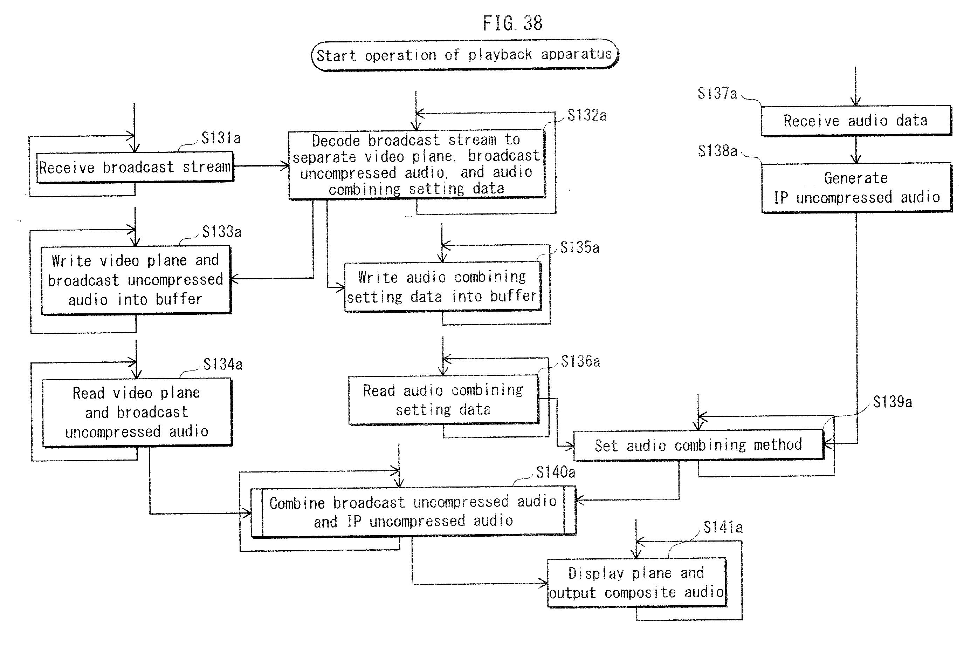

The operation of the playback apparatus 400b is described with use of a sequence diagram shown in FIG. 38.

The antenna 420b repeats reception of broadcasts, and the tuner 401b repeats selection of broadcast streams from the broadcasts and demodulation of the selected broadcast streams (step S131a).

The broadcast stream decoding unit 402b repeats decoding of the broadcast streams to separate video planes, broadcast uncompressed audios, and audio combining setting data from the broadcast streams (step S132a).

The broadcast stream decoding unit 402b repeats writing of the video planes and the broadcast uncompressed audios into the broadcast data buffer 403b (step S133a).

The broadcast stream decoding unit 402b repeats writing of the audio combining setting data into the audio combining setting data buffer 404b (step S135a).

The NIC 409b receives the audio data and the IP combing instruction information from the communication service providing system 300b via the network 20b (step S137a).

The IP audio decoding unit 410b generates the IP uncompressed audio from the audio data (step S138a).

The second setting unit 406b reads the audio combining setting data from the audio combining setting data buffer 404b (step S136a).

The first setting unit 405b then outputs the IP combining instruction information to the second setting unit 406b, and the second setting unit 406b provides setting of an audio combining method for the combining unit 407b (step S139a).

The combining unit 407b then repeats reading of the video planes and the broadcast uncompressed audios from the broadcast data buffer 403a (step S134a). The combining unit 407b then repeats generation of the composite audios by combining the broadcast uncompressed audios and the IP uncompressed audios (step S140a).

The displaying unit 408b repeats displaying of the video planes, and the speaker 412b repeats outputting of the composite audios (step S141a).

### (3) Audio Combining Operation of Playback Apparatus 400b

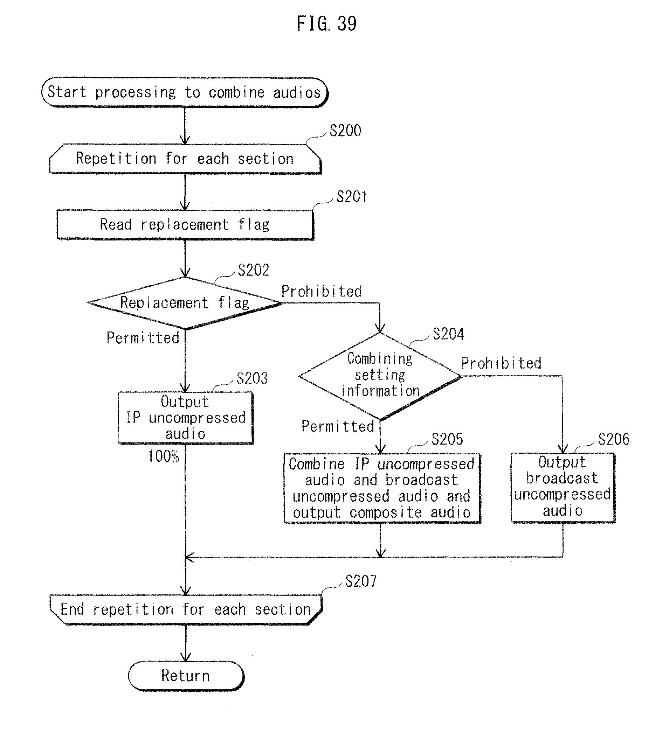

The audio combining operation of the playback apparatus 400b is described with use of a flow chart shown in FIG. 39. The procedures correspond to details of step S140a shown in FIG. 38.

The combining unit 407b repeats the following steps S201 to S206 for each scene in a section (steps S200 to S207).

The combining unit 407b reads the replacement flag included in the audio combining setting data (step S201).

The combining unit 407b determines whether the read replacement flag indicates that replacement is permitted or prohibited (step S202).

When determining that the read replacement flag indicates replacement is permitted ("permitted" in step S202), the combining unit 407b outputs the IP uncompressed audio (step S203).

When determining that the read replacement flag indicates replacement is prohibited ("prohibited" in step S202), the combining unit 407b determines whether the combining setting information indicates that combining is permitted or prohibited (step S204).

When determining that the combining setting information indicates combining is permitted ("permitted" in step S204), the combining unit 407b combines the IP uncompressed audio and the broadcast uncompressed audio according to the percentage indicated by the combining setting information, and outputs the composite audio (step S205).

When determining that the combining setting information indicates combining is prohibited ("prohibited" in step S204), the combining unit 407b outputs the broadcast uncompressed audio (step S206).

### 3.5 Summary

As described above, a communication service provider provides IP audios via the network. In this case, the playback apparatus can output the broadcast audios received by broadcast and the IP audios received via the network while switching therebetween. The playback apparatus can output audios by combining the broadcast audios and the IP audios. For example, the communication service provider distributes its own commentary on a broadcast soccer game live as IP audios via the network. In this case, the playback apparatus can output the commentary during a normal soccer game live, and output the broadcast audios during a player-of-the-game interview.

The broadcasting station, however, has such a problem that the IP audios are combined with emergency broadcast audios and CM audios.

The broadcasting-communications collaboration system 10b solves such a problem.

The broadcasting-communications collaboration system 10b can control processing to combine IP audios so that the IP audios are not combined with or do not replace the emergency broadcast audios and the CM audios, according to the wishes of a broadcasting station.

### 4. Embodiment 4

The following describes a broadcasting-communications collaboration system 10c according to Embodiment 4 of the present invention with reference to the drawings.

As described in Background Art, under such circumstance that various services are offered, it is desirable to further provide a new service to combine broadcasting and communications.

In response to this, the broadcasting-communications collaboration system 10c aims to provide the new service to combine broadcasting and communications.

According to the broadcasting-communications collaboration system 10c, it is possible to provide the new service to combine broadcasting and communications, as described below.

### (1) Broadcasting-communications Collaboration System 10c

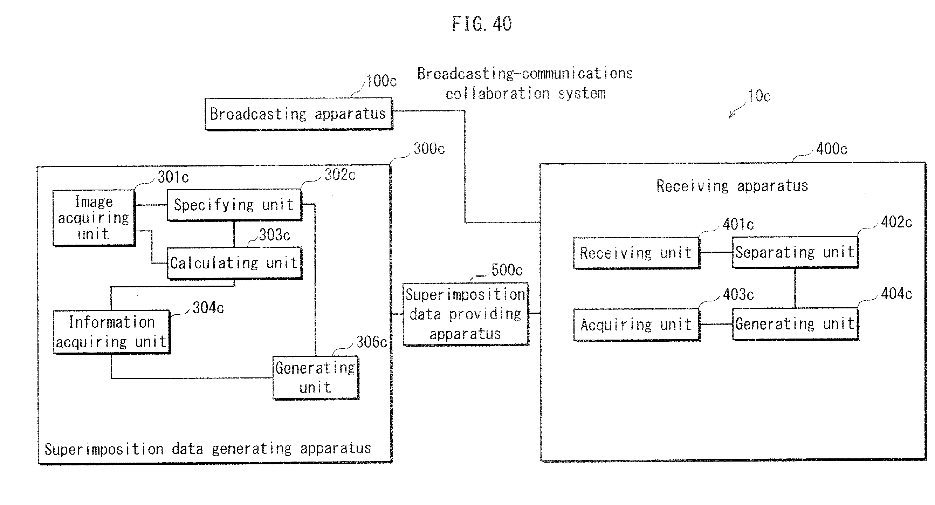

As illustrated in FIG. 40, the broadcasting-communications collaboration system 10c includes a broadcasting apparatus 100c, a superimposition data generating apparatus 300c, a superimposition data providing apparatus 500c, and a receiving apparatus 400c.

The broadcasting apparatus 100c includes a transmitting unit that transmits, by broadcast, broadcast data including a video frame image captured by a camera.

The superimposition data generating apparatus 300c generates superimposition data based on which a superimposition frame image to be superimposed on the video frame image is generated. The superimposition data generating apparatus 300c includes: an image acquiring unit 301c configured to acquire the video frame image; a specifying unit 302c configured to specify a primary object included in the video frame image; a calculating unit 303c configured to calculate a position of the primary object in the video frame image; an information acquiring unit 304c configured to acquire object information pertaining to the primary object; and a generating unit 306c configured to determine a placement position of an auxiliary image representing the object information based on the calculated position of the primary object, and generate superimposition data including the object information and placement position information indicating the placement position of the auxiliary image.

The superimposition data providing apparatus 500c includes a transmitting unit that acquires the superimposition data from the superimposition data generating apparatus 300c, and transmits the acquired superimposition data via the network.

The receiving apparatus 400c combines the video frame image and the superimposition frame image. The receiving apparatus 400c includes: a receiving unit 401c configured to receive the broadcast data including the video frame image; a separating unit 402c configured to separate the video frame image from the broadcast data; an acquiring unit 403c configured to acquire superimposition data including object information pertaining to an object included in the video frame image and position information indicating a position close to a position of the object in the frame image; a generating unit 404c configured to generate an auxiliary image representing the object information, and places the auxiliary image at a position indicated by the position information in a frame image corresponding to the video frame image to generate the superimposition frame image; and a combining unit 405c configured to generate a composite frame image by combining the video frame image and the superimposition frame image.

According to the aspect, it is possible to generate the superimposition data including the placement position of the auxiliary image representing the object information pertaining to the primary object, so that the auxiliary image can be played back along with the primary object at the time of playing back the video frame image. By combining the primary object and the auxiliary image, it is possible to provide the object information pertaining to the primary object for viewers at the time of playing back the video frame image.

(2) The generating unit 306c may determine the placement position so that the primary object and the auxiliary image do not overlap each other in the video frame image.

According to the aspect, since the placement position is determined so that the primary object and the auxiliary image do not overlap each other at the time of playing back the video frame image, it is possible to generate the superimposition data so as to prevent such a situation that the primary object cannot be viewed.

(3) When a plurality of primary objects are specified in the video frame image, the generating unit 306c may classify the plurality of primary objects into a plurality of groups, and may change a method for determining the placement position depending on a group.

According to the aspect, since the method for determining the placement position is changed depending on the group, it is possible to generate the superimposition data so that the groups are distinguished from one another at the time of playing back the video frame image.

(4) When the plurality of primary objects specified in the video frame image are classified into two groups, the generating unit 306c may determine the placement position so that auxiliary images for respective one or more primary objects belonging to a first group are placed so as to be on first sides of the respective primary objects belonging to the first group, and the auxiliary images for respective one or more primary objects belonging to a second group are placed so as to be on second sides, opposite the first sides, of the respective primary objects belonging to the second group.

According to the aspect, it is possible to generate the superimposition data so that the two groups are distinguished from each other at the time of playing back the video frame image.

(5) The information acquiring unit 304c may extract attribute information pertaining to an object from the acquired object information, and the generating unit 306c may determine a background color of the auxiliary image according to the extracted attribute information and include the determined background color in the superimposition data.

According to the aspect, it is possible to generate the superimposition data including the determined background color so that the auxiliary image is distinguished by the background color at the time of playing back the video frame image.

(6) The specifying unit 302c may further extract one core object from the video frame image, the calculating unit 303c may further calculate a position of the core object in the video frame image, and the generating unit 306c may determine the placement position of the auxiliary image based on the calculated position of the core object so that the auxiliary image and the core object do not overlap each other.

According to the aspect, it is possible to generate the superimposition data so that the core object and the auxiliary image do not overlap each other at the time of playing back the video frame image.

(7) The generating unit 306c may determine the placement position so that the auxiliary image is placed opposite a direction from the primary object toward the core object.

According to the aspect, it is possible to generate the superimposition data so that the core object and the auxiliary image do not overlap each other at the time of playing back the video frame image.

(8) The generating unit 306c may extract an attention object from among a plurality of primary objects, generate emphasis information indicating that the auxiliary image for the attention object is to be emphasized, and include the generated emphasis information in the superimposition data.

According to the aspect, it is possible to generate the superimposition data so that the attention object is emphasized at the time of playing back the video frame image.

(9) The generating unit 306c may generate instruction information indicating that the auxiliary image for the attention object is to be enlarged or lighted up compared to the other auxiliary images, and include the generated instruction information in the superimposition data.

According to the aspect, it is possible to generate the superimposition data so that the attention object is emphasized at the time of playing back the video frame image.

(10) The specifying unit 302c may extract one core object from the video frame image, and specify a primary object closest to the extracted core object as the attention object.

According to the aspect, it is possible to generate the superimposition data so that the attention object that is the primary object closest to the core object is emphasized at the time of playing back the video frame image.

(11) The superimposition data generating apparatus may further include (i) a data acquiring unit configured to acquire commentary data indicating commentary and subtitle data indicating subtitles for the video frame image, and (ii) an identifier extracting unit configured to extract an identifier identifying a primary object, and the specifying unit 302c may specify the primary object pertaining to the extracted identifier as the attention object.

According to the aspect, it is possible to generate the superimposition data so that the attention object appearing in the commentary data and the subtitle data is emphasized at the time of playing back the video frame image.

### 5. Embodiment 5

The following describes a broadcasting-communications collaboration system 10d according to Embodiment 5 of the present invention with reference to the drawings.

As described in Background Art, under such circumstance that various services are offered, it is desirable to further provide a new service to combine broadcasting and communications.

In response to this, the broadcasting-communications collaboration system 10d aims to provide the new service to combine broadcasting and communications.

According to the broadcasting-communications collaboration system 10d, it is possible to provide the new service to combine broadcasting and communications, as described below.

The broadcasting-communications collaboration system 10d provides a service to superimpose additional information on a broadcast video. For example, in sports broadcasting, such as a soccer game live, the broadcasting-communications collaboration system 10d superimposes additional information on an image of a player moving in a video so that the additional information follows the moving image. Hereinafter, the image of a player is also simply referred to as a player image. The player image is also referred to as a primary object.

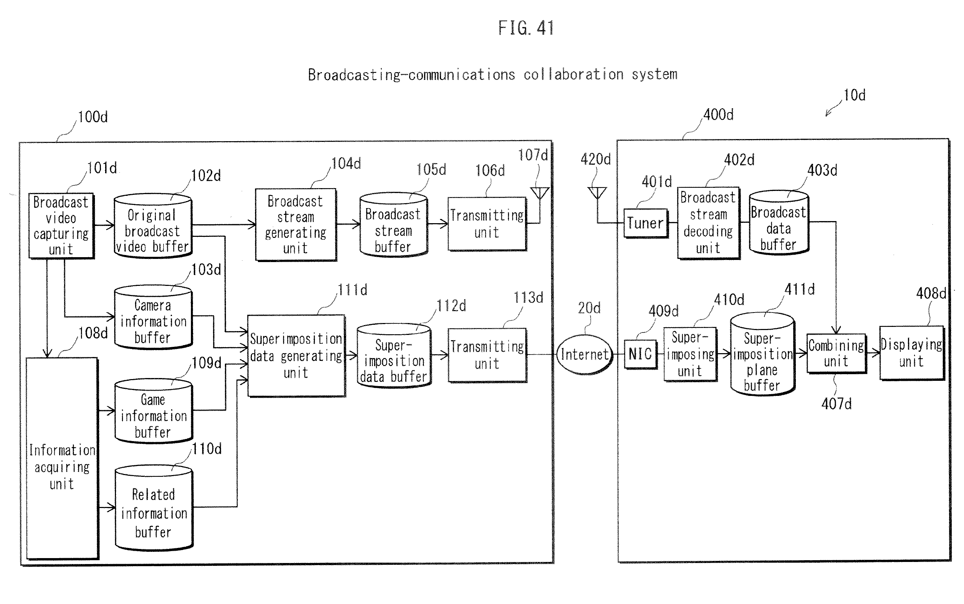

As illustrated in FIG. 41, the broadcasting-communications collaboration system 10d includes a broadcasting system 100d and a playback apparatus 400d.

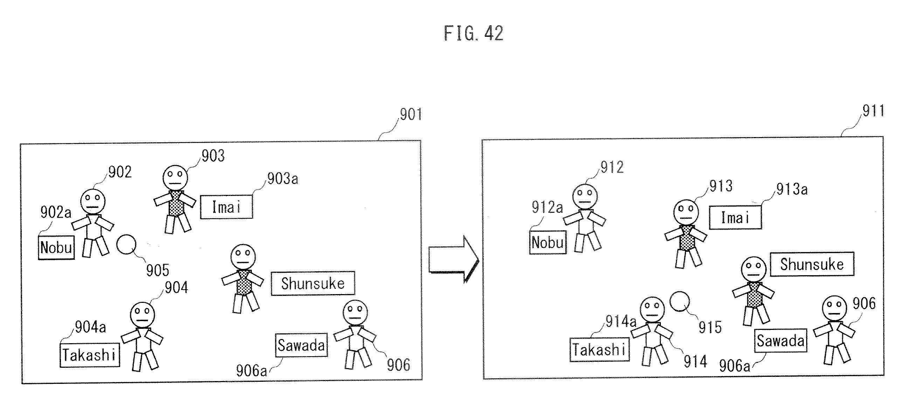

A service provided by the broadcasting-communications collaboration system 10d is described with use of FIG. 42. FIG. 42 illustrates video planes 901 and 911 in a broadcast video of a soccer game live. The video plane 911 is a video plane broadcast approximately one second after broadcast of the video plane 901.

The video plane 901 includes a ball image 905 representing a ball, and player images 902, 903, 904, ... representing respective players. A label image 902a is placed close to the player image 902. The label image 902a shows a name of a player represented by the player image 902. Similar to the player image 902, label images 903a, 904a, ... are respectively placed close to the player images 903, 904, .... The label images 903a, 904a, ... show names of respective players.

Hereinafter, the label image is also referred to as an auxiliary image. The ball image is also referred to as a core object.

Similar to the video plane 901, the video plane 911 includes a ball image 915 representing a ball, and player images 912, 913, 914, ... representing respective players. Label images 912a, 913a, 914a, ... are respectively placed close to the player images 912, 913, 914, ....

As described above, in the service provided by the broadcasting-communications collaboration system 10d, label images are placed close to respective player images so that the label images follow move of the respective player images in each video plane being broadcast.

By placing the label images showing respective label information pieces, such as names, so that the label images follow the respective player images, viewers can understand a sports game being broadcast more easily.

### 5.1 Broadcasting System 100d

As illustrated in FIG. 41, the broadcasting system 100d includes a broadcast video capturing unit 101d, an original broadcast video buffer 102d, a camera information buffer 103d, a broadcast stream generating unit 104d, a broadcast stream buffer 105d, a transmitting unit 106d, an antenna 107d, an information acquiring unit 108d, a game information buffer 109d, a related information buffer 110d, a superimposition data generating unit 111d, a superimposition data buffer 112d, and a transmitting unit 113d.

### (1) Broadcast Video Capturing Unit 101d

The broadcast video capturing unit 101d is, for example, a video camera recorder. The broadcast video capturing unit 101d captures and records a video including an object, and records an audio. The broadcast video capturing unit 101d includes a GPS and a gyro sensor so that camera information including a position, an angle, a direction, and a zoom level of a camera is detected and output. The broadcast video capturing unit 101d also writes the video and audio into the original broadcast video buffer 102d, and writes the camera information into the camera information buffer 103d. The broadcast video capturing unit 101d also outputs the video and audio as well as the camera information to the information acquiring unit 108d.

As the broadcast video capturing unit 101d, the broadcasting system 100d may include two or more video camera recorders. One of the video camera recorders is a high-angle camera provided to look down at the whole court in which a game is played. The high-angle camera captures an image of the whole court. Another one of the cameras is a broadcast camera for capturing images of players moving around in the court. The broadcasting system 100d may further include many other high-angle cameras and broadcast cameras.

### (2) Broadcast Stream Generating Unit 104d

Similar to the broadcast stream generating unit 104a, the broadcast stream generating unit 104d converts the video and audio stored in the original broadcast video buffer 102d into a broadcast stream in a format enabling transmission by broadcast. The broadcast stream generating unit 104d then writes the broadcast stream into the broadcast stream buffer 105d.

### (3) Transmitting Unit 106d

Similar to the transmitting unit 106a, the transmitting unit 106d reads the broadcast stream from the broadcast stream buffer 105d, and transmits the read broadcast stream via the antenna 107d by broadcast.

### (4) Information Acquiring Unit 108d

The information acquiring unit 108d acquires object information in sports broadcasting in real time as described below, and outputs the acquired object information.

For example, the information acquiring unit 108d acquires information on players and a ball in the court, and outputs the acquired information. The information acquiring unit 108d also outputs player information related to the game (e.g. a distance traveled, a path traveled, a play time in a game, a running speed, and the number of yellow cards of each player).

The information acquiring unit 108d holds a database. The database includes a player information table, a player image table, a game information table, and a team information table.

The player information table includes a plurality of player information pieces. The plurality of player information pieces correspond to respective players joining the game to be broadcast. Each of the player information pieces includes a player ID for identifying a corresponding player, a name of the player, a team ID for identifying a team to which the player belongs, a position where the player plays, a uniform number of the player, the player's hobbies, career statistics of the player, and comments from the player.

The player image table includes a plurality of player image information pieces. The plurality of player image information pieces correspond to respective players joining the game. Each of the player image information pieces includes the player ID for identifying each player, a photograph of the player's face, an image of a uniform that the player wears, an image of the uniform number of the player, and a physical image of the player.

The game information table includes game information related to the game to be broadcast. The game information includes a start time of the game, team IDs for identifying two teams competing in the game, and a direction toward a goal of each team.

The team information table includes team information for each of the two teams competing in the game. The team information includes a team ID for identifying the team, a name of the team, and player IDs for identifying players belonging to the team.

The information acquiring unit 108d acquires the player information table, the game information table, and the team information table from the database. The information acquiring unit 108d then writes the acquired player information table, game information table, and team information table into the related information buffer 110d.

The information acquiring unit 108d specifies a position of the ball in the court by using a 2D image captured, from a high angle, by the high-angle camera for capturing an image of the whole court. The information acquiring unit 108d then writes the specified position of the ball into the game information buffer 109d as the game information.

The information acquiring unit 108d also performs pattern matching to determine whether any of a photograph of each player's face, an image of a uniform that the player wears, an image of the uniform number of the player, and a physical image of the player stored in the player image table included in the database matches a local image included in the image captured from a high angle. When any of the images matches the local image included in the image captured from a high angle, the information acquiring unit 108d acquires a player ID included in the player image information including the matching image. In the above-mentioned manner, the information acquiring unit 108d specifies a player from a player image included in the image captured from a high angle, and acquires a player ID for identifying the specified player.

The information acquiring unit 108d then acquires the player information including the acquired player ID from the player information table, and writes the acquired player information into the related information buffer 110d.

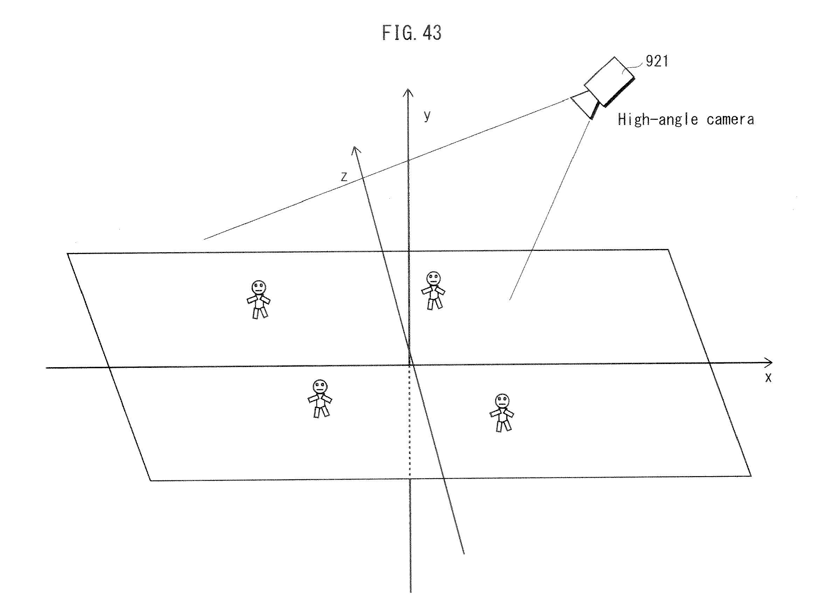

The information acquiring unit 108d also performs inverse processing of perspective projection conversion by using the 2D image captured from a high angle by the high-angle camera 921 as illustrated in FIG. 43 and the camera information including a position, an angle, a direction, and a zoom level of the high-angle camera 921 to specify 3D coordinate positions indicating a position of each player in a 3D real space. The accuracy of the specification of the position increases when the position is specified from an average value or under majority rule by using images captured from different angles, such as four angles, by a plurality of high-angle cameras.

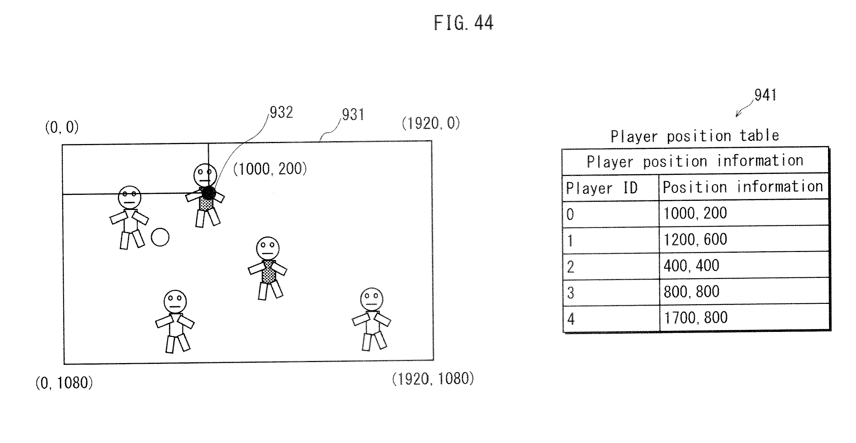

The information acquiring unit 108d acquires the camera information including a position, an angle, a direction, and a zoom level of a broadcast camera. The information acquiring unit 108d then performs perspective projection conversion on 3D coordinate positions indicating the position of the player to specify the position of the player image in the video plane 931 captured by the broadcast camera, as illustrated in FIG. 44. In the video plane 931, a player image 932 and other player images are displayed. In the video plane 931, the position of the player image 932 is indicated by coordinates (1000, 200), for example. Here, (x, y) indicates x and y coordinates in the video plane. The information acquiring unit 108d specifies positions of all the player images included in the video plane.

The information acquiring unit 108d generates a player position table 941 shown in FIG 44 as an example of the player position table. The player information table 941 includes a plurality of player position information pieces. The plurality of player position information pieces corresponding to the respective player images included in the video plane 931. Each of the player position information pieces includes a player ID and a position information piece. The player ID is an identification number for identifying a player represented by a corresponding player image. The position information shows a position of the player image in the video plane 931. The position information includes x and y coordinates. The information acquiring unit 108d writes the player position table 941 into the game information buffer 109d.

In order to acquire the position information indicating a position of each player, the player may wear a wireless transmitter with a GPS function, and the position information may be specified from GPS information. The wireless transmitter may be embedded in uniforms, shoes, or the like.

A referee or a ball may be provided with a wide-range wireless transmitter for transmitting information to a wide area, and each player may wear a narrow-range wireless transmitter for transmitting information to a narrow area. Information on each player may be collected by the wide-range wireless transmitter provided for the referee or the ball, and the collected information may be transmitted to a wide area.

If it is difficult to calculate the position of each player for each frame, the position of each player may be calculated for each frame from positions of each player acquired in seconds by using an interpolation method, such as linear interpolation.

### (5) Superimposition Data Generating Unit 111d

The superimposition data generating unit 111d reads the player position table 941 from the game information buffer 109d. The superimposition data generating unit 111d also reads the player information table from the related information buffer 110d.

The superimposition data generating unit 111d then reads the player ID and the position information from the player position table 941, and reads the name corresponding to the read player ID from the player information table. The superimposition data generating unit 111d then associates the read player ID, name, and position information with one another, and writes the associated information into superimposition data 961 as label position information. Reading of the name and writing of the player ID, name, and position information piece are repeated for each player position information piece included in the player position table 941.

The superimposition data generating unit 111d then converts a position of each player image, which is indicated by the position information included in the superimposition data 961, into position information indicating a position of a label image by moving the position of the player image left and right, up and down. The placement position of the label image is determined so that the following requirements (a), (b), and (c) are met.
(a) The label image does not overlap any of the player images.
(b) The label image does not overlap a ball image.
(c) The label image is located close to a player image of a player indicated by a name represented by the label image.

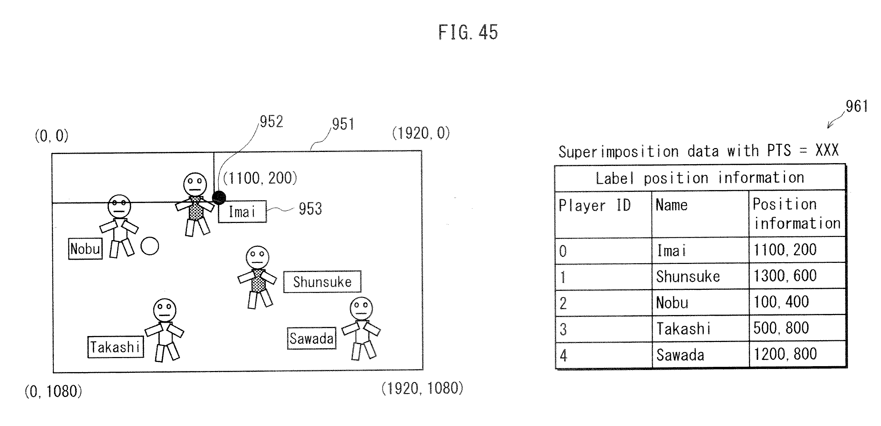

FIG. 45 shows an example of the superimposition data 961 thus generated.

As shown in FIG. 45, the superimposition data 961 includes a plurality of label position information pieces. The plurality of label position information pieces correspond to the respective label images displayed in the video plane 951. Each of the label position information pieces includes a player ID, a name, and a position information piece. The player ID is an identification number for identifying a player represented by a corresponding player image. The name is a name of the player The position information shows a position of an upper left point of the label image in the video plane 951. The position information includes x and y coordinates.

The superimposition data generating unit 111d assigns a PTS to the superimposition data 961 so that the superimposition data 961 is in synchronization with the video plane to be broadcast.

The superimposition data generating unit 111d writes the superimposition data 961 into the superimposition data buffer 112d.

### 5.2 Playback Apparatus 400d

As illustrated in FIG. 41, the playback apparatus 400d includes a tuner 401d, a broadcast stream decoding unit 402d, a broadcast data buffer 403d, a combining unit 407d, a displaying unit 408d, an NIC 409d, a superimposing unit 410d, and a superimposition plane buffer 411d. An antenna 420d is connected to the tuner 401 d.

The playback apparatus 400d has a similar structure to the playback apparatus 400a. The antenna 420d, the tuner 401d, the broadcast data buffer 403d, the displaying unit 408d, and the NIC 409d have similar structures to the antenna 420a, the tuner 401a, the broadcast data buffer 403a, the displaying unit 408a, and the NIC 409a included in the playback apparatus 400a, respectively. The description of these units is thus omitted.

Differences from the playback apparatus 400a are mainly described below.

### (1) Broadcast Stream Decoding Unit 402d

The broadcast stream decoding unit 402d receives the broadcast stream from the tuner 401d. The broadcast stream decoding unit 402d then decodes the broadcast stream at a timing shown by the PTS to separate a video plane, and writes the video plane into the broadcast data buffer 403d.

### (2) Superimposing Unit 410d

The superimposing unit 410d receives a superimposition data table from the broadcasting system 100d via an internet 20d and the NIC 409d. The superimposing unit 410d then generates the superimposition plane by using the received superimposition data table as described below, and writes the generated superimposition plane into the superimposition plane buffer 411d at a timing shown by the PTS.

In the case of the superimposition data 961 shown in FIG. 45, the superimposing unit 410d converts a name included in each label position information piece included in the superimposition data 961 into a raster image (bitmap) by using a font file. The label image is thus generated. The superimposing unit 410d then renders, in the superimposition plane, the label image at a position indicated by the position information included in the superimposition data.

### (3) Combining Unit 407d

The combining unit 407d reads the video plane from the broadcast data buffer 403d, and reads the superimposition plane from the superimposition plane buffer 411d. The combining unit 407d then combines the video plane and the superimposition plane at a timing shown by the PTS to generate a composite plane, and outputs the composite plane to the displaying unit 408d.

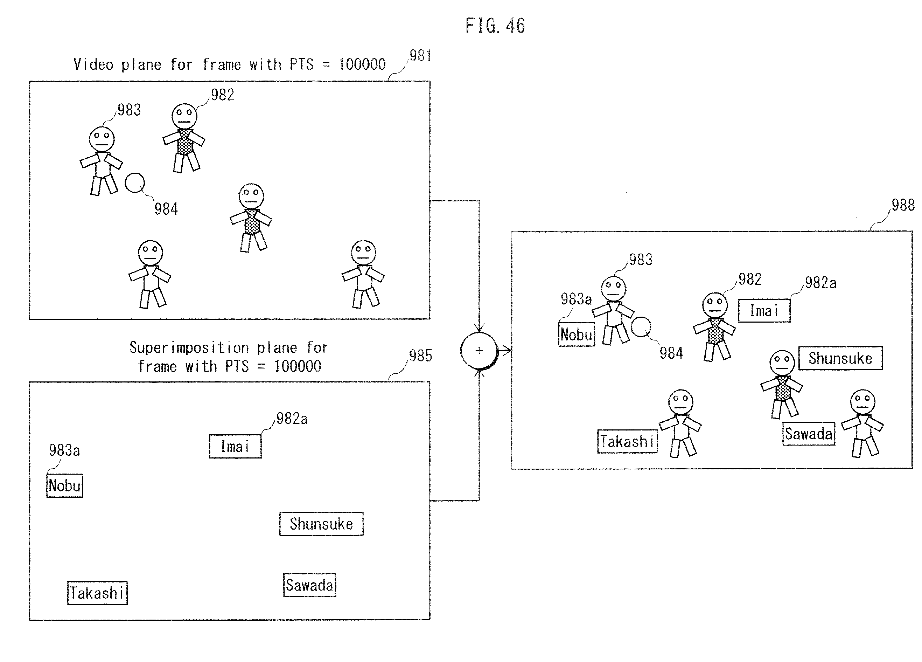

FIG. 46 illustrates an example of the processing to combine the video plane and the superimposition plane. FIG. 46 illustrates a video plane 981 of a frame with the PTS of 100000, and a superimposition plane 785 with the PTS of 100000. The video plane 981 includes a ball image 984, and player images 982, 983,... . The superimposition plane 985 includes label images 982a, 983a, ....

The combining unit 407d combines the video plane 981 and the superimposition plane 985 to generate a composite plane 988. In the composite plane 988, the ball image 984, the player image 982 and the label image 982a, the player image 983 and the label image 983a, ... are displayed. The label image 982a is displayed close to the player image 982, and the label image 983a is displayed close to the player image 983.

### 5.3 Operation of Broadcasting-communications Collaboration System 10d

The following describes operations of the broadcasting system 100d and the playback apparatus 400d included in the broadcasting-communications collaboration system 10d.

### (1) Operation of Broadcasting System 100d

The operation of the broadcasting system 100d is similar to that of the broadcasting system 100a shown in FIG. 20.

The processing to edit the broadcast video data shown in step S111 of FIG. 20 does not exist in the operation of the broadcasting system 100d. Furthermore, instead of generating the superimposition region setting data in step S112 of FIG. 20, the superimposition data is generated in the operation of the broadcasting system 100d.

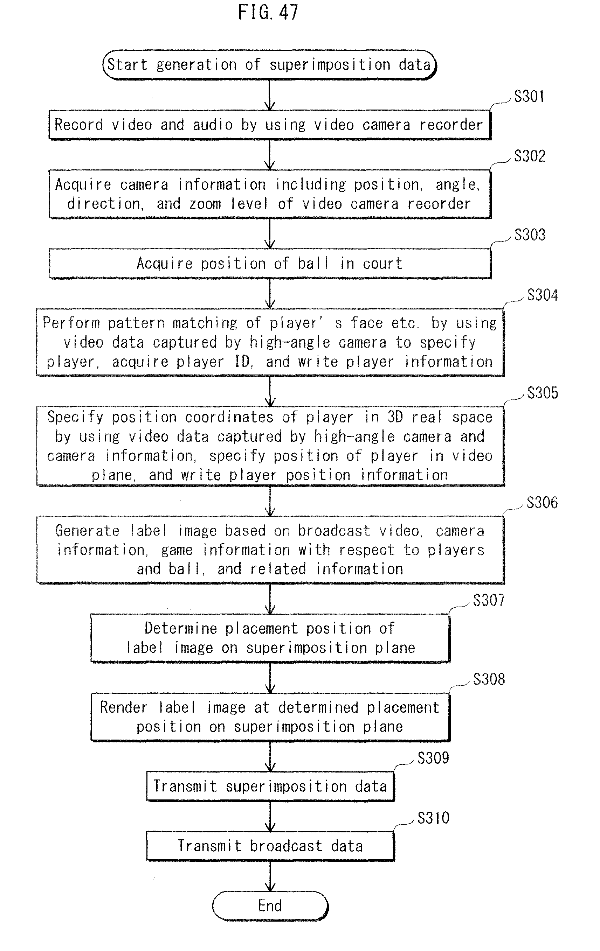

The operation to generate the superimposition data is described in detail with use of a flow chart shown in FIG. 47.

The broadcast video capturing unit 101d records a video and an audio by using a video camera recorder (step S301).

The information acquiring unit 108d acquires camera information including a position, an angle, a direction, and a zoom level of the video camera recorder (step S302). The information acquiring unit 108 then acquires a position of a ball in the court (step S303). The information acquiring unit 108 then performs pattern matching of the faces of players and the like by using the video data captured by the high-angle camera to specify the players. The information acquiring unit 108 acquires a player ID and then player information corresponding to each of the specified players, and writes the player information (step S304). The information acquiring unit 108 then specifies coordinate positions of each player in a 3D real space by using the video data captured by the high-angle camera and the camera information of the high-angle camera. The information acquiring unit 108 specifies a position of each player in the video plane, and writes the player position information (step S305).

The superimposition data generating unit 111d generates a label image based on a broadcast video, the camera information, game information with respect to players and a ball, and related information (step S306). The superimposition data generating unit 111d then determines a placement position, on the superimposition plane, of the label image (step S307). The superimposition data generating unit 111d then renders the label image at the determined placement position on the superimposition plane (step S308).

The transmitting unit 113d transmits the superimposition data (step S309).

The transmitting unit 106d transmits the broadcast data (step S310).

### (2) Operation of Playback Apparatus 400d

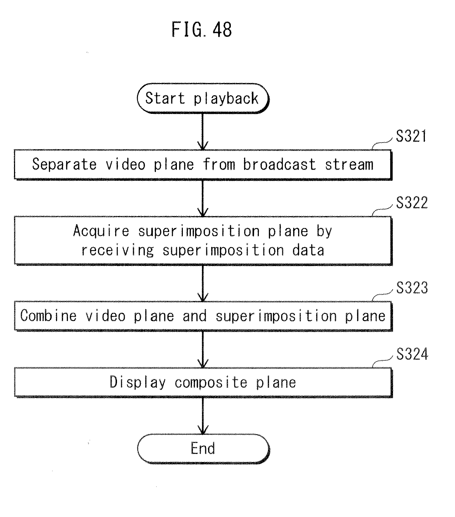

The operation of the playback apparatus 400d is described with use of a flow chart shown in FIG. 48.

The broadcast stream decoding unit 402d separates the video plane from the broadcast stream (step S321).

The superimposing unit 410d acquires the superimposition plane by receiving the superimposition data (step S322).

The combining unit 407d combines the video plane and the superimposition plane to generate a composite plane (step S323).

The displaying unit 408d displays the composite plane (step S324).

### 5.4 Summary

As set forth above, when a service to superimpose additional information on a broadcast video is provided, the additional information is placed so as to follow a player image moving in the video, for example, in sports broadcasting, such as a soccer game live.

### 5.5 Modifications

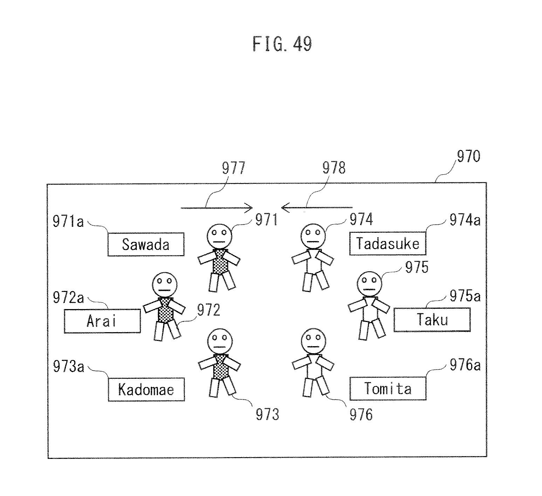

(1) When label images are placed on the video plane, label images are less likely to overlap each other in a case where placement positions of the label images are determined for each team so as to be opposite an offense direction (a direction toward the opposing team's goal) of the team as illustrated in FIG. 49.

The superimposition data generating unit 111d converts a position of each player image, which is indicated by the position information included in the superimposition data 961, into position information indicating a position of the label image by moving the position of the player image left and right, up and down. In this case, in addition to the above-mentioned requirements (a), (b), and (c), the placement position of the label image is determined so that the following requirements (d) and (e) are further met.
(d) Label images for player images representing players belonging to the same team are placed so as to be on common sides of the respective player images.
(e) Label images for player images representing players belonging to the same team are placed opposite an offense direction of the team.

As illustrated in FIG. 49, players represented by player images 971, 972, and 973 belong to a team 1. On the other hand, players represented by player images 974, 975, and 976 belong to a team 2. The offence direction of the team 1 is a direction 977. The offense direction of the team 2 is a direction 978.

The superimposition data generating unit 111d acquires, from the player information table stored in the related information buffer 110d, a team ID identifying a team to which players belong. The superimposition data generating unit 111d also acquires, from the game information table stored in the related information buffer 110d, a direction toward a goal of each team.

The superimposition data generating unit 111d determines a team to which each player belongs by using a team ID acquired from the player information table. The superimposition data generating unit 111d also determines the offense direction of each team by using the acquired direction toward a goal of each team.

The superimposition data generating unit 111d therefore places label images 971a, 972a, and 973a so as to be on common sides of the respective player images 971, 972, and 973. In the example shown in FIG. 49, the label images 971a, 972a, and 973a are placed on the left sides of the respective player images 971, 972, and 973.

Since the offense direction of the team 1 is the direction 977, the superimposition data generating unit 111d places the label images on the left sides of the respective player images so as to be opposite the direction 977.

The superimposition data generating unit 111d also places label images 974a, 975a, and 976a so as to be on common sides of the respective player images 974, 975, and 976. In the example shown in FIG. 49, the label images 974a, 975a, and 976a are placed on the right sides of the respective player images 974, 975, and 976.

Since the offense direction of the team 2 is the direction 978, the superimposition data generating unit 111d places the label images on the right sides of the respective player images so as to be opposite the direction 978.

(2) When placing label images on the video plane, the superimposition data generating unit 111d may place the label images so as to be opposite a vector from a position of each player image toward the ball image. In this way, it is possible to prevent each of the label images and the ball image from overlapping each other.

As illustrated in FIG. 42, in the video plane 901, the label image 902a is placed so as to be opposite a vector from a position of the player image 902 toward a position of the ball image 905, for example. The same applies to the label image 903a.

However, this method is not applied to a label image 906a. If the label image is placed so as to be opposite a vector from a position of a player image 906 toward the position of the ball image 905, the label image disappears from the video plane 701. Therefore, in this case, the superimposition data generating unit 111d places the label image 906a so as not to be opposite the vector from the position of the player image 906 toward the position of the ball image 905 without applying this method.

(3) In the broadcasting-communications collaboration system 10d, the superimposing unit 410d included in the playback apparatus 400d receives the superimposition data via the network, and outputs the superimposition plane to the superimposition plane buffer 411d based on the superimposition data. The structure of the system, however, is not limited to the above. The system may have the following structure.

In a case where delays in the transmission of the superimposition data are caused by a trouble in network communications and other factors, the following problem occurs. If the video plane received by broadcast is combined with the superimposition plane generated based on the superimposition data received via the network behind time, the label images might not be placed close to the corresponding player images and might be placed close to the other player images or at positions where no player image exists.

In order to address the problem, in the case where delays in the transmission of the superimposition data are caused by a trouble in network communications, motion vectors may be stored when broadcast videos are decoded. Then, panning motion of a camera may be estimated based on the motion vectors, and the superimposition plane may be generated by moving the label images according to the estimated motion.

As a result, a sense of awkwardness on a display screen can be reduced.

(4) Suppose that the label images are not displayed in a case where the superimposition data cannot be acquired by a trouble in network communications or other causes. In this case, depending on whether the superimposition data can be acquired or not, there are moments at which the label images are displayed or not. This can be realized as flickering of the label images.

In this case, only when a time period during which the superimposition data cannot be acquired exceeds a certain time period, display of the label images may be controlled by using fade-in or fade-out technology. In other words, the label images may be controlled to gradually appear or disappear.

As a result, it is possible to provide users with eye-friendly videos.

(5) In the broadcasting-communications collaboration system 10d, the superimposing unit 410d generates images based on the superimposition data as text information. The structure of the system, however, is not limited to the above.

The superimposition data may not be text data, and image files in JPG, PNG, or other format may be set as the superimposition data.

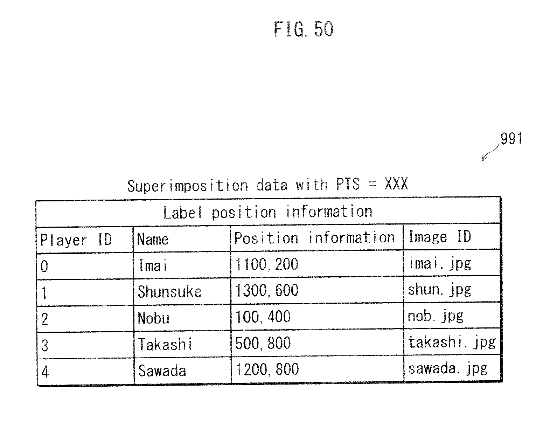

As shown in FIG. 50, for example, a superimposition data 991 includes a plurality of label position information pieces. Each of the label position information pieces includes a player ID, a name, a position information piece, and an image ID. The image ID is an identifier for identifying an image file in JPG, PNG, or other format. The image file includes an image representing a name of a corresponding player. In place of the name of the corresponding player, the image file may include a photograph of the corresponding player's face.

In this case, the broadcasting system 100d may transmit the image file to the playback apparatus 400d in advance, so that the playback apparatus 400d holds the image file. This can reduce network loads.

(6) In the broadcasting-communications collaboration system 10d, the superimposing unit 410d included in the playback apparatus 400d receives the superimposition data via the network, and outputs a video to the superimposition plane based on the superimposition data. The structure of the system, however, is not limited to the above. The system may have the following structure.

The superimposition data may be transmitted by broadcast. For example, the superimposition data may be transmitted by supplementary data of the video stream, a stream identified by a separate PID, a descriptor of a system packet, and the like. In this case, position information of label images is transmitted for each video frame. Carousel transmission, in which transmission of image files in JPG, PNG, or other format is repeated at a constant frequency as in data broadcasting, may be performed.

(7) In the video plane, for a player image that is the closest to the ball image, a label image larger than the other label images may be placed.

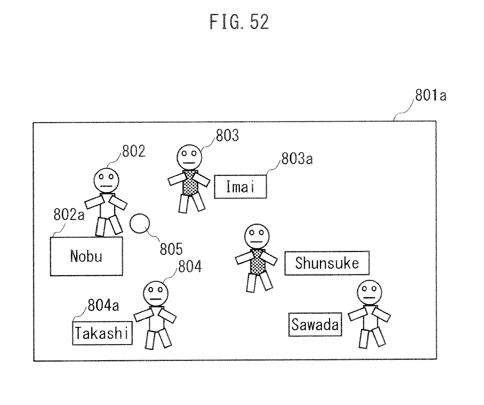

As illustrated in FIG. 52, in the composite plane 801a, the player image 802 is the closest to the ball image 805 of all the other player images 803, 804, ..., for example. In this case, a label image 802a larger than the other label images may be placed for the player image 802.

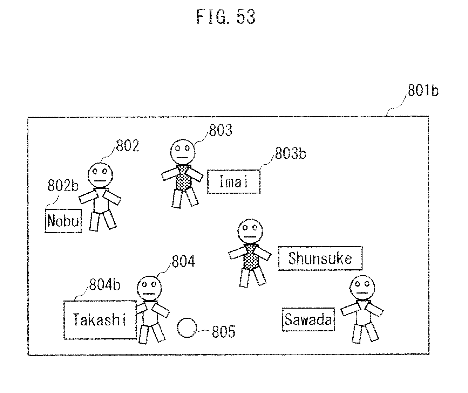

As another example, as illustrated in FIG. 53, in a composite plane 801b, the player image 804 is the closest to the ball image 805 of all the other player images 802, 803, ... . In this case, a label image 804a larger than the other label images may be placed for the player image 804.

A player image (primary object) displayed so as to be the closest to the ball image (core object) is also referred to as an attention object.

In this case, the broadcasting system 100d further includes, in the superimposition data, position information indicating a position of the ball image in the video plane and position information indicating a position of each player image in the video plane. The broadcasting system 100d then transmits the superimposition data including the position information indicating the position of the ball image and position information indicating the position of each player image. That is to say, similar to the position information of each label image, the broadcasting system 100d includes the position information of each player image and the position information of the ball image in the superimposition data as position information in the broadcast video and transmits the position information.

Similar to the acquisition of the position of each player image, the information acquiring unit 108d performs pattern matching to acquire, from a video captured from a high angle, the position information indicating the position of the ball image, based on a shape, a color, and the like of the ball. Alternatively, a wireless transmitter with a GPS function may be embedded in the ball, and the wireless transmitter may acquire the position information on the ball using the GPS and transmit the acquired position information by radio waves.

The superimposing unit 410d calculates distances between each of positions of all the player images in the video plane and a position of the ball image, by using the position information indicating the positions of the player images included in the superimposition data and the position information indicating the position of the ball image. For a player image corresponding to the shortest distance of all the calculated distances, a label image larger than the other label images is superimposed.

In this way, since an attention player (attention object) is emphasized, viewers can understand a broadcast video more easily. Real 3D coordinates in the broadcast video is more useful than 2D coordinates to accurately measure a distance between each player and a ball from the position information of each player image and the position information of the ball image.

(8) In addition to representative position information of each player, the broadcasting system 100d may transmit position information of nodes (e.g. head, neck, waist, left shoulder, left hand, left knee, left ankle, right shoulder, right hand, right knee, right ankle) of the player to represent the skeleton of the player. Based on the position information of the nodes of the player to represent the skeleton of the player, the playback apparatus 400d may determine the position of each label image so that the player images and the label images do not overlap each other.

With the position information of the skeleton of the player, it is possible to apply such special effects that a player raising his/her hand is lighted up and the foot of a player kicking the ball is lighted up.
(9) By performing language analysis on commentary or using subtitle information such as closed captioning, a name of a player mentioned by a commentator may be specified. A label image representing the specified player may be enlarged and lighted up. In this way, viewers can realize an attention player (attention object) more easily.

(10) Information indicating a position where each player plays may be stored in the superimposition data as player information, and a color of a label image may be changed for each position. With this structure, viewers can understand a game strategy more easily.

(11) After 3D model labels are placed at coordinate positions of respective players in a 3D real space, perspective projection conversion on the 3D model labels may be performed by using the camera information including a position, a direction, and a zoom level of a broadcast camera, rendering may be performed, and then the generated images may be superimposed as the label images. With this structure, it is possible to produce a video in which 3D labels are displayed as if they were in the court.

(12) In the broadcasting-communications collaboration system 10d, the following describes methods for effectively reflecting users' intentions when label images are superimposed to follow the positions of respective player images moving in the video.

(a) By preparing the superimposition data in a plurality of languages, it is possible to select one of the languages depending on viewers' preferences.

For example, the broadcasting system 100d includes names of each player written in Japanese, English, German, Spanish, and Portuguese in the superimposition data. The broadcasting system 100d transmits the superimposition data. The playback apparatus 400d receives the superimposition data including the names of each player written in these languages. The playback apparatus 400d receives an input of a viewer's preference for a language. The playback apparatus 400d generates the superimposition plane so that the superimposition plane only includes names of players written in a language specified by the received preference, combines the video plane and the superimposition plane to generate a composite plane and outputs the composite plane.

(b) The broadcasting system 100d includes a name, a family name, a nickname, a team ID, a uniform number, and the like of each player in the superimposition data. The broadcasting system 100d transmits the superimposition data.

The playback apparatus 400d receives an input of a type of data to be displayed on the label images from a viewer. Examples of the type of data are a name, a family name, a nickname, and a uniform number of a player. The playback apparatus 400d generates the label images according to the received type of data, generates a superimposition plane including the generated label images, combines the video plane and the superimposition plane to generate a composite plane, and outputs the composite plane. For example, when a name of a player is received from a viewer as the type of data, names of players are displayed on the respective label images. Similarly, when a family name, a nick name, and a uniform number are received, family names, nick names, and uniform numbers are displayed on the respective label images, respectively.

In this way, a viewer can specify an item to be displayed on each label image.

(c) The broadcasting system 100d includes a name, a family name, a nickname, a team ID, a uniform number, and the like of each player in the superimposition data. The broadcasting system 100d transmits the superimposition data.

The playback apparatus 400d receives an input of a category of an item to be displayed on each of the label images and identification information thereof from a viewer.

For example, the playback apparatus 400d receives "team ID" as the category, and receives "0105" as the team ID. The playback apparatus 400d generates label images including names for only label position information pieces including the team ID "0105" in the superimposition data, and displays the generated label images.

For example, the playback apparatus 400d receives "uniform number" as the category, and receives "51" as the uniform number. The playback apparatus 400d generates label images including names for only label position information pieces including the uniform number "51" in the superimposition data, and displays the generated label images.

In this way, a viewer can superimpose a label image only for players belonging to a specific team, or a player wearing a specific uniform number.

(13) In a case where a video is viewed by a terminal provided with a touch panel, a contact location may be specified by the touch panel, and, when a position of any player image included in the superimposition data and the contact location overlap each other, a label image may be displayed only for the player. A label image may be enlarged or highlighted only for the player. A label image including a name, a uniform number, a team name, and past performance may be generated only for the player to display information about the player in detail.

(14) A size of a label image to be superimposed for a player image may be changed depending on a size (the number of inches) of a display screen of a TV. The size of a label image is increased, as the number of inches increases.

A ratio of the width to the height of a label image may be determined depending on an aspect ratio of the display screen.

A vertical size of a label image may be set to a fixed value, and a horizontal size of the label image may be changed depending on the number of pixels horizontally arranged on the display screen. Alternatively, a horizontal size of a label image may be set to a fixed value, and a vertical size of the label image may be changed depending on the number of pixels vertically arranged on the display screen.

(15) In the broadcasting-communications collaboration system 10d, the superimposition data is transmitted via the network, and the superimposing unit 410d included in the playback apparatus 400d generates the superimposition plane based on the superimposition data, and combines the superimposition plane and the video plane. The structure of the system, however, is not limited to the above. The system may have the following structure.

(a) The broadcasting system 100d may generate the video stream for superimposition from the superimposition data and multiplex the video stream for superimposition and the video stream for broadcasting to generate the broadcast stream to be broadcast.

For example, as illustrated in FIG. 52, the broadcasting system 100d performs compression encoding on the composite plane 801a in a video codec such as MPEG-2 and MPEG-4 AVC to generate the video stream. In the composite plane 801a, the label images 802a, 803a, 804a, ... are respectively placed to follow the player images 802, 803, 804, ... . A background color of the composite plane 801a is monochrome such as black.

The superimposing unit 410d included in the playback apparatus 400d decodes the video stream, and then writes the results of decoding into the superimposition plane such that background pixels are transparent.

With this structure, generation of graphics in the playback apparatus 400d is no longer needed, thereby facilitating the processing performed by the playback apparatus 400d.

(b) As the video stream for superimposition, both the video stream for superimposition and a video stream to which transmittance is set may be prepared.

A frame designed such that label images are placed to follow positions of respective player images against a monochrome background is compression-encoded in a video codec such as MPEG-2 and MPEG-4 AVC to generate a color information video stream.

On the other hand, a transmittance video stream obtained by encoding only transmittance is prepared.

The superimposing unit 410d included in the playback apparatus 400d decodes the color information video stream, and then decodes the transmittance video stream. Transmittance obtained as a result of the decoding of the transmittance video stream is set to the results of the decoding of the color information video stream, and written into the superimposition plane. With this structure, generation of graphics in the playback apparatus 400d is no longer needed, thereby facilitating the processing performed by the playback apparatus 400d. The resolution of each of the color information video stream and the transmittance video stream may be halved so that the color information video stream and the transmittance video stream are arranged side-by-side.

(c) The video stream for superimposition may be a video stream in compression encoding using inter-view referencing.

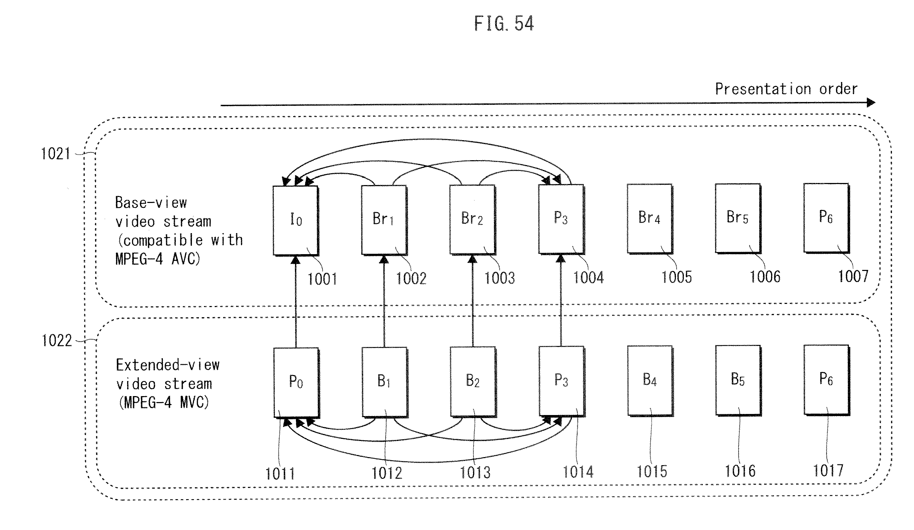

As a standard for the compression encoding using inter-view referencing, there is a revised MPEG-4 AVC/H.264 standard referred to as MPEG-4 MVC (Multiview Video Coding). FIG 54 illustrates encoding with MPEG-4 MVC. MPEG-4 MVC provides for a base view 1021 that can be played back by conventional devices and an extended view 1022 that, when processed simultaneously with the base view 1021, allows for playback of images from a different perspective. In the base view 1021, pictures are compressed with the inter-picture predictive encoding that only uses temporal redundancy, as shown in FIG. 54. The base view 1021 includes pictures 1001, 1002, ..., 1007, .... On the other hand, in the extended view 1022, pictures are compressed not only with the inter-picture predictive encoding that uses temporal redundancy, but also with the inter-picture predictive encoding that uses redundancy between perspectives. The extended view 1022 includes pictures 1011, 1012, ..., 1017, ... . Pictures in the extended-view video stream are compressed by referring to pictures in the base-view video stream with the same presentation time. The arrows in FIG. 54 show reference relationships. The top P picture 1011 in the extended-view video stream refers to the I picture 1001 in the base-view video stream. The B picture 1012 in the extended-view video stream refers to the Br picture 1002 in the base-view video stream. The second P picture 1014 in the extended-view video stream refers to the P picture 1004 in the base-view video stream. Since the base-view video stream does not refer to the extended-view video stream, the base-view video stream can be played back alone. On the other hand, the extended-view video stream refers to the base-view video stream, and therefore the extended-view video stream cannot be played back alone. Since the same object is viewed from left and right points of view, however, the two streams are highly correlated with each other. The amount of data in the extended-view video stream can thus be greatly reduced as compared to the base-view video stream by performing the inter-picture predictive encoding between perspectives. In this way, MVC is a standard for encoding video images from multiple perspectives. By basing predictive encoding on not only temporal similarity between video images but also similarly between perspectives, compression efficiency is improved as compared to compression in which multiple perspectives are independent of each other. Using this correlation between perspectives to refer to pictures in a different view is referred to as "inter-view reference".

Here, the broadcast video and the video after superimposition are respectively encoded as the base view and the extended view. By doing so, the video stream obtained by encoding the video after superimposition as the extended view corresponds to the base-view video stream except for the label images, providing effects of the inter-view reference. The bit rate can be reduced in the video stream obtained by encoding the video after superimposition as the extended view. The playback apparatus 400d achieves video superimposition by decoding the video stream after superimposition as the extended view along with the base view, and presenting only the extended view.

### 6 Other Modifications

While the present invention has been described according to the above embodiments, the present invention is in no way limited to these embodiments. The present invention also includes cases such as the following.
(1) One aspect of the present invention is a playback apparatus that decodes a video stream multiplexed into an AV stream and superimposes additional data. The AV stream includes information on a superimposition-prohibited region corresponding to the video stream. The information on the superimposition-prohibited region defines a region, on a frame of the video stream, in which superimposition of additional data is prohibited. The playback apparatus writes the results of the decoding of the video stream into a plane buffer 1, and writes the additional data into a plane buffer 2. The playback apparatus changes the prohibited region on the plane buffer 2 to be transparent based on the information on the superimposition-prohibited region, and superimposes the plane buffer 2 on the plane buffer 1.
(2) The playback apparatus, as one example of the present invention, for playing back video contents provided by broadcast and communications provides users with new entertainment by superimposing additional information on contents of TV broadcast videos. In addition, the playback apparatus ensures that important information on a television broadcast, such as an emergency broadcast message and a commercial, is accurately provided for users without destroying the information. Therefore, the video stream as one example of the present invention, an encoding method, an encoding apparatus, a playback method, and a playback apparatus thereof are highly available in a video distribution industry, such as a TV broadcasting industry, and in a consumer electronics industry.
(3) Each of the above-mentioned apparatuses is specifically a computer system including a microprocessor, ROM, RAM, and a hard disk unit. A computer program is stored in the RAM and the hard disk unit. The computer program includes a combination of a plurality of instruction codes each instructing a computer to achieve a predetermined function. By the microprocessor operating according to the computer program, each of the apparatuses achieves its function. That is to say, the microprocessor reads instructions included in the computer program one at a time, decodes the read instructions, and operates according to the results of the decoding.
   By the microprocessor operating according to the instructions included in the computer program stored in the RAM or the hard disk unit, it appears that the computer program and the microprocessor constitute a single hardware circuit and the hardware circuit operates.
(4) A part or all of the components constituting each of the above-mentioned apparatuses may be composed of a single system LSI (Large Scale Integration.) The system LSI is a super-multifunctional LSI manufactured by integrating a plurality of components on a single chip, and is specifically a computer system including a microprocessor, ROM, and RAM. A computer program is stored in the RAM. By the microprocessor operating according to the computer program, the system LSI achieves its function.

Each of the components constituting each of the above-mentioned apparatuses may be configured as a single chip, or part or all thereof may be configured as a single chip.

The LSI includes a plurality of circuit blocks.

A method of integration is not limited to LSI, and a dedicated circuit or a general-purpose processor may be used. A FPGA (Field Programmable Gate Array), which is LSI that can be programmed after manufacture, or a reconfigurable processor, which is LSI whose connections between internal circuit cells and settings for each circuit cell can be reconfigured, may be used.

Additionally, if technology for integrated circuits that replaces LSI emerges, owing to advances in semiconductor technology or to another derivative technology, the integration of functional blocks may naturally be accomplished using such technology.

(5) A part or all of the components constituting each of the above-mentioned apparatuses may be constructed from an IC card or a single module attachable/detachable to and from each apparatus. The IC card and the module are each a computer system including a microprocessor, ROM, and RAM. The IC card and the module each may include the above-mentioned super-multifunctional LSI. By the microprocessor operating according to the computer program, the IC card and the module each achieve its functions. The IC card and the module each may be tamper resistant.

(6) The present invention may be a control method for controlling the above-mentioned apparatuses. The present invention may also be a computer program that causes a computer to achieve the control method, or may be a digital signal including the computer program.

The present invention may also be a computer-readable recording medium, such as a flexible disk, a hard disk, a CD-ROM, an MO, a DVD, DVD-ROM, DVD-RAM, a BD and semiconductor memory, having been recorded thereon the computer program or the digital signal. The present invention may be the computer program or the digital signal recorded on any of these recording media.

The present invention may also be implemented by transmitting the computer program or the digital signal via an electric communication line, a wireless or a wired communication line, a network represented by the internet, a data broadcast and the like.

The present invention may also be a computer system including a microprocessor and memory storing therein the computer program. The microprocessor may operate according to the computer program.

Another independent computer system may implement the present invention by transferring the recording medium recorded thereon the computer program or the digital signal, or by transferring the computer program or the digital signal via the network and the like.

(7) The above-mentioned embodiments and modifications may be combined with one another.

### [Industrial Applicability]

The broadcasting-communications collaboration system according to the present invention is useful as technology to provide a new service to combine broadcasting and communications.

### [Reference Signs List]

- 10: broadcasting-communications collaboration system
- 10a: broadcasting-communications collaboration system
- 10b: broadcasting-communications collaboration system
- 10c: broadcasting-communications collaboration system
- 10d: broadcasting-communications collaboration system
- 100: data generating apparatus
- 100a: broadcasting system
- 100b: broadcasting system
- 100d: broadcasting system
- 300a: communication service providing system
- 300b: communication service providing system
- 300c: data generating apparatus
- 400: receiving apparatus
- 400a: playback apparatus
- 400b: playback apparatus
- 400c: receiving apparatus
- 400d: playback apparatus

## Claims

1. A data generating apparatus for generating data, comprising:
an acquiring unit configured to acquire a frame image;
a setting unit configured to set prohibition information showing a region on the frame image in which superimposition of an additional image is prohibited, the prohibition information being used when a playback apparatus superimposes the additional image on the frame image for playback; and
a multiplexing unit configured to multiplex the frame image and the prohibition information to generate data.

2. The data generating apparatus of Claim 1, transmitting the frame image through a channel, wherein
the additional image is transmitted through a channel different from the channel through which the frame image is transmitted.

3. The data generating apparatus of Claim 2, wherein
the channel through which the frame image is transmitted is a broadcast channel, and
the channel through which the additional image is transmitted is a communication channel.

4. The data generating apparatus of Claim 1, wherein
the setting unit further sets permission information showing a region on the frame image in which the superimposition of the additional image is permitted, the permission information being used when the playback apparatus superimposes the additional image on the frame image for playback, and
the multiplexing unit further multiplexes the permission information.

5. The data generating apparatus of Claim 4, wherein
the setting unit further sets recommendation information showing a region on the frame image in which the superimposition of the additional image is recommended, the recommendation information being used when the playback apparatus superimposes the additional image on the frame image for playback, and
the multiplexing unit further multiplexes the recommendation information.

6. The data generating apparatus of Claim 4, wherein
the setting unit further sets warning information showing a region on the frame image in which the superimposition of the additional image is discouraged, the warning information being used when the playback apparatus superimposes the additional image on the frame image for playback, and
the multiplexing unit further multiplexes the warning information.

7. The data generating apparatus of Claim 4, wherein
each of the prohibition information and the permission information is set for each pixel within the frame image.

8. The data generating apparatus of Claim 4, wherein
each of the prohibition information and the permission information is set for each region obtained by dividing the frame image into a plurality of regions.

9. A data generating apparatus for generating data, comprising:
an acquiring unit configured to acquire a primary audio;
a setting unit configured to set prohibition information showing a section of the primary audio in which combining of an additional audio is prohibited, the prohibition information being used when a playback apparatus combines the additional audio with the primary audio for playback; and
a multiplexing unit configured to multiplex the primary audio and the prohibition information to generate data.

10. The data generating apparatus of Claim 9, transmitting the primary audio through a channel, wherein
the additional audio is transmitted through a channel different from the channel through which the primary audio is transmitted.

11. The data generating apparatus of Claim 10, wherein
the channel through which the primary audio is transmitted is a broadcast channel, and
the channel through which the additional audio is transmitted is a communication channel.

12. The data generating apparatus of Claim 9, wherein
the setting unit further sets permission information showing a section of the primary audio in which the combining of the additional audio is permitted, the permission information being used when the playback apparatus combines the additional audio with the primary audio for playback, and
the multiplexing unit further multiplexes the permission information.

13. The data generating apparatus of Claim 12, wherein
the setting unit further sets recommendation information showing a section of the primary audio in which the combining of the additional audio is recommended, the recommendation information being used when the playback apparatus combines the additional audio with the primary audio for playback, and
the multiplexing unit further multiplexes the recommendation information.

14. The data generating apparatus of Claim 12, wherein
the setting unit further sets warning information showing a section of the primary audio in which the combining of the additional audio is discouraged, the warning information being used when the playback apparatus combines the additional audio with the primary audio for playback, and
the multiplexing unit further multiplexes the warning information.

15. A receiving apparatus for receiving data, comprising:
a receiving unit configured to receive data having been generated by multiplexing a frame image and prohibition information showing a region on the frame image in which superimposition of an additional image is prohibited when, for playback by a playback apparatus, the additional image is superimposed on the frame image;
a separating unit configured to separate the frame image and the prohibition information from the data;
an acquiring unit configured to acquire the additional image; and
a superimposing unit configured to superimpose the additional image on the frame image based on the prohibition information.

16. The receiving apparatus of Claim 15, wherein
the frame image and the additional image are received through different channels.

17. The receiving apparatus of Claim 16, wherein
the frame image is received through a broadcast channel, and
the additional image is received through a communication channel.

18. The receiving apparatus of Claim 15, wherein
the data has been generated by further multiplexing permission information showing a region on the frame image in which the superimposition of the additional image is permitted when, for playback by the playback apparatus, the additional image is superimposed on the frame image,
the separating unit further separates the permission information from the data, and
the superimposing unit superimposes the additional image on the frame image further based on the permission information.

19. The receiving apparatus of Claim 18, wherein
the data has been generated by further multiplexing recommendation information showing a region on the frame image in which the superimposition of the additional image is recommended when, for playback by the playback apparatus, the additional image is superimposed on the frame image,
the separating unit further separates the recommendation information from the data, and
the superimposing unit superimposes the additional image on the frame image further based on the recommendation information.

20. The receiving apparatus of Claim 18, wherein
the data has been generated by further multiplexing warning information showing a region on the frame image in which the superimposition of the additional image is discouraged when, for playback by the playback apparatus, the additional image is superimposed on the frame image, and
the separating unit further separates the warning information from the data, and
the superimposing unit superimposes the additional image on the frame image further based on the warning information.

21. The receiving apparatus of Claim 18, wherein
each of the prohibition information and the permission information is set for each pixel within the frame image, and
the superimposing unit superimposes the additional image for each pixel within the frame image.

22. The data generating apparatus of Claim 18, wherein
each of the prohibition information and the permission information is set for each region obtained by dividing the frame image into a plurality of regions, and
the superimposing unit superimposes the additional image for each of the plurality of regions.

23. A receiving apparatus for receiving data, comprising:
a receiving unit configured to receive data having been generated by multiplexing a primary audio and prohibition information showing a section of the primary audio in which combining of an additional audio is prohibited when, for playback by a playback apparatus, the additional audio is combined with the primary audio;
a separating unit configured to separate the primary audio and the prohibition information from the data;
an acquiring unit configured to acquire the additional audio; and
a combining unit configured to combine the additional audio with the primary audio based on the prohibition information.

24. The receiving apparatus of Claim 23, wherein
the primary audio and the additional audio are received through different channels.

25. The receiving apparatus of Claim 24, wherein
the primary audio is received through a broadcast channel, and
the additional audio is received through a communication channel.

26. The receiving apparatus of Claim 23, wherein
the data has been generated by further multiplexing permission information showing a section of the primary audio in which the combining of the additional audio is permitted when, for playback by the playback apparatus, the additional audio is combined with the primary audio,
the separating unit further separates the permission information from the data, and
the combining unit combines the additional audio with the primary audio further based on the permission information.

27. The receiving apparatus of Claim 26, wherein
the data has been generated by further multiplexing recommendation information showing a section of the primary audio in which the combining of the additional audio is recommended when, for playback by the playback apparatus, the additional audio is combined with the primary audio,
the separating unit further separates the recommendation information from the data, and
the combining unit combines the additional audio with the primary audio further based on the recommendation information.

28. The receiving apparatus of Claim 26, wherein
the data has been generated by further multiplexing warning information showing a section of the primary audio in which the combining of the additional audio is discouraged when, for playback by the playback apparatus, the additional audio is combined with the primary audio,
the separating unit further separates the warning information from the data, and
the combining unit combines the additional audio with the primary audio further based on the warning information.

29. A broadcasting-communications collaboration system including a data generating apparatus, a broadcasting apparatus, a service providing apparatus, and a receiving apparatus, wherein
the data generating apparatus comprises:
an acquiring unit configured to acquire a frame image;
a setting unit configured to set prohibition information showing a region on the frame image in which superimposition of an additional image is prohibited, the prohibition information being used when a playback apparatus superimposes the additional image on the frame image for playback; and
a multiplexing unit configured to multiplex the frame image and the prohibition information to generate data,
the broadcasting apparatus transmits the data through a broadcast channel,
the service providing apparatus transmits the additional image through a communication channel, and
the receiving apparatus comprises:
a receiving unit configured to receive data having been generated by multiplexing a frame image and prohibition information showing a region on the frame image in which superimposition of an additional image is prohibited when, for playback by a playback apparatus, the additional image is superimposed on the frame image;
a separating unit configured to separate the frame image and the prohibition information from the data;
an acquiring unit configured to acquire the additional image; and
a superimposing unit configured to superimpose the additional image on the frame image based on the prohibition information.

30. A broadcasting-communications collaboration system including a data generating apparatus, a broadcasting apparatus, a service providing apparatus, and a receiving apparatus, wherein
the data generating apparatus comprises:
an acquiring unit configured to acquire a primary audio;
a setting unit configured to set prohibition information showing a section of the primary audio in which combining of an additional audio is prohibited, the prohibition information being used when a playback apparatus combines the additional audio with the primary audio for playback; and
a multiplexing unit configured to multiplex the primary audio and the prohibition information to generate data,
the broadcasting apparatus transmits the data through a broadcast channel,
the service providing apparatus transmits the additional audio through a communication channel, and
the receiving apparatus comprises:
a receiving unit configured to receive data having been generated by multiplexing a primary audio and prohibition information showing a section of the primary audio in which combining of an additional audio is prohibited when, for playback by a playback apparatus, the additional audio is combined with the primary audio;
a separating unit configured to separate the primary audio and the prohibition information from the data;
an acquiring unit configured to acquire the additional audio; and
a combining unit configured to combine the additional audio with the primary audio based on the prohibition information.
